(19) Europäisches Patentamt
European Patent Office
Office européen des brevets

(11) **EP 3 948 389 B1**

(12) **EUROPÄISCHE PATENTSCHRIFT**

(45) Veröffentlichungstag und Bekanntmachung des Hinweises auf die Patenterteilung:
**05.06.2024 Patentblatt 2024/23**

(21) Anmeldenummer: **20714550.9**

(22) Anmeldetag: **24.03.2020**

(51) Internationale Patentklassifikation (IPC):
**G03B 35/08** $^{(2021.01)}$

(52) Gemeinsame Patentklassifikation (CPC):
**G02B 27/1066; G02B 3/0006; G02B 7/09; G02B 13/0065; G02B 26/0816; G03B 17/17; G03B 19/023; G03B 35/08; G03B 37/04; H04N 23/45; H04N 23/55;** G02B 2207/117

(86) Internationale Anmeldenummer:
**PCT/EP2020/058222**

(87) Internationale Veröffentlichungsnummer:
**WO 2020/193581 (01.10.2020 Gazette 2020/40)**

(54) **VORRICHTUNG MIT EINER MULTIAPERTURABBILDUNGSVORRICHTUNG ZUR ERZEUGUNG EINER TIEFENKARTE**

DEVICE HAVING A MULTI-APERTURE IMAGING DEVICE FOR GENERATING A DEPTH MAP

DISPOSITIF MUNI D'UN DISPOSITIF D'IMAGERIE MULTI-OUVERTURES POUR LA PRODUCTION D'UNE CARTE DE PROFONDEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2019 DE 102019204075**

(43) Veröffentlichungstag der Anmeldung:
**09.02.2022 Patentblatt 2022/06**

(73) Patentinhaber: **Fraunhofer-Gesellschaft zur Förderung der angewandten Forschung e.V. 80686 München (DE)**

(72) Erfinder:
- **WIPPERMANN, Frank 07745 Jena (DE)**
- **DUPARRÉ, Jacques 07745 Jena (DE)**

(74) Vertreter: **König, Andreas Rudolf Schoppe, Zimmermann, Stöckeler Zinkler, Schenk & Partner mbB Patentanwälte Radlkoferstraße 2 81373 München (DE)**

(56) Entgegenhaltungen:
**DE-A1-102015 215 845    DE-A1-102017 206 429 DE-B3-102017 208 709**

**Beschreibung**

Zusammenfassung

Die vorliegende Erfindung bezieht sich auf Vorrichtungen mit Multiaperturabbildungsvorrichtungen im Inneren eines Gehäuses, insbesondere ein Vorrichtungen mit kleinen, insbesondere schmalen oder flächeneffizient angeordneten Durchlassbereichen für Strahlengänge, sogenannte Sichtfenster oder Austrittsfenster.

Multiaperturkameras nach dem Prinzip der kanalweisen Aufteilung des Gesichtsfelds nutzen als Strahlumlenkungs-Elemente Spiegelfacetten. Die einzelnen Strahlengänge durchlaufen nach Passieren der jeweiligen Bereiche der Spiegelfacetten eine Öffnung in dem Gehäuse, die man als Austrittsfenster bezeichnen kann.

Wünschenswert wären Vorrichtungen, die einen geringen Flächenverbrauch für derartigen Fenster aufwenden und/oder den aufgewendeten Flächenverbrauch in nicht störender Weisen aufwenden.

Die Aufgabe der vorliegenden Erfindung besteht deshalb darin, eine Vorrichtung mit einem geringen und/oder nicht störendem Flächehverbrauch der für die Multiaperturabbildungsvorrichtung aufgewendeten Austrittsfenster zu schaffen.

De 10 2017 206429 A1 offenbart eine Vorrichtung mit einem Gehäuse in welchem sich eine Multiaperturabbildungsvorrichtung befindet und in welcher Strahlumlenkungselemente verwendet werden.

Diese Aufgabe wird durch den Gegenstand der unabhängigen Patentansprüche gelöst.

Eine Erkenntnis der vorliegenden Erfindung besteht darin, der erfindungsgemäße Aufbau einer Multiaperturabbildungsvorrichtung so genutzt werden kann, dass eine kanalindividuelle örtliche Anordnung von Einzelkomponenten optischer Kanäle oder der Gesamtheit der Einzelkomponenten entlang einer axialen Richtung zum Erhalt unterschiedlicher Relativpositionen genutzt werden kann, um eine erforderliche Durchlassöffnungsgröße zum Durchlassen von Strahlengängen in ein Gehäuse (was gleichbedeutend mit einem Austritt von Strahlengängen aus dem Gehäuse ist) gering zu halten, so dass geringe Fenstergrößen in Gehäusen möglich sind, was insbesondere in mobilen Vorrichtungen von Vorteil ist, bei denen ein Anteil zumindest einer Gehäuseseite, die von einem Display (Anzeigeeinrichtung) bedeckt ist möglichst groß oder flächeneffizient genutzt werden soll.

Weitere vorteilhafte Ausgestaltungen der vorliegenden Erfindung sind in abhängigen Patentansprüchen definiert.

Unter Bezugnahme auf die beiliegenden Zeichnungen werden bevorzugte Ausführungsbeispiele der vorliegenden Erfindung nachfolgend erläutert. Es zeigen:

Fig. 1a     eine schematische perspektivische Ansicht einer Vorrichtung gemäß einem Ausführungsbeispiel;

Fig. 1b     eine schematische perspektivische Ansicht einer Vorrichtung gemäß einem Ausführungsbeispiel;

Fig. 1c     eine schematische perspektivische Ansicht einer Vorrichtung gemäß einem Ausführungsbeispiel, die Merkmale der Fig. 1a und Fig. 1b kombiniert;

Fig. 2a     eine schematische Ansicht unterschiedlicher Fokuslagen gemäß einem Ausführungsbeispiel, in welche eine Vorrichtung gemäß einem Ausführungsbeispiel steuerbar ist;

Fig. 2b     eine schematische Darstellung der Verwendung einer aus unterschiedlichen Fokuslagen gemäß einem Ausführungsbeispiel erstellten Tiefenkarte sowie deren Generierung;

Fig. 3a     eine schematische perspektivische Ansicht einer Vorrichtung gemäß einem Ausführungsbeispiel, bei dem ein Bildsensor ein Array optischer Kanäle und eine Strahlumlenkeinrichtung einen Quader im Raum aufspannen;

Fig. 3b     eine schematische Seitenschnittansicht der Vorrichtung aus Fig. 3a gemäß einem Ausführungsbeispiel, bei der die Multiaperturabbildungsvorrichtung eine Mehrzahl von Aktoren aufweist;

Fig. 3c     eine schematische Seitenschnittansicht der Multiaperturabbildungsvorrichtung aus Fig. 3a und/oder 3b, bei der basierend auf unterschiedlichen Stellungen der Strahlumlenkeinrichtung unterschiedliche Gesamtgesichtsfelder erfassbar sind;

Fig. 4a     eine schematische Aufsicht auf eine Vorrichtung gemäß einem Ausführungsbeispiel, bei der der Aktor als piezoelektrischer Biegeaktor gebildet ist;

Fig. 4b     eine schematische Seitenschnittansicht der Vorrichtung aus Fig. 4a zur Verdeutlichung der Anordnung des Aktuators zwischen den Ebenen des Quaders, die im Zusammenhang mit der Fig. 3a beschrieben sind;

Fig. 5a-c     schematische Darstellungen von Anordnungen von Teilgesichtsfeldern in einem Gesamtgesichtsfeld, gemäß einem Ausführungsbeispiel;

Fig. 6      eine schematische perspektivische Ansicht einer Vorrichtung gemäß einem Ausführungsbeispiel;

Fig. 7a      ein schematisches Diagramm zur Verdeutlichung der Verarbeitung der Bildinformationen, die gemäß einem Ausführungsbeispiel durch Abbildung der Gesamtgesichtsfelder erhalten werden können;

Fig. 7b      eine schematische Darstellung einer Skalierung eines Teils einer Abbildungsinformation in der akkumulierten Bildinformation gemäß einem Ausführungsbeispiel;

Fig. 8      Teile einer Multiaperturabbildungsvorrichtung gemäß einem Ausführungsbeispiel, die in erfindungsgemäßen Vorrichtungen eingesetzt werden kann;

Fig. 9a-f      vorteilhafte Ausgestaltungen einer Strahlumlenkeinrichtung gemäß einem Ausführungsbeispiel;

Fig. 10      eine schematische perspektivische Ansicht einer Vorrichtung gemäß einem Ausführungsbeispiel;

Fig. 11a      eine schematische Aufsicht auf eine Ausgestaltung der Vorrichtung aus Fig. 10 gemäß einem Ausführungsbeispiel, bei der die Hauptseite des Gehäuses beispielhaft zwei Durchlassbereiche aufweist;

Fig. 11b      eine schematische Aufsicht auf eine alternative Ausgestaltung der Vorrichtung aus Fig. 10 gemäß einem Ausführungsbeispiel, bei der die Durchlassbereichanordnung lediglich einen einzelnen Durchlassbereich aufweist, der beispielsweise mittig und benachbart zu einer Randseite angeordnet ist.

Fig. 11c      eine schematische Aufsicht auf eine weiter alternative Ausgestaltung der Vorrichtung aus Fig. 10 gemäß einem Ausführungsbeispiel, bei der der GesamtDurchlassbereich anders als in Fig. 11b nicht mittig, sondern zu einer Randseite versetzt ist;

Fig. 12a-c      zu den Fig. 11a bis 11c äquivalente oder zumindest ähnliche Ausgestaltungen der Vorrichtung aus Fig. 10 gemäß einem Ausführungsbeispiel, wobei eine Fenster-Abmessung der Durchlassbereiche gleich dem Abstand zur Außenkante sein kann;

Fig. 13a      eine beispielhafte schematische Seitenschnittansicht der Vorrichtung aus Fig. 10 gemäß einem Ausführungsbeispiel mit Ausschnitten der Hauptseiten zur Darstellung des Inneren des Gehäuses;

Fig. 13b      eine schematische Seitenschnittansicht durch dieselbe Ausgestaltung der Vorrichtung wie in Fig. 13a, aber in einer anderen Schnittebene;

Fig. 14a-c      schematische Aufsichten auf unterschiedliche Ausgestaltungen der Vorrichtung aus Fig. 10 mit den im Zusammenhang mit den Fig. 13a und 13b erwähnten unterschiedlichen Abständen zwischen Optiken und Facetten;

Fig. 15a-b      schematische Seitenschnittansichten einer Konfiguration der Vorrichtung aus Fig. 10 gemäß einem Ausführungsbeispiel, bei der eine axiale Position der Kombination aus Bildsensorbereich, Optik und zugeordneter Facette der unterschiedlichen optischen Kanäle entlang einer Richtung der Strahlengänge in einem Bereich zwischen der Bildsensoranordnung mit den Bildsensorbereichen und der Strahlumlenkeinrichtung die kanalindividuelle Relativposition bereitstellt;

Fig. 15c      eine schematische Aufsicht auf die Konfiguration gemäß den Fig. 15a und 15b;

Fig. 16a-b      schematische Seitenschnittansichten einer Konfiguration der Vorrichtung aus Fig. 10 gemäß einem Ausführungsbeispiel in unterschiedlichen Ebenen $z_1$ und $z_2$ einer x/y-Ebene;

Fig. 17a      eine schematische Aufsicht auf eine Konfiguration der Vorrichtung aus Fig. 10 gemäß einem Ausführungsbeispiel, bei der die Optiken jeweils als ein Stapel von Linsen gebildet sind; und

Fig. 17b      eine schematische Aufsicht auf eine Konfiguration, bei der das Substrat eines Arrays optischer Kanäle gegenüber der in der Fig. 17a gezeigten senkrechten Anordnung senkrecht zu der axialen Richtung verkippt ist.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Manche der hierin beschriebene Ausführungsbeispiele beziehen sich auf eine kanalindividuelle Relativposition von Komponenten optischer Kanäle einer Multiaperturabbildungsvorrichtung, die ein Array von optischen Kanälen aufweist. Als Array wird eine zumindest und bevorzugt einzeilige Anordnung optischer Kanäle nebeneinander entlang einer Zeilenrichtung verstanden. Ein mehrzeiliges Array kann eine Anzahl von mehr als einer Zeile aufweisen, die jeweils entlang derselben Zeilenrichtung angeordnet sein können, wobei die einzelnen Zeilen entlang einer Spaltenrichtung versetzt zueinander sein können. Auch wenn als optischer Kanal der Verlauf von Strahlenbündeln als Ganzes verstanden werden kann, kann dieser Verlauf durch die Anordnung von dem jeweiligen Kanal zugeordneter optischer Elemente, etwa Linsen, zumindest in Teilen bestimmt sein, so dass für das Array optischer Kanäle eine Nebeneinanderanordnung der optischen Elemente gleichbedeutend sein kann.

Die unterschiedliche Relativposition bezieht sich insofern auf die unterschiedliche Ausgestaltung innerhalb der optischen Kanäle und kann eine laterale Verschiebung der optischen Kanäle außer Betracht lassen. Die unterschiedliche Relativposition kann sich auf unterschiedliche Abstände und/oder relative Neigungen/Orientierungen der einzelnen Komponenten zueinander und innerhalb desselben optischen Kanals beziehen, wobei unterschiedliche Neigungen/Orientierungen für Facetten einer facettierten Strahlumlenkeinrichtung außer Betracht bleibt, da deren Facetten bereits kanalindividuell geneigt sein können. Hierbei kommt insbesondere derjenige Bereich des Verlaufs der Strahlengänge der optischen Kanäle in Betracht, der zwischen einem dem optischen Kanal zugeordneten Bildsensorbereich und einer dem optischen Kanal zugeordneten und durch Reflexion oder Spiegelung bewirkten Strahlumlenkung liegt. Die Richtung zwischen Bildsensorbereich und Strahlumlenkung kann im Zusammenhang mit hierin beschriebenen Ausführungsbeispielen als axiale Richtung verstanden werden, die ungeachtet von möglichen Richtungsdivergenzen zwischen den optischen Kanälen qualitativ gleich sein kann.

Die erläuterten Divergenzen können so ausgeführt sein, dass die optischen Kanäle innerhalb einer gemeinsamen Ebene schielen, um eine Vorabdivergenz zu erhalten, die durch die Strahlumlenkung optional verstärkt (alternativ alleinig bewirkt) werden kann, um die Strahlengänge hin zu unterschiedlichen Gesichtsfeldern zu lenken. Die gemeinsame Ebene kann bspw. durch einen Vektor entlang der axialen Richtung und einen Vektor entlang der Zeilenerstreckungsrichtung aufgespannt werden, so dass die Divergenzen in der gemeinsamen Ebene (in-plane) auftreten können. Alternativ oder zusätzlich ist in erfindungsgemä-ßen Ausführungsbeispielen vorgesehen, dass eine Divergenz aus dieser Ebene (out-ofplane) erhalten wird.

Die erwähnte Strahlumlenkung der Strahlengänge der optischen Kanäle kann durch eine Strahlumlenkeinrichtung bewirkt werden, die einen oder mehrere reflektierende Bereiche aufweist, etwa eine Facette pro Kanal oder Gruppe von Kanälen, was es ermöglicht unterschiedliche Anstellwinkel zwischen einzelnen optischen Kanälen oder Gruppen zu implementieren.

Die erwähnten Gesichtsfelder eines optischen Kanals können ein Gesamtgesichtsfeld oder ein Teilgesichtsfeld sein. Teilgesichtsfelder können möglicherweise einen kleineren Feldwinkel oder Bildwinkel des Objektbereichs aufweisen, d. h., einen vergleichsweise kleineren Bereich des Objektbereichs abdecken als ein Gesamtgesichtsfeld. Dies kann durch eine Zusammenfügung von Teilbildern von Teilgesichtsfeldern zu einem Gesamtbild des Gesamtgesichtsfeldes erhalten werden, etwa mittels Stiching. Ein Gesichtsfeld eines optischen Kanals kann auch ein Gesamtgesichtsfeld beschreiben. Dieses Gesamtgesichtsfeld kann bspw. mittels einer, verglichen mit Teilgesichtsfeldern abbildenden Optiken, verschiedenen Optik erfasst werden und zur einer durch die Teilgesichtsfelder insgesamt erhaltenen Abbildung des Gesamtgesichtsfeldes zusätzlichen Erfassung des Gesamtgesichtsfeldes ermöglichen, kann aber auch ein unterschiedliches Gesamtgesichtsfeld im Hinblick auf Größe und/oder Position relativ zu der Multiaperturabbildungsvorrichtung beschreiben.

Manche Ausführungsbeispiele beziehen sich auf Vorrichtungen, die zumindest eine Multiaperturabbildungsvorrichtung aufweisen, die in einem Inneren eines Gehäuses angeordnet sind und durch einen oder mehrere Durchlassbereiche von dem Inneren ausgehend nach Außen blicken. Deshalb werden zu Beginn mögliche, jedoch nicht einschränkende Ausgestaltungen von Multiaperturabbildungsvorrichtungen erläutert, bevor deren erfindungsgemäß Anordnung in einer Vorrichtung beschrieben werden.

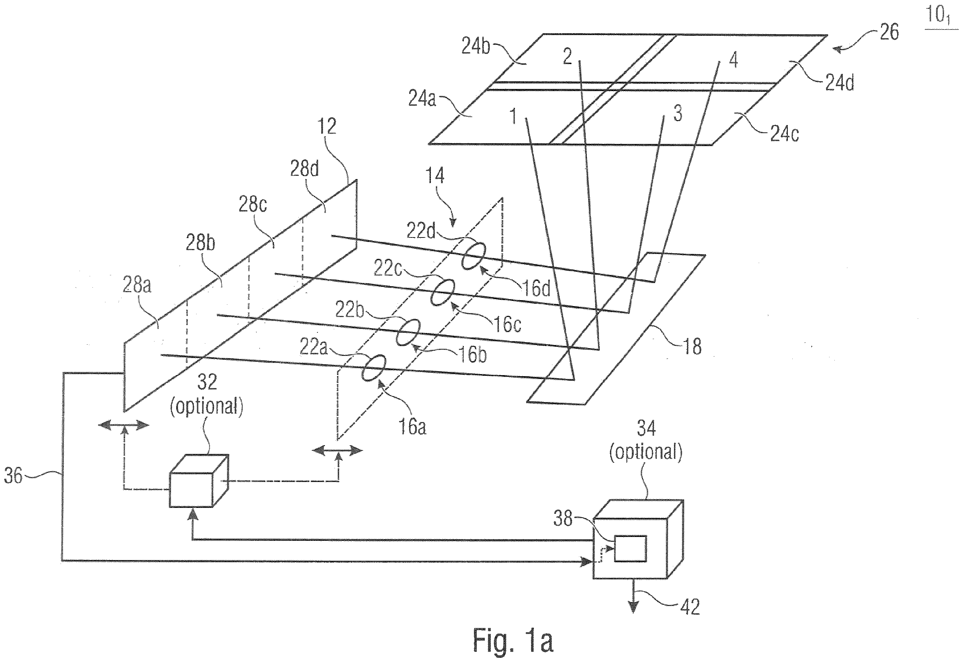

Fig. 1a zeigt eine schematische perspektivische Ansicht einer Vorrichtung $10_1$ gemäß einem Ausführungsbeispiel. Die Vorrichtung $10_1$ umfasst eine Multiaperturabbildungsvorrichtung, die einen Bildsensor 12 und ein Array 14 von nebeneinander angeordneten optischen Kanälen 16a-e. Die Multiaperturabbildungsvorrichtung umfasst ferner eine Strahlumlenkeinrichtung 18 zum Umlenken eines Strahlengangs der optischen Kanäle 16a-d. Hierdurch können die Strahlengänge der optischen Kanäle 16a-d zwischen einem lateralen Verlauf zwischen dem Bildsensor 12 durch Optiken 22a-d des Arrays 14 hin zu der Strahlumlenkeinrichtung 18 hin zu einem nicht-lateralen Verlauf umgelenkt werden. Unterschiedliche optische Kanäle 16a-d werden insgesamt so umgelenkt, dass jeder optische Kanal 16a-d ein Teilgesichtsfeld 24a-d eines Gesamtgesichtsfelds 26 auf einem Bildsensorbereich 28a-d des Bildsensors 12 abbildet. Die Teilgesichtsfelder 24a-d können eindimensional oder zweidimensional, basierend auf unterschiedlichen Brennweiten der Optiken 22a-d auch dreidimensional im Raum verteilt sein. Zur besseren Verständlichkeit wird das Gesamtgesichtsfeld 26 nachfolgend so beschrieben, dass die Teilgesichtsfelder 24a-d eine zweidimensionale Verteilung aufweisen, wobei einander benachbarte Teilgesichtsfelder 24a-d miteinander überlappen können. Ein Gesamtbereich der Teilgesichtsfelder ergibt das Gesamtgesichtsfeld 26.

Die Multiaperturabbildungsvorrichtung umfasst eine optionale Fokussiereinrichtung 32 zum Einstellen einer Fokuslage der Multiaperturabbildungsvorrichtung. Dies kann durch Verändern einer relativen Lage oder Position zwischen dem Bildsensor 12 und dem Array 14 erfolgen, wobei die Fokussiereinrichtung 32 ausgebildet sein kann, um eine Position des Bildsensors 12 und/oder eine Position des Arrays 14 zu verändern, um eine veränderliche Relativposition zwischen dem Bildsensor 12 und dem Array 14 zu erhalten, um so die Fokuslage der Multiaperturabbildungsvorrichtung einzustellen.

Die Einstellung der relativen Position kann kanalindividuell, für Gruppen von optischen Kanälen oder auch kanalglobal erfolgen. So kann beispielsweise eine einzelne Optik 22a-d, eine Gruppe der Optiken 22a-d oder alle Optiken 22a-d gemeinsam bewegt werden. Selbiges trifft für den Bildsensor 12 zu.

Die Vorrichtung kann eine optionale Steuereinrichtung 34 umfassen, die ausgebildet ist, um die Fokussiereinrichtung 32 zu steuern. Darüber hinaus ist die Steuereinrichtung 34 ausgebildet, um Bildinformationen 36 von dem Bildsensor 12 zu empfangen. Hierbei kann es sich beispielsweise um die auf die Bildsensorbereiche 28a-d abgebildeten Teilgesichtsfelder 24a-d handeln, bzw. um Informationen oder Daten, die den Abbildungen entsprechen. Dies schließt eine Zwischenverarbeitung der Bildinformationen 36 nicht aus, beispielsweise im Hinblick auf eine Filterung, Glättung oder dergleichen.

Die Steuereinrichtung 34 kann konfiguriert sein, um die Multiaperturabbildungsvorrichtung in eine Abfolge von Fokuslagen zu steuern, um eine korrespondierende Abfolge von Bildinformationen des Gesamtgesichtsfelds 26 zu erfassen. Die Steuereinrichtung 34 ist ausgebildet, um aus der Abfolge von Bildinformationen eine Tiefenkarte 38 für das Gesamtgesichtsfeld 26 zu erstellen. Die Tiefenkarte 38 kann über ein entsprechendes Signal bereitgestellt werden. Die Steuereinrichtung 34 kann basierend auf den durch unterschiedliche Relativpositionen zwischen dem Bildsensor 12 und dem Array 14 erhaltenen unterschiedlichen Fokuslagen unterschiedliche Bilder desselben Gesichtsfelds 26 erfassen bzw. unterschiedlich fokussierte Teilbilder hiervon in Übereinstimmung mit der Segmentierung durch die Teilgesichtsfelder 24a-d.

Tiefenkarten können für unterschiedliche Zwecke eingesetzt werden, beispielsweise zur Bildbearbeitung, aber auch zur Bildzusammenfügung. So kann die Steuereinrichtung 34 ausgebildet sein, um Einzelbilder, die von den Bildsensorbereichen 28a bis 28d erhalten werden, unter Verwendung der Tiefenkarte 38 miteinander zu verbinden, um eine Bildinformation 42 zu erhalten, die die Abbildung des Gesamtgesichtsfelds 26 wiedergibt, das bedeutet, ein Gesamtbild. Für derartige Verfahren zum Zusammenfügen von Teilbildern, im Englischen auch als "Stitching" bezeichnet, ist die Verwendung einer Tiefenkarte besonders vorteilhaft.

Unter Verwendung der Tiefenkarte kann die Steuereinrichtung 34 ausgebildet sein, um die Teilbilder einer Gruppe von Teilbildern zu einem Gesamtbild zusammenzusetzen. Das bedeutet, die für das Stitching verwendete Tiefenkarte kann aus den zu stitchenden Teilbildern selbst erzeugt werden. Bspw. kann basierend auf der Folge von Bildinformationen kann eine Abfolge von das Gesamtgesichtsfeld wiedergebenden Gesamtbildern erzeugt werden. Jedes Gesamtbild kann auf einer Kombination von Teilbildern gleicher Fokuslage basieren. Alternativ oder zusätzlich können zumindest zwei, mehrere oder alle Gesamtbilder aus der Abfolge kombiniert werden, um ein Gesamtbild mit erweiterter Information zu erhalten, etwa zum Erzeugen eines Bokeh-Effekts. Alternativ oder zusätzlich kann das Bild auch so dargestellt werden, dass das gesamte Bild künstlich scharf ist, das bedeutet, eine höhere Anzahl als in den Einzelbildern von Teilbereichen ist scharfgestellt, beispielsweise das gesamte Bild.

Die Vorrichtung $10_1$ ist gemäß einem Ausführungsbeispiel konfiguriert, um das Abbild des Gesamtgesichtsfelds als Monoaufnahme zu erstellen und, um die Tiefenkarte 38 aus der Abfolge von Monoaufnahmen zu erstellen. Obwohl auch eine mehrfache Abtastung des Gesamtgesichtsfelds 26 möglich ist, kann die Vorrichtung 10 bereits aus einer Monoaufnahme die Tiefenkarte erzeugen, was einer Einsparung zusätzlicher Aufnahmen aus unterschiedlicher Blickrichtung einsparen kann, etwa unter Verwendung einer mehrfachen Aufnahme mit der gleichen Vorrichtung oder durch redundanten Anordnung zusätzlicher optischer Kanäle.

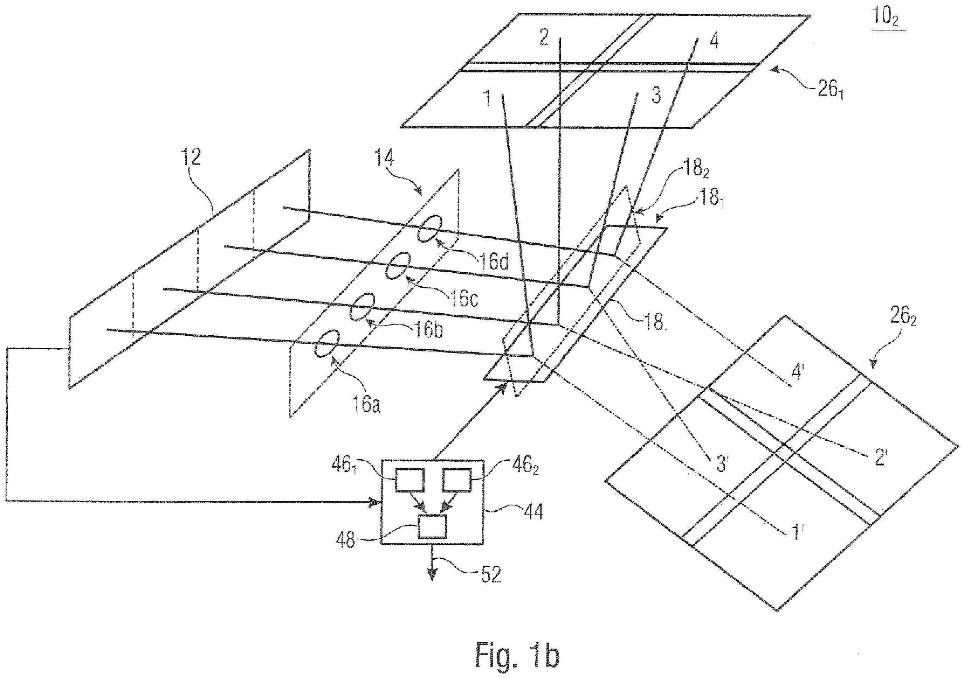

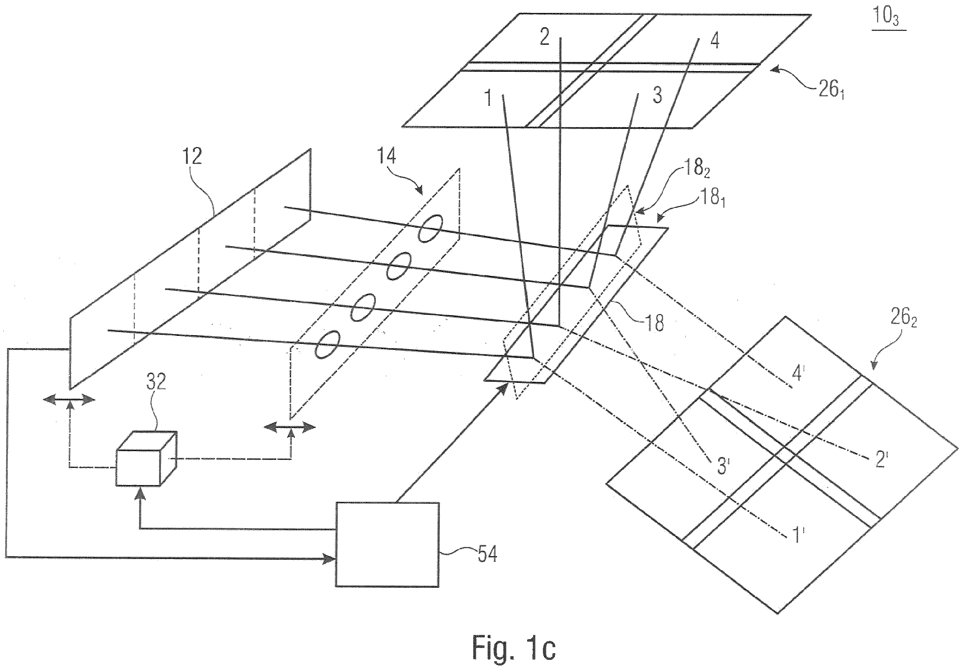

Die Multiaperturabbildungsvorrichtung $10_1$ kann auch ohne die Fokussiereinrichtung 32 und/oder ohne die Steuereinrichtung 34 ausgeführt sein, womit die Multiaperturabbildungsvorrichtung $10_1$ bspw. als die Multiaperturabbildungsvorrichtung gemäß der Fig. 1 ausführbar ist. Anstelle der Steuereinrichtung 34 kann eine andere Einrichtung vorgesehen sein, um die Bildinformationen von dem Bildsensor 12 zu erhalten oder es kann die Steuereinrichtung 34 zwar mit dieser Funktion eingesetzt werden, auf die Ansteuerung der Fokussiereinrichtung aber verzichtet werden.

Die dargestellte Implementierung der Multiaperturabbildungsvorrichtung ist beispielhaft zu verstehen. In hierin beschriebenen Ausführungsbeispielen werden vorteilhafte Ausgestaltungen erfindungsgemäßer Multiaperturabbildungsvorrichtungen erläutert. Dabei sind manche Zeichnungen, darunter die Fig. 1a so dargestellt, dass ein Bildsensor mit mehreren Bildsensorbereichen, ein Array optischer Kanäle mit einem gemeinsamen Substrat und/oder eine Strahlumlenkeinrichtung als gemeinsame Komponente ausgeführt sind, was einer später erläuterten erfindungsgemäßen kanalindividuellen Ausgestaltung der Relativpositionen aber nicht entgegensteht, da die Zeichnungen diesbezüglich rein schematisch sind. Sämtliche hierin beschriebenen Ausführungsbeispiele beziehen sich ohne Einschränkung darauf, den Bildsensor, das Array optischer Kanäle und/oder die Strahlumlenkeinrichtung in Form mehrerer unterschiedlich relativ zueinander und/oder entlang einer axialen Richtung der Strahlengänge positionierter Einzelteile auszugestalten und/oder darauf, anstelle einer dargestellten planen oder ebenen Ausgestaltung senkrecht zu der axialen Richtung eine topographiebehaftete Ausgestaltung dieser Komponenten zu implementieren, etwa geneigte und/oder stufenförmige Bildsensoren mit unterschiedlichen Relativpositionen der Bildsensorbereiche, geneigte und/oder stufenförmige Arrays mit unterschiedlichen Relativpositionen der Optiken und/oder geneigte oder stufenförmige Strahlumlenkeinrichtungen mit unterschiedlichen Relativpositionen der Strahlumlenkbereiche bzw. Facetten.

Fig. 1b zeigt eine schematische perspektivische Ansicht einer Vorrichtung $10_2$ gemäß einem Ausführungsbeispiel. Verglichen mit der Vorrichtung $10_1$ weist die Vorrichtung $10_2$ anstelle der Steuereinrichtung 34 eine Steuereinrichtung 44 auf, die konfiguriert ist, um die Strahlumlenkeinrichtung in unterschiedliche Positionen $18_1$ und $18_2$ zu steuern. In den unterschiedlichen Positionen $18_1$ und $18_2$ weist die Strahlumlenkeinrichtung 18 eine voneinander verschiedene relative Lage auf, so dass in den unterschiedlichen Positionen oder Stellungen Abbildungsinformationen von unterschiedlichen Gesamtgesichtsfeldern $26_1$ und $26_2$ erhalten werden, da die Strahlengänge der optischen Kanäle 16a-d in unterschiedliche und von den verschiedenen Stellungen $18_1$ und $18_2$ beeinflusste Richtungen gelenkt werden. Alternativ oder zusätzlich zu der Steuereinrichtung 34 weist die Vorrichtung $10_2$ eine Steuereinrichtung 44 auf, die konfiguriert ist, um die Strahlumlenkeinrichtung in die erste Stellung $18_1$ zu steuern, um eine Abbildungsinformation des ersten Gesamtgesichtsfelds $26_1$ von dem Bildsensor 12 zu erhalten. Zuvor oder danach ist die Steuereinrichtung 44 ausgebildet, um die Strahlumlenkeinrichtung 18 in die zweite Stellung $18_2$ zu steuern, um eine Abbildungsinformation des zweiten Gesamtgesichtsfelds $26_2$ von dem Bildsensor 12 zu erhalten. Die Steuereinrichtung 44 ist ausgebildet, um einen Teil der ersten Abbildungsinformation 46, in die zweite Abbildungsinformation $46_2$ einzufügen, um eine gemeinsame oder akkumulierte Bildinformation 48 zu erhalten. Die akkumulierte Bildinformation 48 kann stellenweise das erste Gesamtgesichtsfeld $26_1$ und stellenweise das zweite Gesamtgesichtsfeld $26_2$ wiedergeben, wobei dies bildmanipulierende oder bildverarbeitende Schritte mitumfasst. Das bedeutet, die akkumulierte Bildinformation 48 basiert stellenweise auf einer Abbildung des Gesamtgesichtsfelds $26_1$ und an anderen Stellen auf der Abbildung des Gesamtgesichtsfelds $26_2$.

Die Steuereinrichtung 44 kann ausgebildet sein, um ein Signal 52 bereitzustellen, das die akkumulierte Bildinformation 48 enthält oder wiedergibt. Optional können auch die Bildinformationen $46_1$ und/oder $46_2$ durch das Signal 52 ausgegeben werden.

Fig. 1c zeigt eine schematische Ansicht einer Vorrichtung $10_3$ gemäß einem Ausführungsbeispiel, die anstelle der Steuereinrichtung 34 aus Fig. 1a und anstelle der Steuereinrichtung 44 aus Fig. 1b eine Steuereinrichtung 54 aufweist, die die Funktionalität der Steuereinrichtung 34 und der Steuereinrichtung 44 kombiniert und ausgebildet ist, um basierend auf einer veränderlichen Fokuslage der Vorrichtung $10_3$ die Tiefenkarte 38 zu erstellen und um die akkumulierte Bildinformation 48 aus Fig. 1b bereitzustellen.

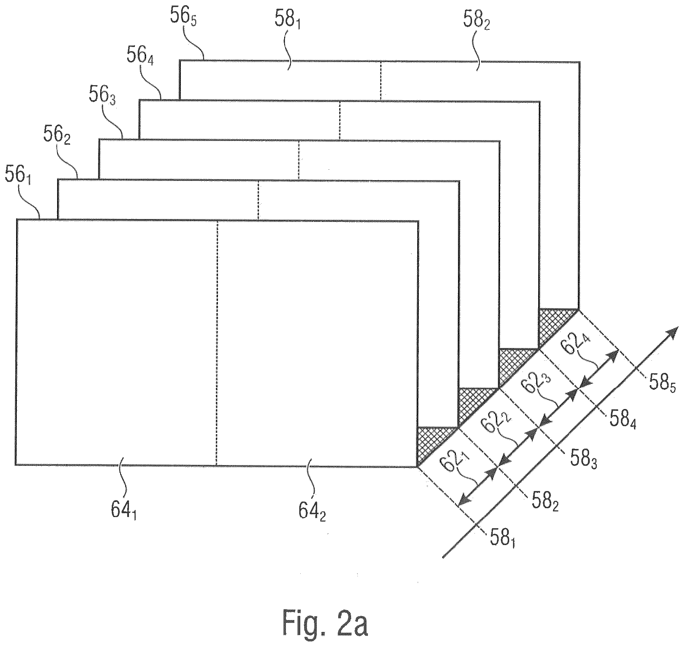

Fig. 2a zeigt eine schematische Ansicht unterschiedlicher Fokuslagen $56_1$ bis $56_5$, in welche eine Vorrichtung gemäß hierin beschriebener Ausführungsbeispiele, beispielsweise die Vorrichtung $10_1$ und die Vorrichtung $10_2$ steuerbar ist. Die unterschiedlichen Fokuslagen $56_1$ bis $56_5$ können als Positionen oder Abstände $58_1$ bis $58_5$ verstanden werden, in denen Objekte in dem aufgenommenen Gesamtgesichtsfeld scharf auf den Bildsensor 12 abgebildet werden. Eine Anzahl der Fokuslagen 56 kann dabei beliebig sein und eine Anzahl von größer 1 aufweisen.

Abstände $62_1$ bis $62_4$ zwischen benachbarten Fokuslagen können sich auf Abstände im Bildraum beziehen, wobei eine Ausgestaltung oder Überführung der Erläuterung auf Abstände in dem Objektraum ebenfalls möglich ist. Vorteilhaft an einer Betrachtung des Bildraums ist jedoch, dass die Eigenschaften der bildgebenden Multiaperturabbildungsvorrichtung berücksichtigt werden, insbesondere im Hinblick auf einen minimalen bzw. maximalen Objektabstand. Die Steuereinrichtung 34 und/oder 54 kann ausgebildet sein, um die Multiaperturabbildungsvorrichtung so zu steuern, dass diese zwei oder eine höhere Anzahl der Fokuslagen $56_1$ bis $56_5$ aufweist. In der jeweiligen Fokuslage können Einzelbilder $64_1$ und $64_2$ entsprechend der Anzahl der aufgenommenen Teilgesichtsfelder 24 erfasst werden. Basierend auf der Kenntnis, welche der Fokuslagen $56_1$ bis $56_5$ zum Erhalt des jeweiligen Teilbilds $46_1$ und $46_2$ eingestellt wurde, kann die Steuereinrichtung durch Analyse der Bildinformation dahin gehend, welche der Bildteile scharf abgebildet sind, bestimmen, in welchem Abstand diese scharf abgebildeten Objekte bezüglich der Vorrichtung angeordnet sind. Diese Information bezüglich des Abstands kann für die Tiefenkarte 38 verwendet werden. Das bedeutet, die Steuereinrichtung kann ausgebildet sein, um in der Abfolge von Fokuslagen $56_1$ bis $56_5$ eine korrespondierende Anzahl von Gruppen von Teilbildern zu erfassen, wobei jedes Teilbild einem abgebildeten Teilgesichtsfeld zugeordnet ist. Die Gruppe von Teilbildern kann somit denjenigen Teilbildern entsprechen, die das Gesamtgesichtsfeld in der eingestellten Fokuslage abbilden.

Die Steuereinrichtung kann ausgebildet sein, um aus einem Vergleich von lokalen Bildschärfeinformationen in den Teilbildern die Tiefenkarte zu erstellen. Die lokale Schärfeinformation kann bezeichnen, in welchen Bereichen des Bildes Objekte scharf oder innerhalb eines zuvor festgelegten Toleranzbereichs scharf abgebildet werden. So kann beispielsweise über eine Bestimmung der Kantenverwaschungsfunktion sowie eine Detektion, über welche Abstände sich die Kanten erstrecken, bestimmt werden, ob ein entsprechender Bildbereich, ein entsprechendes Objekt oder ein Teil hiervon scharf abgebildet ist oder auf dem Bildsensor verschwommen abgebildet wird. Weiterhin kann die Punktbild- oder die Linienverwaschungsfunktion als Gütekriterium für die Schärfe eines Bildinhaltes herangezogen werden. Alternativ oder zusätzlich kann jede bekannte optische Schärfe-Metrik, wie auch die bekannte Modulation Transfer Function (MTF) verwendet werden. Alternativ oder zusätzlich kann die Schärfe der gleichen Objekte in benachbarten Bildern des Stacks, die Zuordnung der Fokus-Aktuatorposition zum Objektabstand via einer kalibrierten Lookup-Table und/oder die Richtung des Through-Focus-Scans verwendet werden, um teils rekursiv aus benachbarten Bildern des Stacks die Tiefeninformation zu gewinnen und Doppeldeutigkeiten zu vermeiden. Unter Kenntnis der eingestellten Fokuslage, die eindeutig mit einen Objektabstand, der scharf abgebildet wird, korreliert ist, kann somit aus der Kenntnis, dass das Objekt, zumindest innerhalb des zuvor festgelegten Toleranzbereichs, scharf abgebildet ist, auf einen Abstand des Bereichs des Bilde, das Objekt oder des Teils hiervon geschlossen werden, was eine Grundlage für die Tiefenkarte 38 sein kann.

Unter Verwendung der Tiefenkarte kann die Steuereinrichtung ausgebildet sein, um die Teilbilder einer Gruppe von Teilbildern zu einem Gesamtbild zusammenzusetzen. Das bedeutet, die für das Stitching verwendete Tiefenkarte kann aus den zu stitchenden Teilbildern selbst erzeugt werden.

Die Vorrichtung kann ausgebildet sein, um die Fokussiereinrichtung 32 so zu steuern, dass die Abfolge von Fokuslagen $56_1$ bis $56_5$ innerhalb eines Toleranzbereichs von $\pm 25\%$, $\pm 15\%$ oder $\pm 5\%$, bevorzugt möglichst nahe an 0% äquidistant im Bildraum zwischen einer minimalen Fokuslage und einer maximalen Fokuslage verteilt ist. Es ist hierbei zum Einsparen von Zeit zum Einstellen einer Fokuslage sinnvoll, jedoch nicht erforderlich, die Fokuslagen $56_1$ bis $56_5$ sequenziell nacheinander in zunehmendem oder abnehmendem Abstand anzusteuern. Vielmehr ist eine Reihenfolge der eingestellten Fokuslagen $56_1$ bis $56_5$ beliebig.

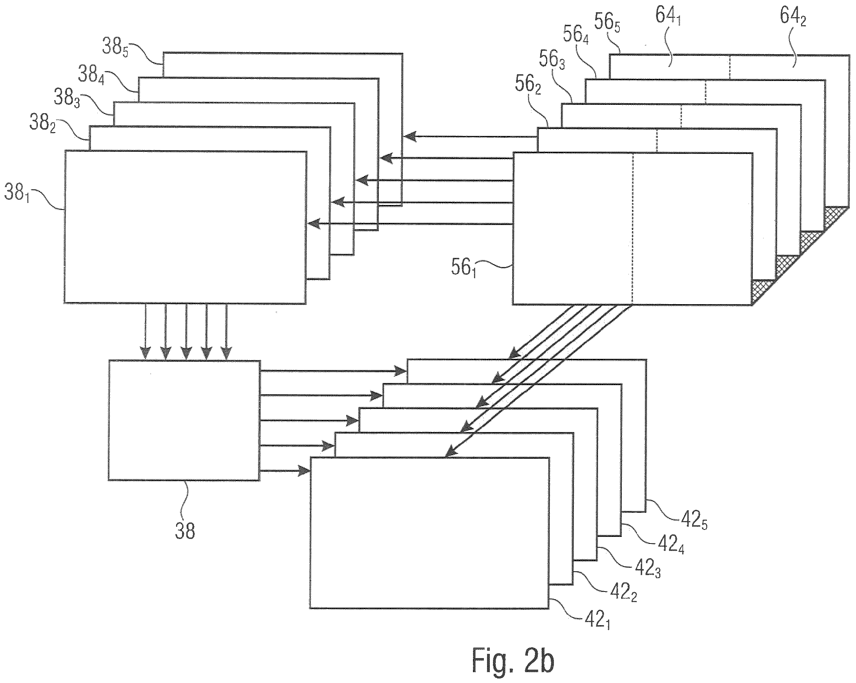

Fig. 2b zeigt eine schematische Darstellung der Verwendung der Tiefenkarte 38 sowie deren Generierung. Die Teilbilder $64_1$ und $64_2$ können jeweils verwendet werden, um Teilinformationen $38_1$ bis $38_5$ der Tiefenkarte 38 aus der jeweiligen Fokuslage $56_1$ bis $56_5$ zu erhalten, da jeweils die in den Einzelbildern $64_1$ und $64_2$ scharf dargestellten Objekte präzise bezüglich ihres Abstands bestimmt werden können. Zwischen den Fokuslagen $56_1$ und $56_5$ können jedoch auch Interpolations-Verfahren angewendet werden, so dass auch bei geringfügig unscharfen Objekten noch eine hinreichend genaue Information für die Tiefenkarte 38 erhalten werden kann. Die Abstandsinformationen, die in den Teilinformationen $38_1$ bis $38_5$ enthalten sind, können von der Steuereinrichtung zur Tiefenkarte 38 kombiniert werden. Die Tiefenkarte 38 kann verwendet werden, um die Einzelbilder $64_1$ und $64_2$ aus den unterschiedlichen Fokuslagen $56_1$ bis $56_5$ zu einer korrespondierenden Anzahl von Gesamtbildern $42_1$ bis $42_5$ zu kombinieren.

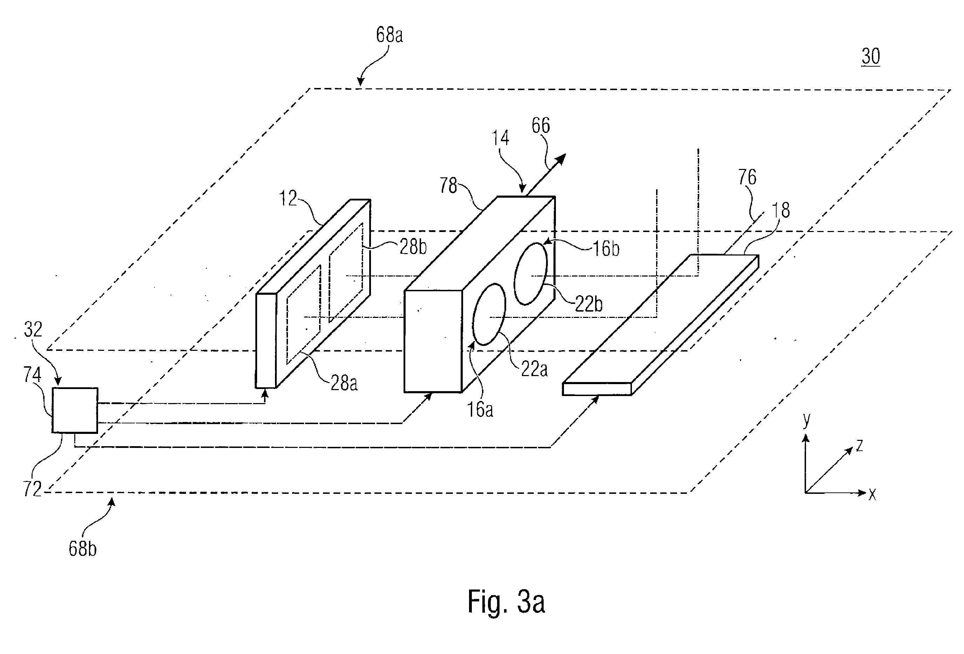

Fig. 3a zeigt eine schematische perspektivische Ansicht einer Vorrichtung 30 gemäß einem Ausführungsbeispiel. Der Bildsensor 12, das Array 14 und die Strahlumlenkeinrichtung 18 können einen Quader im Raum aufspannen. Der Quader kann auch als virtueller Quader verstanden werden und kann beispielsweise ein minimales Volumen und insbesondere eine minimale senkrechte Ausdehnung entlang einer Richtung parallel zu einer Dickenrichtung y aufweisen, die parallel zu einer Zeilenerstreckungsrichtung 66 ist. Die Zeilenerstreckungsrichtung 66 verläuft beispielsweise entlang einer z-Richtung und senkrecht zu einer x-Richtung, die parallel zu einem Verlauf der Strahlengänge zwischen dem Bildsensor 12 und dem Array 14 angeordnet ist. Die Richtungen x, y und z können ein kartesisches Koordinatensystem aufspannen. Das minimale Volumen des virtuellen Quaders bzw. die minimale senkrechte Ausdehnung desselben kann so geartet sein, dass der virtuelle Quader trotzdem den Bildsensor 12, das Array 14 und die Strahlumlenkeinrichtung 18 umfasst. Das minimale Volumen kann auch so verstanden werden, dass es einen Quader beschreibt, der durch die Anordnung und/oder betriebsgemäße Bewegung des Bildsensors 12, des Arrays 14 und/oder der Strahlumlenkeinrichtung 18 aufgespannt wird. Die Zeilenerstreckungsrichtung 66 kann dabei so angeordnet sein, dass entlang der Zeilenerstreckungsrichtung 66 die optischen Kanäle 16a und 16b nebeneinander, gegebenenfalls parallel zueinander, angeordnet sind. Die Zeilenerstreckungsrichtung 66 kann dabei ortsfest im Raum angeordnet sein.

Der virtuelle Quader kann zwei Seiten aufweisen, die gegenüberliegend parallel zueinander, parallel zu der Zeilenerstreckungsrichtung 66 des Arrays 14 sowie parallel zu einem Teil des Strahlengangs der optischen Kanäle 16a und 16b zwischen dem Bildsensor 12 und der Strahlumlenkeinrichtung 18 angeordnet sind. Vereinfacht, jedoch ohne einschränkende Wirkung, können dies beispielsweise eine Oberseite und eine Unterseite des virtuellen Quaders sein. Die zwei Seiten können eine erste Ebene 68a und eine zweite Ebene 68b aufspannen. Das heißt, die beiden Seiten des Quaders können jeweils Teil der Ebene 68a bzw. 68b sein. Weitere Komponenten der Multiaperturabbildungsvorrichtung können vollständig, zumindest aber teilweise innerhalb des Bereichs zwischen den Ebenen 68a und 68b angeordnet sein, so dass ein Bauraumbedarf der Multiaperturabbildungsvorrichtung entlang der y-Richtung, die parallel zu einer Oberflächennormalen der Ebenen 68a und/oder 68b ist, gering sein kann, was vorteilhaft ist. Ein Volumen der Multiaperturabbildungsvorrichtung kann einen geringen oder minimalen Bauraum zwischen den Ebenen 68a und 68b aufweisen. Entlang der lateralen Seiten oder Erstreckungsrichtungen der Ebenen 68a und/oder 68b kann ein Bauraum der Multiaperturabbildungsvorrichtung groß oder beliebig groß sein. Das Volumen des virtuellen Quaders ist beispielsweise von einer Anordnung des Bildsensors 12, des Arrays 14 und der Strahlumlenkeinrichtung 18 beeinflusst, wobei die Anordnung dieser Komponenten gemäß der hierin beschriebenen Ausführungsbeispiele so erfolgen kann, dass der Bauraum dieser Komponenten entlang der Richtung senkrecht zu den Ebenen und mithin der Abstand der Ebenen 68a und 68b zueinander gering oder minimal wird. Gegenüber anderen Anordnungen der Komponenten kann das Volumen und/oder der Abstand andere Seiten des virtuellen Quaders vergrößert sein.

Die Vorrichtung 30 umfasst einen Aktor 72 zum Erzeugen einer Relativbewegung zwischen dem Bildsensor 12, dem einzeiligen Array 14 und der Strahlumlenkeinrichtung 18. Dies kann beispielsweise eine Stellbewegung der Strahlumlenkeinrichtung 18 zum Umschalten zwischen den im Zusammenhang mit der Fig. 1b beschriebenen Positionen umfassen. Alternativ oder zusätzlich kann der Aktor 72 ausgebildet sein, um die im Zusammenhang mit der Fig. 1a erläuterte Relativbewegung zum Verändern der relativen Position zwischen dem Bildsensor 12 und dem Array 14 auszuführen. Der Aktor 72 ist zumindest teilweise zwischen den Ebenen 68a und 68b angeordnet. Der Aktor 72 kann ausgebildet sein, um zumindest eines aus dem Bildsensor 12, dem einzeiligen Array 14 und der Strahlumlenkeinrichtung 18 zu bewegen, wobei dies rotatorische und/oder translatorische Bewegungen entlang einer oder mehrerer Richtungen umfassen kann. Beispiele hierfür sind eine kanalindividuelle Änderung einer relativen Lage zwischen Bildsensorbereichen 28 eines jeweiligen optischen Kanals 16, der Optik 22 des jeweiligen optischen Kanals 16 und der Strahlumlenkeinrichtung 18 bzw. des entsprechenden Segments oder der entsprechenden Facette und/oder zum kanalindividuellen Ändern einer optischen Eigenschaft des die Umlenkung des Strahlengangs des jeweiligen optischen Kanals betreffenden Segments/Facette. Alternativ oder zusätzlich kann der Aktor 72 einen Autofokus und/oder eine optische Bildstabilisierung zumindest teilweise implementieren.

Der Aktor 72 kann Teil der Fokussiereinrichtung 32 sein und ausgebildet sein, um eine Relativbewegung zwischen zumindest einer Optik zumindest eines der optischen Kanäle 16a und 16b und dem Bildsensor 12 bereitzustellen. Die Relativbewegung zwischen der Optik 22a und/oder 22b und dem Bildsensor 12 kann von der Fokussiereinrichtung 32 so gesteuert werden, dass die Strahlumlenkeinrichtung 18 eine simultane Bewegung ausführt. Bei einem Verringern eines Abstands zwischen der Optik 22a und/oder 22b und dem Bildsensor kann der Abstand zwischen der Strahlumlenkeinrichtung 18 und dem Bildsensor 12 entsprechend verringert werden, so dass ein Relativabstand zwischen dem Array 14 bzw. der Optik 22a und/oder 22b und der Strahlumlenkeinrichtung 18 im Wesentlichen gleichbleibend ist. Dies ermöglicht, dass die Strahlumlenkeinrichtung 18 mit kleinen Strahlumlenkflächen ausgestaltet werden kann, da eine durch einen wachsenden Abstand zwischen dem Array 14 und der Strahlumlenkeinrichtung 18 wachsender Strahlenkegel durch die Beibehaltung des Abstands zur Strahlumlenkeinrichtung 18 kompensiert werden kann.

Die Fokussiereinrichtung 32 und/oder der Aktor 72 sind so angeordnet, dass sie um höchstens 50% aus dem Bereich zwischen den Ebenen 68a und 68b herausragen. Der Aktor 72 kann eine Abmessung oder Ausdehnung 74 parallel zu der Dickenrichtung y aufweisen. Ein Anteil von höchstens 50%, höchstens 30% oder höchstens 10% der Abmessung 74 kann ausgehend von einem Bereich zwischen den Ebenen 68a und 68b über die Ebene 68a und/oder 68b hinausragen und somit aus dem virtuellen Quader herausragen. Das bedeutet, dass der Aktor 72 höchstens unwesentlich über die Ebene 68a und/oder 68b hinausragt. Gemäß Ausführungsbeispielen ragt der Aktor 72 nicht über die Ebenen 68a und 68b hinaus. Vorteilhaft daran ist, dass eine Ausdehnung der Multiaperturabbildungsvorrichtung entlang der Dickenrichtung y durch den Aktor 72 nicht vergrößert wird.

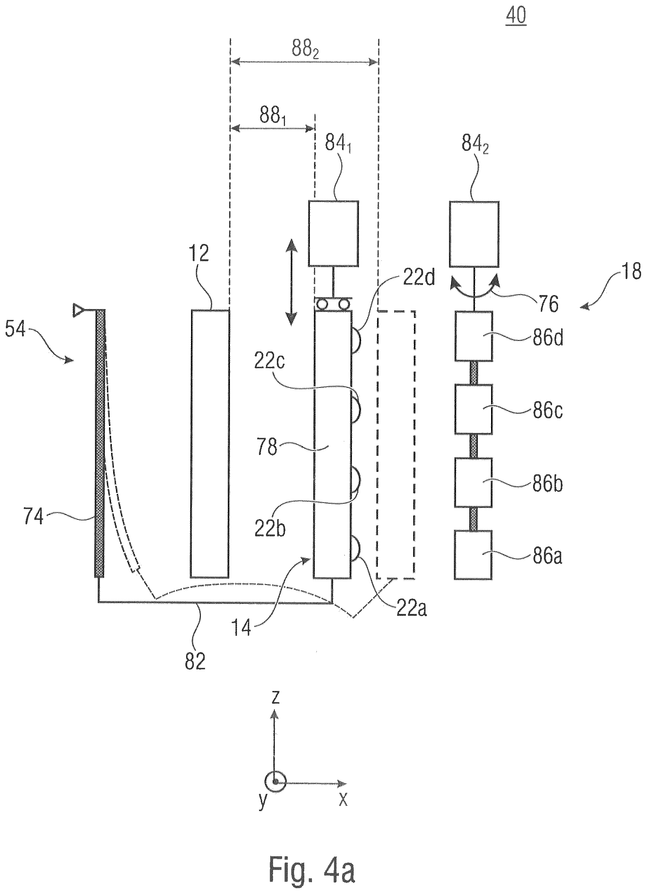

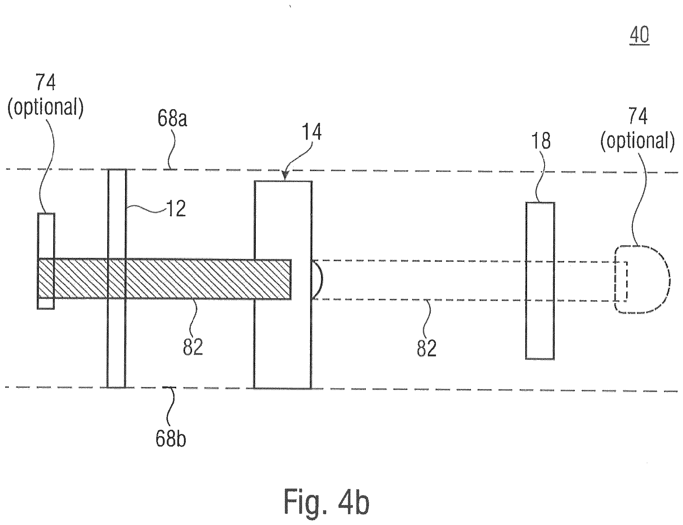

Obwohl die Strahlumlenkeinrichtung 18 so dargestellt ist, dass sie um eine Rotationsachse 76 rotatorisch gelagert ist, kann der Aktor 72 alternativ oder zusätzlich auch eine translatorische Bewegung entlang einer oder mehrerer Raumrichtungen erzeugen. Der Aktor 72 kann einen oder mehrere Einzelaktoren umfassen, möglicherweise, um verschiedene Einzelbewegungen einzeln ansteuerbar zu erzeugen. Der Aktor 72 oder zumindest ein Einzelaktor hiervon kann bspw. als ein im Zusammenhang mit Fig. 4 näher beschriebener Piezoaktor, insbesondere ein piezoelektrischer Biegeaktor, implementiert sein oder diesen umfassen. Ein Piezobieger ermöglicht eine schnelle und reproduzierbare Positionsänderung. Diese Eigenschaft erlaubt vorteilhaft die Aufnahme von Fokusstacks im Sinne mehrerer oder vieler Abbildungen in kurzer Zeit. Piezobieger als entlang einer Dimension oder Richtung lang ausgeführte Aktoren sind insbesondere in der beschriebenen Architektur vorteilhaft einsetzbar, da sie einen dafür vorteilhaften Formfaktor aufweisen, also ein Ausdehnung besonders in einer Richtung.

Das Array 14 kann ein Substrat 78 umfassen, an dem die Optiken 22a und 22b befestigt oder angeordnet sind. Das Substrat 78 kann durch Aussparungen oder geeignete Materialwahl für die Strahlengänge der optischen Kanäle 16a und 16b zumindest teilweise transparent sein, wobei dies nicht ausschließt, dass beispielsweise durch Anordnung von Filterstrukturen oder dergleichen auch Manipulationen in den optischen Kanälen ausgeführt werden.

Mehrere Anforderungen an den Aktor 72, darunter eine schnelle Justierbarkeit zum schnellen Einstellen der unterschiedlichen Fokuslagen 56, eine hohe Kraft bei geringem Bauraumbedarf und dergleichen kann durch die Verwendung von piezoelektrischen Aktoren erhalten werden.

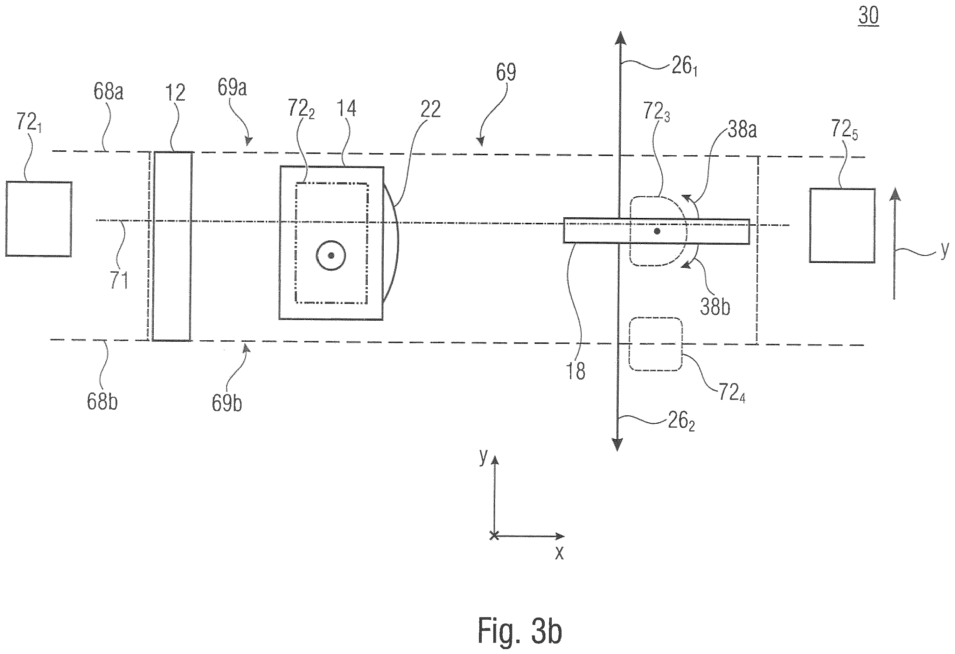

Fig. 3b zeigt eine schematische Seitenschnittansicht der Vorrichtung 30 gemäß einem Ausführungsbeispiel. Die Multiaperturabbildungsvorrichtung der Vorrichtung 30 kann bspw. eine Mehrzahl von Aktoren aufweisen, bspw. mehr als einen, mehr als zwei oder eine andere Anzahl >0. Bspw. können Aktoren $72_1$ bis $72_5$ angeordnet sein, die für unterschiedliche Zwecke einsetzbar sind, etwa zur Anpassung der Fokuslage und/oder Veränderung der Lage oder Position der Strahlumlenkeinrichtung 18 zum Einstellen der Blickrichtung der Multiaperturabbildungsvorrichtung und/oder zum Bereitstellen einer optischen Bildstabilisierung durch rotatorische Bewegung der Strahlumlenkeinrichtung 18 und/oder translatorische Bewegung des Arrays 14.

Die Aktoren $72_1$ bis $72_5$ können so angeordnet ein, dass sie zumindest teilweise zwischen den zwei Ebenen 68a und 68b angeordnet sind, die durch Seiten 69a und 69b des virtuellen Quaders 69 aufgespannt werden. Die Seiten 69a und 69b des Quaders 69 können parallel zueinander sowie parallel zu der Zeilenerstreckungsrichtung des Arrays und eines Teils des Strahlengangs der optischen Kanäle zwischen dem Bildsensor 12 und der Strahlumlenkeinrichtung 18 parallel ausgerichtet sein. Das Volumen des Quaders 69 ist minimal und umfasst dennoch den Bildsensor 12, das Array 14 und die Strahlumlenkeinrichtung 18 sowie deren betriebsbedingte Bewegungen. Optische Kanäle des Arrays 14 weisen eine Optik 22 auf, die für jeden optischen Kanal gleich oder verschieden von einander gebildet sein kann.

Ein Volumen der Multiaperturabbildungsvorrichtung kann einen geringen oder minimalen Bauraum zwischen den Ebenen 68a und 68b aufweisen. Entlang der lateralen Seiten oder Erstreckungsrichtungen der Ebenen 68a und/oder 68b kann ein Bauraum der Multiaperturabbildungsvorrichtung groß oder beliebig groß sein. Das Volumen des virtuellen Quaders ist bspw. von einer Anordnung des Bildsensors 12, des einzeiligen Arrays 14 und der Strahlumlenkeinrichtung beeinflusst, wobei die Anordnung dieser Komponenten gemäß der hierin beschriebenen Ausführungsbeispiele so erfolgen kann, dass der Bauraum dieser Komponenten entlang der Richtung senkrecht zu den Ebenen und mithin der Abstand der Ebenen 68a und 68b zueinander gering oder minimal wird. Gegenüber anderen Anordnungen der Komponenten kann das Volumen und/oder der Abstand anderer Seiten des virtuellen Quaders vergrößert sein.

Durch gepunktete Linien ist der virtueller Quader 69 dargestellt. Die Ebenen 68a und 68b können zwei Seiten des virtuellen Quaders 69 umfassen oder dadurch aufgespannt sein. Eine Dickenrichtung y der Multiaperturabbildungsvorrichtung kann normal zu den Ebenen 68a und/oder 68b und/oder parallel zu der y-Richtung angeordnet sein.

Der Bildsensor 12, das Array 14 und die Strahlumlenkeinrichtung 18 können so angeordnet sein, dass ein senkrechter Abstand zwischen den Ebenen 68a und 68b entlang der Dickenrichtung y, der vereinfachend jedoch ohne einschränkende Wirkung als Höhe des Quaders bezeichnet werden kann, minimal ist, wobei auf eine Minimierung des Volumens, das bedeutet der anderen Abmessungen des Quaders verzichtet werden kann. Eine Ausdehnung des Quaders 69 entlang der Richtung y kann minimal und im Wesentlichen durch die Ausdehnung der optischen Komponenten der Abbildungskanäle, d. h., des Arrays 14, des Bildsensors 12 und der Strahlumlenkeinrichtung 18 entlang der Richtung y vorgegeben sein.

Ein Volumen der Multiaperturabbildungsvorrichtung kann einen geringen oder minimalen Bauraum zwischen den Ebenen 68a und 68b aufweisen. Entlang der lateralen Seiten oder Erstreckungsrichtungen der Ebenen 68a und/oder 68b kann ein Bauraum der Multiaperturabbildungsvorrichtung groß oder beliebig groß sein. Das Volumen des virtuellen Quaders ist bspw. von einer Anordnung des Bildsensors 12, des einzeiligen Arrays 14 und der Strahlumlenkeinrichtung beeinflusst, wobei die Anordnung dieser Komponenten gemäß der hierin beschriebenen Ausführungsbeispiele so erfolgen kann, dass der Bauraum dieser Komponenten entlang der Richtung senkrecht zu den Ebenen und mithin der Abstand der Ebenen 68a und 68b zueinander gering oder minimal wird. Gegenüber anderen Anordnungen der Komponenten kann das Volumen und/oder der Abstand anderer Seiten des virtuellen Quaders vergrößert sein.

Die Aktoren $72_1$ bis $72_5$ können jeweils eine Abmessung oder Ausdehnung parallel zu der Richtung y aufweisen. Ein Anteil von höchstens 50 %, höchstens 30 % oder höchstens 10 % der Abmessung des jeweiligen Aktors $72_1$ bis $72_5$ kann ausgehend von einem Bereich zwischen den beiden Ebenen 68a und 68b über die Ebene 68a und/oder 68b hinausragen oder aus dem Bereich herausragen. Das bedeutet, dass die Aktoren $72_1$ bis $72_5$ höchstens unwesentlich über die Ebene 68a und/oder 68b hinausragen. Gemäß Ausführungsbeispielen ragen die Aktoren nicht über die Ebenen 68a und 68b hinaus. Vorteilhaft daran ist, dass eine Ausdehnung der Multiaperturabbildungsvorrichtung entlang der Dickenrichtung bzw. Richtung y durch die Aktoren nicht vergrößert wird.

Obwohl hier verwendete Begriffe wie oben, unten, links, rechts, vorne oder hinten zur besseren Anschaulichkeit verwendet werden, sollen diese keinerlei einschränkende Wirkung entfalten. Es versteht sich, dass basierend auf einer Drehung oder Verkippung im Raum diese Begriffe wechselseitig vertauschbar sind. Beispielsweise kann die x-Richtung von dem Bildsensor 12 ausgehend hin zu der Strahlumlenkeinrichtung 18 als vorne oder vorwärts verstanden werden. Eine positive y-Richtung kann beispielsweise als oben verstanden werden. Ein Bereich entlang der positiven oder negativen z-Richtung abseits oder beabstandet des Bildsensors 12, des Arrays 14 und/oder der Strahlumlenkeinrichtung 18 kann als neben der jeweiligen Komponente verstanden werden. Vereinfacht ausgedrückt kann ein Bildstabilisator zumindest einen der Aktoren $72_1$ bis $72_5$. Der zumindest eine kann in einer Ebene 71 bzw. zwischen den Ebenen 68a und 68b angeordnet sein.

In anderen Worten können die Aktoren $72_1$ bis $72_5$ vor, hinter oder neben dem Bildsensor 12, dem Array 14 und/oder der Strahlumlenkeinrichtung 18 angeordnet sein. Gemäß Ausführungsbeispielen sind die Aktoren 36 und 42 mit einem maximalen Umfang von 50 %, 30 % oder 10 % außerhalb des Bereichs zwischen den Ebenen 68a und 68b angeordnet.

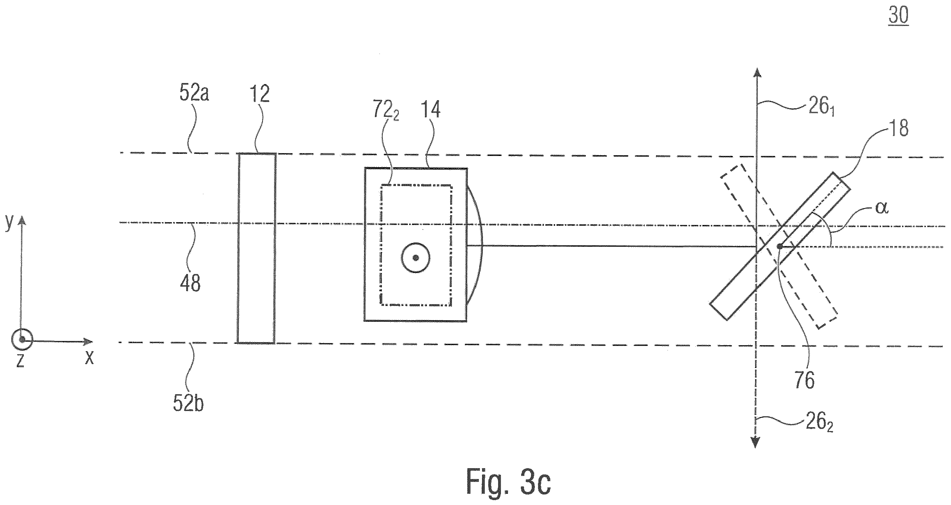

Fig. 3c zeigt eine schematische Seitenschnittansicht der Multiaperturabbildungsvorrichtung wobei basierend auf unterschiedlichen Stellungen der Strahlumlenkeinrichtung 18 unterschiedliche Gesamtgesichtsfelder $26_1$ und $26_2$ erfassbar sind, da die Multiaperturabbildungsvorrichtung dann verschiedene Blickrichtungen aufweist. Die Multiaperturabbildungsvorrichtung kann ausgebildet sein, um eine Verkippung der Strahlumlenkeinrichtung um eine Winkel $\alpha$ zu verändern, so dass wechselweise unterschiedliche Hauptseiten der Strahlumlenkeinrichtung 18 dem Array 14 zugewandt angeordnet sind. Die Multiaperturabbildungsvorrichtung kann einen Aktor umfassen, der ausgebildet ist, um die Strahlumlenkeinrichtung 18 um die Rotationsachse 76 zu verkippen. Beispielsweise kann der Aktor ausgebildet sein, um die Strahlumlenkeinrichtung 18 in eine erste Stellung zu bewegen, in der die Strahlumlenkeinrichtung 18 den Strahlengang 26 der optischen Kanäle des Arrays 14 in die positive y-Richtung umlenkt. Hierfür kann die Strahlumlenkeinrichtung 18 in der ersten Position, beispielsweise einen Winkel $\alpha$ von > 0° und < 90°, von zumindest 10° und höchstens 80° oder von zumindest 30° und höchstens 50°, beispielsweise 45° aufweisen. Der Aktor kann ausgebildet sein, um die Strahlumlenkeinrichtung in einer zweiten Stellung so um die Rotationsachse 76 auszulenken, dass die Strahlumlenkeinrichtung 18 den Strahlengang der optischen Kanäle des Arrays 14 hin zu der negativen y-Richtung umlenkt, wie es durch die Blickrichtung zum Gesamtgesichtsfeld $26_2$ und die gestrichelte Darstellung der Strahlumlenkeinrichtung 18 dargestellt ist. Beispielsweise kann die Strahlumlenkeinrichtung 18 beidseitig reflektierend ausgebildet sein, so dass in der ersten Stellung die Blickrichtung hin zum Gesamtgesichtsfeld $26_1$ weist.

Fig. 4a zeigt eine schematische Aufsicht auf eine Vorrichtung 40 gemäß einem Ausführungsbeispiel, bei der der Aktor 72 als piezoelektrischer Biegeaktor gebildet ist. Der Aktor 72 ist ausgebildet, um eine Biegung in der x/z-Ebene auszuführen, wie es durch die gestrichelten Linien dargestellt ist. Der Aktor 72 ist über eine mechanische Umlenkeinrichtung 82 mit dem Array 14 verbunden, so dass bei einer Biegung des Aktors 72 eine laterale Verschiebung des Arrays 14 entlang der x-Richtung erfolgen kann, so dass die Fokuslage verändert werden kann. Beispielsweise kann der Aktor 72 mit dem Substrat 78 verbunden sein. Alternativ kann der Aktor 72 auch an einem Gehäuse, das zumindest einen Teil der Optiken 22a bis 22d haust, angeordnet sein, um das Gehäuse zu bewegen. Andere Varianten sind ebenfalls möglich.

Optional kann die Vorrichtung 40 weitere Aktoren $84_1$ und $84_2$ aufweisen, die konfiguriert sind, um eine Bewegung an dem Array 14 und/oder der Strahlumlenkeinrichtung 18 zu erzeugen, etwa zum Stellen der Strahlumlenkeinrichtung 18 in unterschiedliche Positionen oder Stellungen und/oder zur optischen Bildstabilisierung durch translatorisches Verschieben des Arrays 14 entlang der z-Richtung und/oder durch Erzeugen einer Rotationsbewegung der Strahlumlenkeinrichtung 18 um die Rotationsachse 76.

Anders als in den vorangehenden Figuren beschrieben, kann die Strahlumlenkeinrichtung 18 mehrere voneinander beabstandete aber gemeinsame bewegliche Facetten 86a bis 86d aufweisen, wobei jeder optische Kanal einer Facette 86a bis 86d zugeordnet ist. Die Facetten 86a bis 86d können auch direkt benachbart, d. h. mit geringem oder keinem Abstand zueinander angeordnet sein. Alternativ kann auch ein ebener Spiegel angeordnet sein.

Durch Aktuierung des Aktors 72 kann ein Abstand $88_1$ zwischen zumindest einer der Optiken 22a-d und dem Bildsensor 12 von einem ersten Wert $88_1$ hin zu einem zweiten Wert $88_2$ verändert werden, beispielsweise vergrößert oder verkleinert.

Fig. 4b zeigt eine schematische Seitenschnittansicht der Vorrichtung 40 zur Verdeutlichung der Anordnung des Aktuators 72 zwischen den Ebenen 68a und 68b, die im Zusammenhang mit der Fig. 3a beschrieben sind. Der Aktor 72 ist beispielsweise vollständig zwischen den Ebenen 68a und 68b angeordnet, ebenso wie die mechanische Umlenkeinrichtung 82, die mehrere kraftübertragende Elemente, beispielsweise Verbindungsstege, Drähte. Seile oder dergleichen und mechanische Lager oder Umlenkelemente aufweisen kann.

Die mechanische Umlenkeinrichtung bzw. mechanische Einrichtung zum Übertragen der Bewegung an das Array 14 kann dabei an einer Seite des Bildsensors 12 angeordnet sein, die dem Array 14 abgewandt ist, d. h, ausgehend von dem Array 14 hinter dem Bildsensor 12. Die mechanische Einrichtung 82 kann dabei so angeordnet sein, dass ein Kraftfluss lateral an dem Bildsensor 12 vorbeiläuft. Alternativ oder zusätzlich kann der Aktor 72 oder ein anderer Aktor an einer dem Array 14 abgewandten Seite der Strahlumlenkeinrichtung 18 angeordnet sein, d. h., ausgehend von dem Array 14 hinter der Strahlumlenkeinrichtung 18. Die mechanische Einrichtung 82 kann so angeordnet sein, dass ein Kraftfluss lateral an der Strahlumlenkeinrichtung 18 vorbeiläuft.

Obwohl lediglich ein Aktor 72 dargestellt ist, kann auch eine höhere Anzahl von Aktoren angeordnet werden und/oder mehr als eine Seite des Aktors 72 mit einer mechanischen Umlenkeinrichtung 82 verbunden sein. So kann beispielsweise ein mittig gelagerter oder abgestützter Aktor 72 zweiseitig mit jeweils einer mechanischen Umlenkeinrichtung 82 verbunden sein und beispielsweise an beiden Seiten des Arrays 14 angreifen, um eine homogene Bewegung zu ermöglichen.

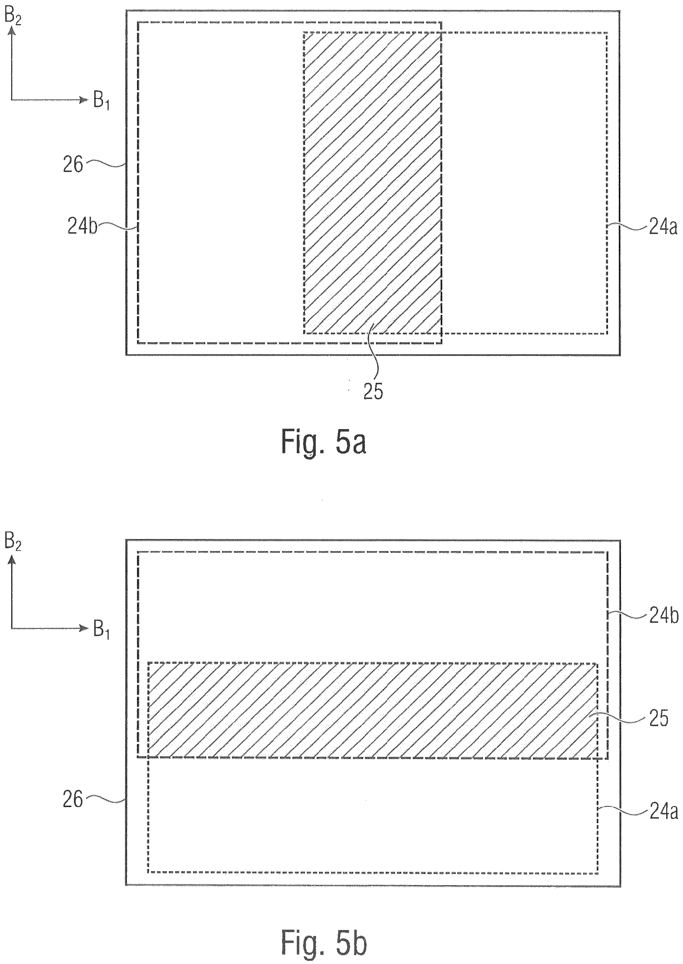

Fig. 5a zeigt eine schematische Darstellung einer Anordnung von Teilgesichtsfeldern 24a und 24b in einem Gesamtgesichtsfeld 26, das beispielsweise durch eine hierin beschriebene Multiaperturabbildungsvorrichtung, etwa die Multiaperturabbildungsvorrichtung $10_1$, $10_2$, $10_2$, 30 und/oder 40 erfassbar ist und bspw. dem Gesamtgesichtsfeld $26_1$ und/oder $26_2$ entsprechen kann. Beispielsweise kann das Gesamtgesichtsfeld 26 mit dem optischen Kanal 16b auf dem Bildsensorbereich 28b abgebildet werden. Beispielsweise kann der optische Kanal 16a konfiguriert sein, um das Teilgesichtsfeld 24a zu erfassen und auf den Bildsensorbereich 28a abzubilden. Ein anderer optischer Kanal, etwa der optische Kanal 16c kann ausgebildet sein, um das Teilgesichtsfeld 24b zu erfassen und auf dem Bildsensorbereich 28c abzubilden. Das bedeutet, dass eine Gruppe von optischen Kanälen ausgebildet sein kann, um genau zwei Teilgesichtsfelder 24a und 24b zu erfassen. Es kann somit eine zeitgleiche Erfassung des Gesamtgesichtsfeldes und der Teilgesichtsfelder, die gemeinsam wiederrum das Gesamtgesichtsfeld 26 abbilden, erfolgen.

Obwohl zur besseren Unterscheidbarkeit mit unterschiedlicher Ausdehnung dargestellt, können die Teilgesichtsfelder 24a und 24b entlang zumindest einer Bildrichtung $B_1$ oder $B_2$ eine gleiche oder vergleichbare Ausdehnung aufweisen, etwa entlang der Bildrichtung $B_2$. Die Ausdehnung der Teilgesichtsfelder 24a und 24b kann identisch zu der Ausdehnung des Gesamtgesichtsfelds 26 entlang der Bildrichtung $B_2$ sein. Das bedeutet, die Teilgesichtsfelder 24a und 24b können das Gesamtgesichtsfeld 26 entlang der Bildrichtung $B_2$ vollständig erfassen oder aufnehmen und entlang einer anderen senkrecht hierzu angeordneten Bildrichtung $B_1$ das Gesamtgesichtsfeld nur teilweise erfassen oder aufnehmen und versetzt zueinander angeordnet sein, so dass sich kombinatorisch auch entlang der zweiten Richtung eine vollständige Erfassung des Gesamtgesichtsfeldes 26 ergibt. Hierbei können die Teilgesichtsfelder 24a und 24b disjunkt zueinander sein oder höchstens unvollständig in einem Überlappbereich 25, der sich entlang der Bildrichtung $B_2$ in dem Gesamtgesichtsfeld 26 möglicherweise vollständig erstreckt, miteinander überlappen. Eine Gruppe von optischen Kanälen umfassend die optischen Kanäle 16a und 16c kann ausgebildet sein, um zusammengenommen das Gesamtgesichtsfeld 26 vollständig abzubilden, etwa durch eine Gesamtaufnahme in Kombination mit Teilaufnahmen, die zusammengenommen das Gesamtgesichtsfeld abbilden. Die Bildrichtung $B_1$ kann beispielsweise eine Horizontale eines bereitzustellenden Bilds sein. Vereinfacht stellen die Bildrichtungen $B_1$ und $B_2$ zwei beliebig im Raum stehende unterschiedliche Bildrichtungen dar.

Fig. 5b zeigt eine schematische Darstellung einer Anordnung der Teilgesichtsfelder 24a und 24b, die entlang einer anderen Bildrichtung, der Bildrichtung $B_2$, versetzt zueinander angeordnet sind und sich gegenseitig überlappen. Die Teilgesichtsfelder 24a und 24b können das Gesamtgesichtsfeld 26 entlang der Bildrichtung $B_1$ jeweils vollständig und entlang der Bildrichtung $B_2$ unvollständig erfassen. Der Überlappbereich 25 ist beispielsweise vollständig in dem Gesamtgesichtsbereich 26 entlang der Bildrichtung $B_1$ angeordnet.

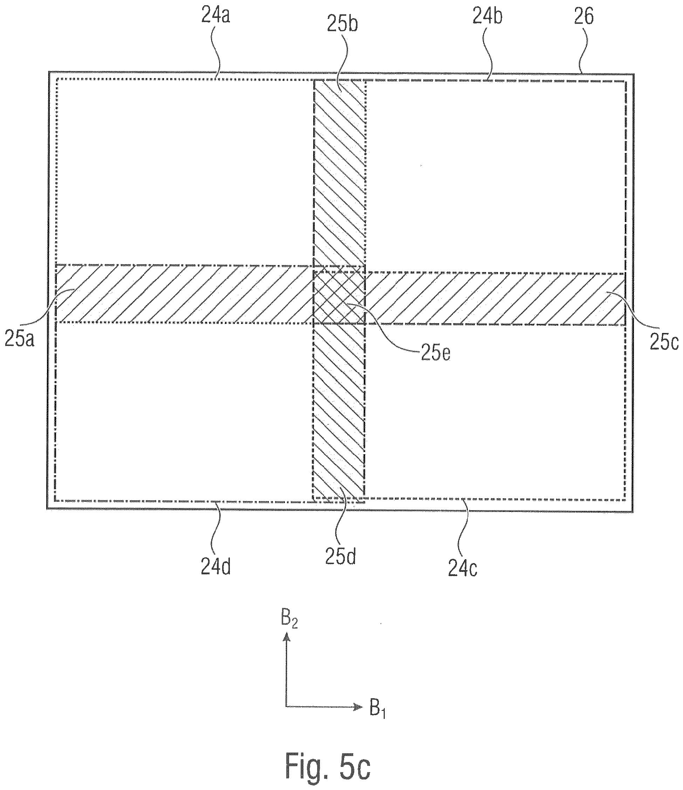

Fig. 5c zeigt eine schematische Darstellung von vier Teilgesichtsfeldern 24a bis 24b, die das Gesamtgesichtsfeld 26 in jeweils beiden Richtungen $B_1$ und $B_2$ unvollständig erfassen. Zwei benachbarte Teilgesichtsfelder 24a und 24b überlappen sich in einem Überlappungsbereich 25b. Zwei überlappende Teilgesichtsfelder 24b und 24c überlappen sich in einem Überlappungsbereich 25c. In ähnlicher Weise überlappen sich Teilgesichtsfelder 24c und 24d in einem Überlappungsbereich 25d und das Teilgesichtsfelder 24d mit dem Teilgesichtsfelder 24a in einem Überlappbereich 25a. Alle vier Teilgesichtsfelder 24a bis 24d können sich in einem Überlappbereich 25e des Gesamtgesichtsfelds 26 überlappen.

Zur Erfassung des Gesamtgesichtsfelds 26 und der Teilgesichtsfelder 24a-d kann eine Multiaperturabbildungsvorrichtung ähnlich wie im Zusammenhang mit Fig. 1a-c beschrieben ausgebildet sein, wobei das Array 14 beispielsweise fünf Optiken aufweisen kann, vier zur Erfassung von Teilgesichtsfeldern 24a-d und eine Optik zur Erfassung des Gesamtgesichtsfelds 26. Entsprechend kann das Array im Zusammenhang mit den Fig. 5a-b mit drei optischen Kanälen ausgeführt sein.

In den Überlappbereichen 25a bis 25e steht eine hohe Anzahl von Bildinformationen zur Verfügung. So wird beispielsweise der Überlappbereich 25b über das Gesamtgesichtsfeld 26, das Teilgesichtsfeld 24a und das Teilgesichtsfeld 24b erfasst. Ein Bildformat des Gesamtgesichtsfelds kann einer redundanzfreien Kombination der abgebildeten Teilgesichtsfelder entsprechen, beispielsweise der Teilgesichtsfelder 24a-d in Fig. 5c, wobei die Überlappbereiche 25a-e jeweils nur einfach gezählt werden. Im Zusammenhang mit den Fig. 5a und 5b gilt dies für die redundanzfreie Kombination der Teilgesichtsfelder 24a und 24b.

Ein Überlapp in den Überlappbereichen 25 und/oder 25a-e kann bspw. höchstens 50 %, höchstens 35 % oder höchstens 20 % der jeweiligen Teilbilder umfassen.

In anderen Worten kann gemäß hierin beschriebener Ausführungsbeispiele eine Reduktion der Zahl der optischen Kanäle erhalten werden, was eine Kosteneinsparung ermöglicht und eine Verringerung der lateralen Bauraumbeanspruchung ermöglicht. Gemäß hierin beschriebener Ausführungsbeispiele wird eine zu einer stereoskopen Erfassung alternative Form der Tiefeninformationsgewinnung ermöglicht, die ohne entsprechende zusätzliche Sensoren wie Time of Flight (Lichtlaufzeitmessung), Structured or Coded Light (strukturiertes oder kodiertes Licht) und dergleichen auskommen. Time of Flight-Sensoren, die eine geringe Auflösung ermöglichen, sowie Structured Light-Sensoren, die einen hohen Energiebedarf aufweisen, können somit vermieden werden. Beide Ansätze haben weiterhin Probleme bei starker Umgebungsbeleuchtung, insbesondere Sonnenlicht. Ausführungsbeispiele sehen vor, dass die entsprechende Vorrichtung ohne derartige Sensoren ausgeführt ist. Gemäß einem Ausführungsbeispiel dient ein Piezobieger als extrem schneller Fokus-Faktor mit geringer Leistungsaufnahme. Die beschriebene Architektur der Multiaperturabbildungsvorrichtung ermöglicht die Verwendung solcher Piezobieger, da ein sonst kubischer Formfaktor des Kameramoduls den Einsatz von langen Piezobiegern erschwert oder gar ausschließt. Bei kurzer Belichtungszeit erlaubt dies die Aufnahme von Fokus-Stacks, d. h., zahlreiche schnell nacheinander aufgenommene Bilder mit leicht unterschiedlicher Fokussierung der Szene. Ausführungsbeispiele sehen vor, dass die gesamte Tiefe der Szene sinnvoll abgetastet wird, etwa von Makro, die nähest mögliche Aufnahme, bis unendlich, das bedeutet, die weitest mögliche Entfernung. Die Abstände können äquidistant im Objektraum, bevorzugt aber im Bildraum angeordnet sein. Alternativ kann auch ein anderer sinnvoller Abstand gewählt werden. Eine Anzahl der Fokuslagen beträgt beispielsweise zumindest zwei, zumindest drei, zumindest fünf, zumindest zehn, zumindest 20 oder eine andere beliebige Anzahl.

Andere Ausführungsbeispiele sehen dahingegen vor, eine Beleuchtungsquelle vorzusehen, die ausgebildet ist, um ein Beleuchtungssignal in einem für das menschliche Auge nicht sichtbaren Wellenlängenbereich, also mit Wellenlängen von weniger als in etwa 380 nm und/oder mehr als in etwa 700 nm, bevorzugt einem Infrarotbereich von zumindest 0,7 $\mu m$ und höchstens 1.000 $\mu m$ Wellenlänge, und besonders bevorzugt einem Nah-Infrarotbereich von zumindest 0,75 $\mu m$ und höchstens 3 $\mu m$ Wellenlänge, in Richtung des zu erfassenden Gesamtgesichtsfeldes auszusenden. Die Multiaperturabbildungsvorrichtung kann ausgebildet ist, um das Gesamtgesichtsfeld in dem verwendeten nicht sichtbaren Wellenlängenbereich abzubilden. Hierzu kann insbesondere der Bildsensor auf die von der Beleuchtungsquelle verwendete Wellenlänge angepasst sein.

Dem Benutzer können mehrere Bilder 42 dargestellt werden. Alternativ oder zusätzlich sehen Ausführungsbeispiele vor, die einzelnen Bildinformationen zu kombinieren, so dass dem Benutzer ein Bild bereitgestellt werden kann, das eine kombinierte Bildinformation aufweist. Beispielsweise ein Bild mit Tiefeninformation, was beispielsweise die Möglichkeit zu einer digitalen Neufokussierung bietet. Das dargestellte Bild kann einen sogenannten Bokeh-Effekt, eine Unscharfstellung, bieten. Alternativ kann das Bild auch so dargestellt werden, dass das gesamte Bild künstlich scharf ist, das bedeutet, ein größerer Abstandsbereich als in den Einzelbildern von Teilbereichen ist scharfgestellt, beispielsweise das gesamte Bild. Bei geringer Blendenzahl der verwendeten Objektive kann sich aus der in dem Einzelbildern gemessene Schärfe bzw. Unschärfe und weiteren Informationen, etwa Schärfe der gleichen Objekte in benachbarten Bildern des Stacks, einer Zuordnung der Fokus-Aktuatorposition zu einem Objektabstand, etwa unter Nutzung einer kalibrierten Lookup-Tabelle, einer Richtung der Fokuslagenabfolge (engl.: Through-Focus-Scan) für sich aber auch rekursiv aus anderen Bildern, um Doppeldeutigkeiten zu vermeiden, der Objektabstand der einzelnen Elemente der Szene rekonstruieren und daraus eine Tiefenkarte in Bildauflösung erstellen.

Gemäß hierin beschriebener Ausführungsbeispiele wird erreicht, dass eine Duplizierung der Kanäle für eine Stereo-Abbildung entfallen kann und dennoch eine Tiefenkarte erstellt werden kann. Diese Tiefenkarte ermöglicht das Bildstitching der unterschiedlichen Teilbilder der Multiaperturabbildungsvorrichtung. Durch die beispielsweise Halbierung der Anzahl der optischen Kanäle kann eine deutliche Reduktion der lateralen Dimensionen, etwa entlang der Zahlenerstreckungsrichtung, erhalten werden und damit auch eine Preisreduktion erhalten werden. Die Bildverarbeitung kann durch andere Schritte mindestens ebenso gute Bilder liefern.

Die drei optischen Kanäle zum Erfassen beider Teilgesichtsfelder 24a und 24b sowie des Gesamtgesichtsfeldes 26 können in dem Array 14 entlang der Zeilenerstreckungsrichtung angeordnet sein. Die Zeilenerstreckungsrichtung kann beispielsweise parallel zu der Bildrichtung $B_1$ angeordnet sein, so dass die Teilgesichtsfelder des Gesamtgesichtsfeldes in einer Richtung parallel zu der Zeilenerstreckungsrichtung (Fig. 5a) des Arrays angeordnet sind oder senkrecht hierzu (Fig. 5b).

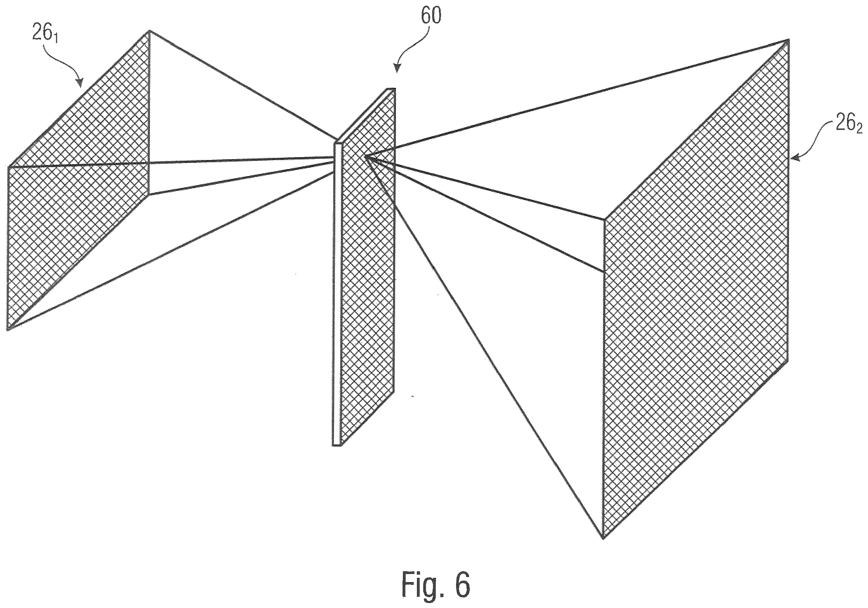

Fig. 6 zeigt eine schematische perspektivische Ansicht einer Vorrichtung 60 gemäß einem Ausführungsbeispiel. Die beschriebenen Ausführungen treffen ohne weiteres auch für die Vorrichtungen $10_1$, 10s, 30 und/oder 40 zu. Durch Steuern der Strahlumlenkeinrichtung in unterschiedliche Stellungen kann die Vorrichtung 60 bzw. die Multiaperturabbildungsvorrichtung der Vorrichtung 60 zwei voneinander beabstandete gesamte Gesichtsfelder $26_1$ und $26_2$ erfassen.

Die Vorrichtung 60 ist beispielsweise als portable oder mobile Vorrichtung gebildet, insbesondere ein Tablet-Computer oder ein Mobiltelefon, insbesondere ein Smartphone (intelligentes Telefon).

Eines der Gesichtsfelder $26_1$ und $26_2$ kann beispielsweise entlang einer Nutzerrichtung der Vorrichtung 60 angeordnet sein, wie es beispielsweise im Rahmen von Selbstaufnahmen (Selfie) für Fotos und/oder Videos üblich ist.

Das andere Gesamtgesichtsfeld kann beispielsweise entlang einer entgegengesetzten Richtung und/oder einer Weltrichtung der Vorrichtung 60 angeordnet sein und beispielsweise entlang der Richtung angeordnet sein, entlang der der Nutzer blickt, wenn er ausgehend vom Gesamtgesichtsfeld entlang der Nutzerrichtung auf die Vorrichtung 60 blickt. Beispielsweise kann die Strahlumlenkeinrichtung 18 in Fig. 1b beidseitig reflektiv gebildet sein und beispielsweise in unterschiedlichen Stellungen mit unterschiedlichen Hauptseiten den Strahlengang der optischen Kanäle 16a-d umlenken, so dass ausgehend von der Vorrichtung 60 die Gesamtgesichtsfelder $26_1$ und $26_2$ gegenüberliegend voneinander und/oder in einem Winkel von 180° angeordnet sind.

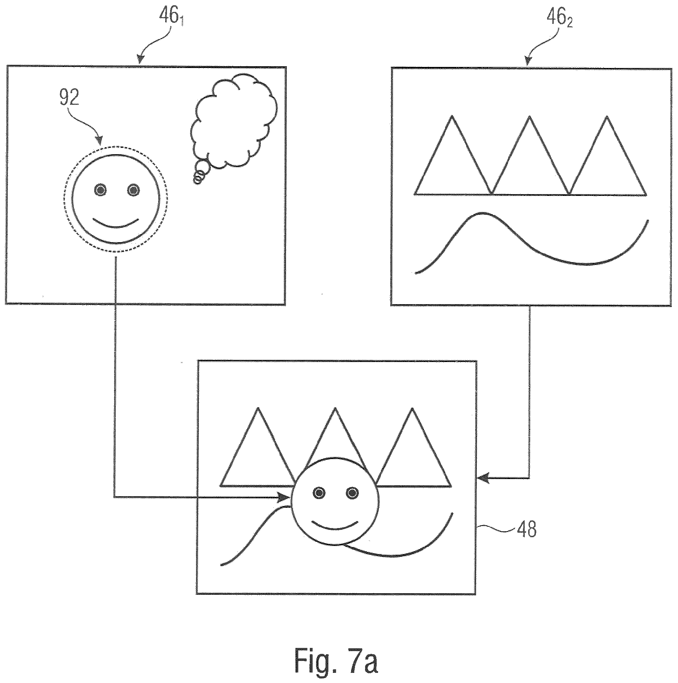

Fig. 7a zeigt ein schematisches Diagramm zur Verdeutlichung der Verarbeitung der Bildinformationen $46_1$ und $46_2$, die durch Abbildung der Gesamtgesichtsfelder $26_1$ und $26_2$ erhalten werden können. Die Steuereinrichtung ist ausgebildet, um einen Teil 92 der Abbildungsinformation $46_1$ des Gesichtsfelds $26_1$ zu separieren, beispielsweise auszuschneiden, zu isolieren oder ausschließlich den Teil 92 zu kopieren. Die Steuereinrichtung ist ferner ausgebildet, um den separierten oder segmentierten Teil 92 mit der Abbildungsinformation $46_2$ zu kombinieren, d. h., den Teil 92 in die Abbildungsinformation $46_2$ einzufügen, um die akkumulierte Bildinformation 48 zu erhalten. Diese weist stellenweise das Gesamtgesichtsfeld $26_2$ und stellenweise, nämlich dort, wo der Teil 92 eingefügt wurde, die Bildinformation $46_1$ auf. Es wird darauf hingewiesen, dass der Erhalt der akkumulierten Bildinformation 48 nicht auf die Einfügung eines einzigen Teils 92 beschränkt ist, sondern dass eine beliebige Anzahl von Teilen 92 aus der Bildinformation $46_1$ segmentiert werden kann und einer, mehrere oder alle diese Teile in die Bildinformation $46_2$ eingefügt werden können.

Ein Ort oder eine Position, an der der Teil 92 in die zweite Abbildungsinformation $46_2$ eingefügt wird, kann automatisch von der Steuereinrichtung bestimmt werden, etwa durch Projektion des Teils 92 durch die Vorrichtung 60 hindurch in das zweite Gesichtsfeld $26_2$, kann aber alternativ oder zusätzlich auch von einem Benutzer gewählt werden.

Gemäß einem Ausführungsbeispiel ist die Steuereinrichtung ausgebildet, um eine Person in der ersten Abbildungsinformation $46_1$ zu identifizieren und zu segmentieren, beispielsweise über einen Mustervergleich und/oder eine Kantendetektion, insbesondere aber auf Basis der durch die Vorrichtung selbst erzeugte Tiefenkarte. Die Steuereinrichtung kann ausgebildet sein, um das Abbild der Person in die zweite Abbildungsinformation $46_2$ einzufügen, um die akkumulierte Bildinformation 48 zu erhalten. Das bedeutet, der Teil 92 kann eine Person sein, etwa ein Nutzer der Vorrichtung 60. Ausführungsbeispiele sehen vor, dass die Vorrichtung ausgebildet ist, um die Person automatisch zu identifizieren, und um das Abbild der Person, das bedeutet, den Teil 92, automatisch in die zweite Abbildungsinformation $46_2$ einzufügen. Dies ermöglicht es, automatisch, ein Selbstportrait oder eine Selbstaufnahme vor den oder in den zweiten Gesamtgesichtsfeld $26_2$ anzufertigen, ohne die Vorrichtung 60 aufwendig positionieren zu müssen und/oder ohne den Nutzer aufwendig positionieren zu müssen.

Ausführungsbeispiele sehen vor, dass die Steuereinrichtung eine Tiefenkarte, etwa die Tiefenkarte 38, verwendet, um den Teil 92 in der zweiten Abbildungsinformation $46_2$ zu positionieren. Die Tiefenkarte 38 kann eine Mehrzahl oder Vielzahl von Tiefenebenen aufweisen, beispielsweise, gemäß der Anzahl der berücksichtigten Fokuslagen oder einer hieraus erhaltenen reduzierten Anzahl oder einer hieraus interpolierten höheren Anzahl. Die Steuereinrichtung kann ausgebildet sein, um den Teil 92 in der vorbestimmten Tiefenebene der zweiten Abbildungsinformation $46_2$ einzufügen, um die akkumulierte Bildinformation 48 zu erhalten. Die vorbestimmte Tiefenebene kann im Wesentlichen, d. h., innerhalb eines Toleranzbereichs von ± 10%, ± 5% oder ± 2% einen Abstand des ersten Gesamtgesichtsfelds $26_2$ von der Vorrichtung 60 entsprechen bzw. dem Abstand des segmentierten Teils 92 von der Vorrichtung 60. Dies kann auch als tiefenrichtiges Einfügen des Teils 92 in die zweite Abbildungsinformation $46_2$ bezeichnet werden.

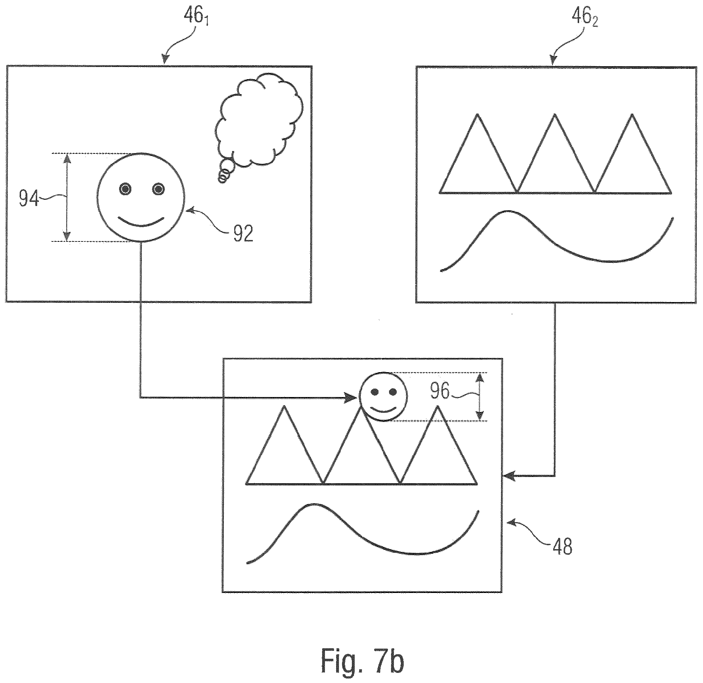

Fig. 7b zeigt eine schematische Darstellung einer Skalierung des Teils 92 in der akkumulierten Bildinformation 48. Alternativ kann auch eine andere Tiefenebene gewählt werden, wobei hierfür verschiedene Möglichkeiten von Ausführungsbeispielen vorgesehen sind. Beispielsweise kann die vorbestimmte Tiefenebene von der Platzierung des Teils 92 in der zweiten Abbildungsinformation $46_2$ beeinflusst sein oder von dieser bestimmt sein. Die Platzierung kann automatisch oder auch durch eine Benutzereingabe erfolgen. Wählt der Benutzer beispielsweise einen bestimmten Ort oder Platz innerhalb der zweiten Abbildungsinformation $46_2$ zur Einfügung des Teils 92, so kann die Steuereinrichtung ausgebildet sein, um in der zweiten Abbildungsinformation $46_2$ einen Abstand des Bereichs, in welchem der Teil 92 eingefügt werden soll, zu bestimmen. In Kenntnis des Abstands des Teils 92 zur Vorrichtung und der Objekte in der zweiten Abbildungsinformation $46_2$, beispielsweise unter Verwendung von Tiefenkarten, kann eine durch die Benutzereingabe bewirkte virtuelle Abstandsänderung des Teils 92 durch eine Skalierung des Teils 92 ausgeglichen werden.

So kann eine eindimensionale, zweidimensionale oder dreidimensionale Größe 94 des Teils 92 in eine Größe 96 verändert werden, etwa verkleinert, wenn der Abstand des Teils 92 von der ersten Abbildungsinformation $46_1$ zur zweiten Abbildungsinformation $46_2$ vergrößert ist, oder vergrößert, wenn der Abstand von der ersten Abbildungsinformation $46_1$ zur zweiten Abbildungsinformation $46_2$ verkleinert ist. Unabhängig davon, aber auch kombinatorisch mit einer Platzierung des Teils 92 in der ersten Abbildungsinformation $46_1$ basierend auf einer assoziierten Benutzereingabe kann die Vorrichtung konfiguriert sein, um die Abbildungsinformation $46_1$ zu skalieren, um eine skalierte Abbildungsinformation zu erhalten. Die skalierte Abbildungsinformation kann durch die Steuereinrichtung in die Abbildungsinformation $46_2$ eingefügt werden, um die akkumulierte Bildinformation 48 zu erhalten. Die Vorrichtung kann konfiguriert sein, um einen Abstand eines Objekts, das den Teil 92 repräsentiert und das in der ersten Abbildungsinformation $46_1$ abgebildet ist, bezüglich der Vorrichtung 60 zu bestimmen. Die Vorrichtung kann die Abbildungsinformation

$46_1$ bzw. den Teil 92 hiervon basierend auf einem Vergleich des bestimmten Abstands mit der vorbestimmten Tiefenebene in der zweiten Abbildungsinformation $46_2$ skalieren. Es ist vorteilhaft, wenn die beiden Abbildungsinformationen $46_1$ und $46_2$ in kurzen zeitlichen Abständen erfasst werden. Vorteilhaft ist, wenn dieser zeitliche Abstand innerhalb eines Zeitintervalls von höchstens 30 ms, höchstens 10 ms, höchstens 5 ms oder höchstens 1 ms, etwa 0,1 ms beträgt. Diese Zeit kann bspw. für eine Umschaltung oder Umpositionierung der Strahlumlenkeinrichtung genutzt werden und zumindest teilweise von einer Dauer dieses Vorganges bestimmt sein.

Die akkumulierte Bildinformation 48 kann als Einzelbild, alternativ oder zusätzlich aber auch als Videodatenstrom, etwa als eine Vielzahl von einzelnen Bildern, erhalten werden.

Gemäß einer Ausführungsform ist eine Vorrichtung so gebildet, dass die erste Abbildungsinformation $46_1$ eine Abbildung eines Nutzers umfasst und die zweite Abbildungsinformation $46_2$ eine Weltansicht der Vorrichtung umfasst. Die Steuereinrichtung ist ausgebildet, um ein Abbild des Nutzers aus der ersten Abbildungsinformation $46_1$ zu segmentieren und in die Weltansicht einzufügen. Beispielsweise kann die Vorrichtung abgebildet sein, um das Abbild des Nutzers tiefenrichtig in die Weltansicht einzufügen.

In anderen Worten kann im Zusammenhang mit hierin beschriebenen Ausführungsbeispiele die Aufnahme eines Selfie-Bilds oder Selfie-Videos eine tiefenbasierte Kombination quasi-gleichzeitiger Bildaufnahmen mit vorderseitiger Kameraaufnahme (Front-Facing Camera/View) und rückseitiger Kameraaufnahme (Main Camera/View) einer Vorrichtung, insbesondere eines Mobiltelefons umfassen. Dabei kann der Vordergrund der Selfie-Aufnahme, das bedeutet, das Selbstportrait, in den Vordergrund der Aufnahme der Hauptkamera übertragen werden. Eine sehr schnelle Umschaltung zwischen vorderseitiger und rückseitiger Aufnahme durch eine Veränderung der Stellung der Strahlumlenkeinrichtung ermöglicht die genannte quasi-gleichzeitige Aufnahme des Welt-seitigen und des User-seitigen Kamerabilds mit dem gleichen Bildsensor. Obwohl gemäß hierin beschriebener Ausführungsbeispiele auch eine einkanalige Abbildungsvorrichtung verwendet werden kann, liefern hierin beschriebene Ausführungsbeispiele insbesondere im Hinblick auf Multiaperturabbildungsvorrichtungen Vorteile, da diese bereits eine Tiefenkarte erstellen oder verwenden können, um die Einzelbilder zusammenzufügen. Diese Tiefenkarte kann auch zur Bestimmung von Tiefeninformationen für die Synthetisierung der akkumulierten Abbildungsinformation 48 verwendet werden. Es wird ein Ablauf ermöglicht, der wie folgt beschrieben werde kann:

1. Nutze Tiefenkarte der Selfie-Aufnahme, um Vordergrund, d. h., die sich selbst fotografierende(n) Person(en) vom Hintergrund zu segmentieren;

2. Nutze die Tiefenkarte der Welt-seitigen Aufnahme, um einen Vordergrund und einen Hintergrund hieraus festzustellen, das bedeutet, Tiefeninformation zu separieren; und

3. Füge den Vordergrund, d. h., die sich selbst fotografierende(n) Person(en) aus der Selfie-Aufnahme in das Bild der Welt-seitigen Aufnahme, insbesondere deren Vordergrund ein.

Vorteilhaft daran ist, dass die Selfie-Aufnahme mit dem Welt-seitig aufgenommenen Bild als Hintergrund kombiniert werden kann, ohne das Telefon dafür, wie ansonsten notwendig, um 180° drehen zu müssen, um sich dabei vor dieser Szene selbst mit aufzunehmen. Alternativ oder zusätzlich wird vermieden, dass rückwärts an sich vorbei fotografiert wird, was es erfordert, dass bezüglich der Ausrichtung des Telefons gegenüber der Szene immer spiegelverkehrt gedacht werden muss. Es kann die Tiefenkarte selbst erzeugt werden, wie es im Zusammenhang mit hierin beschriebenen Ausführungsbeispielen beschrieben ist, so dass auf die zusätzliche Anordnung von Time of Flight-Sensoren oder Structured Light-Sensoren verzichtet werden kann.

Nachfolgend wird nun noch Bezug genommen auf einige vorteilhafte Ausgestaltungen der Multiaperturabbildungsvorrichtung zur Erläuterung erfindungsgemäßer Vorteile.

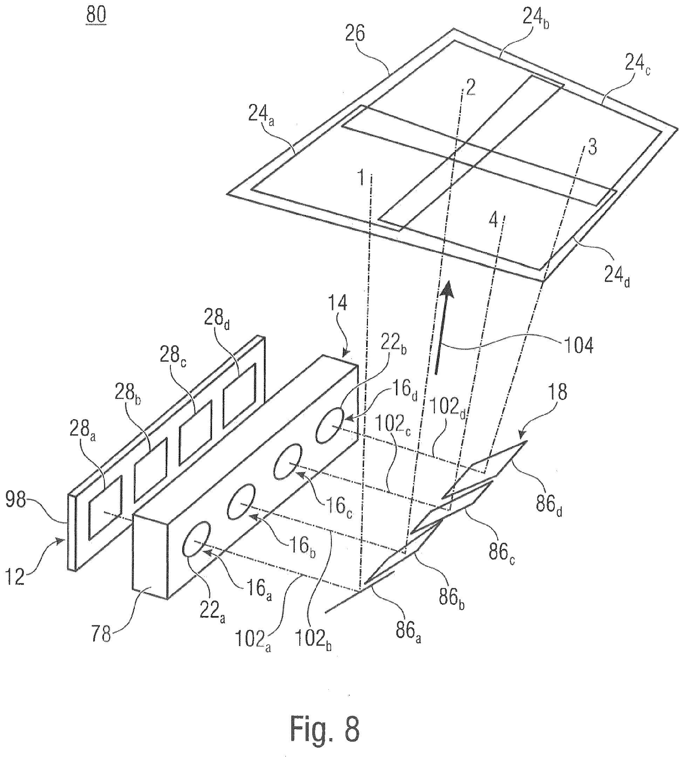

Fig. 8 zeigt Teile einer Multiaperturabbildungsvorrichtung 80, die in erfindungsgemäßen Vorrichtungen eingesetzt werden kann, wobei eine mögliche Fokussiereinrichtung und/oder Aktorik zur Implementierung einer optischen Bildstabilisierung nicht dargestellt sind, jedoch ohne weiteres implementiert werden können.

Die Multiaperturabbildungsvorrichtung 80 von Fig. 8 umfasst ein in mehreren Zeilen gebildetes oder bevorzugt einzeiliges Array 14 von nebeneinander angeordneten optischen Kanälen 16a-d. Jeder optische Kanal 16a-d umfasst eine Optik 22a-d zur Abbildung eines jeweiligen Teilgesichtsfeldes 24a-d eines Gesamtgesichtsfeldes 26, ggf. auch eines Gesamtgesichtsfeldes, wie in Zusammenhang mit Fig. 5 beschrieben ist. Das abgebildete Gesichtsfeld der Multiaperturabbildungsvorrichtung 80 wird auf einen jeweils zugeordneten Bildsensorbereich 28a-d eines Bildsensors 12 abgebildet.

Die Bildsensorbereiche 28a-d können beispielsweise jeweils aus einem Chip gebildet sein, der ein entsprechendes Pixelarray umfasst, wobei die Chips wie in den Fig. 8 angedeutet, auf einem gemeinsamen Substrat bzw. einer gemeinsamen Platine 98 montiert sein können. Alternativ wäre es natürlich auch möglich, dass die Bildsensorbereiche 28a-d jeweils aus einem Teil eines gemeinsamen Pixelarrays, das sich kontinuierlich oder mit Unterbrechungen über die Bildsensorbereiche 28a-d erstreckt, gebildet sind, wobei das gemeinsame Pixelarray beispielsweise auf einem einzelnen Chip gebildet ist. Beispielsweise werden dann lediglich die Pixelwerte des gemeinsamen Pixelarrays in den Bildsensorbereichen 28a-d ausgelesen. Verschiedene Mischungen dieser Alternativen sind natürlich ebenfalls möglich, wie z. B. das Vorhandensein eines Chips für zwei oder mehr Kanäle und eines weiteren Chips für wiederum andere Kanäle oder dergleichen. In dem Fall mehrerer Chips des Bildsensors 12 können diese beispielsweise auf einer oder mehreren Platinen montiert sein, wie z.B. alle gemeinsam oder gruppenweise oder dergleichen.

Bei dem Ausführungsbeispiel von Fig. 8 sind vier optischen Kanäle 16a-d einzeilig nebeneinander in Zeilenerstreckungsrichtung des Arrays 14 angeordnet, aber die Zahl vier ist lediglich exemplarisch und könnte auch jede andere Zahl größer Eins annehmen, d. h., es können N optische Kanäle mit N>1 angeordnet sein. Darüber hinaus kann das Array 14 auch weitere Zeilen aufweisen, die sich entlang der Zeilenerstreckungsrichtung erstrecken. Als Array 14 von optischen Kanälen 16a-d wird ein Verbund der optischen Kanäle bzw. eine räumliche Gruppierung hiervon verstanden. Die Optiken 22a-d können jeweils eine Linse aber auch einen Linsenverbund oder Linsenstapel sowie eine Kombination einer abbildenden Optik mit weiteren optischen Elementen aufweisen, darunter Filter, Blenden, reflektive oder diffraktive Elemente oder dergleichen. Das Array 14 kann so ausgestaltet sein, dass die Optiken 22a-d kanalindividuell, in Gruppen oder kanalglobal, d. h., alle Kanäle gemeinsam, an dem Substrat 78 angeordnet, befestigt oder montiert sind. Das bedeutet, es kann ein einzelnes Substrat 78, mehrere Teile hiervon oder auch kein Substrat 78 angeordnet sein, etwa wenn die Optiken 22a-d an anderer Stelle gehaltert werden.

Optische Achsen bzw. die Strahlengänge 102a-d der optischen Kanäle 16a-d können gemäß einem Beispiel zwischen den Bildsensorbereichen 28a-d und den Optiken 22a-d parallel zueinander verlaufen. Dazu sind die Bildsensorbereiche 28a-d beispielsweise in einer gemeinsamen Ebene angeordnet und ebenso die optischen Zentren der Optiken 22a-d. Beide Ebenen sind parallel zueinander, d.h. parallel zu der gemeinsamen Ebene der Bildsensorbereiche 28a-d. Zudem fallen bei einer Projektion senkrecht auf die Ebene der Bildsensorbereiche 28a-d optische Zentren der Optiken 22a-d mit Zentren der Bildsensorbereiche 28a-d zusammen. In anderen Worten ausgedrückt sind in diesen parallelen Ebenen die Optiken 22a-d einerseits und die Bildsensorbereiche 28a-d mit gleichem Wiederholabstand in Zeilenerstreckungsrichtung angeordnet.

Ein bildseitiger Abstand zwischen Bildsensorbereichen 28a-d und den zugehörigen Optiken 22a-d ist so eingestellt, dass die Abbildungen auf die Bildsensorbereiche 28a-d auf einen gewünschten Objektabstand eingestellt sind. Der Abstand liegt beispielsweise in einem Bereich gleich oder größer der Brennweite der Optiken 22a-d oder zum Beispiel in einem Bereich zwischen einem Einfachen und einem Zweifachen der Brennweite der Optiken 22a-d, beides inklusive. Der bildseitige Abstand entlang der optischen Achse 102a-d zwischen Bildsensorbereich 28a-d und Optik 22a-d kann auch einstellbar sein, wie z.B. manuell durch einen Benutzer und/oder automatisch über eine Fokussiereinrichtung bzw. eine Autofokussteuerung.

Ohne zusätzliche Maßnahmen überlappten sich die Teilgesichtsfelder 24a-d der optischen Kanäle 16a-d im Wesentlichen vollständig aufgrund der Parallelität der Strahlengänge bzw. optischen Achsen 102a-d. Zur Abdeckung eines größeren Gesamtgesichtsfeldes 26 und damit sich die Teilgesichtsfelder 24a-d lediglich räumlich teilweise überlappen, ist die Strahlumlenkeinrichtung 18 vorgesehen. Die Strahlumlenkeinrichtung 18 lenkt die Strahlengänge 102a-d bzw. optischen Achsen bspw. mit einer kanalindividuellen Abweichung in eine Gesamtgesichtsfeldrichtung 104 um. Die Gesamtgesichtsfeldrichtung 104 verläuft beispielsweise parallel zu einer Ebene, die senkrecht zur Zeilenerstreckungsrichtung des Arrays 14 und parallel zu dem Verlauf der optischen Achsen 102a-d vor bzw. ohne Strahlumlenkung ist. Beispielsweise geht die Gesamtgesichtsfeldrichtung 104 aus den optischen Achsen 102a-d durch Drehung um die Zeilenerstreckungsrichtung um einen Winkel hervor, der > 0° und < 180° ist und beispielsweise zwischen 80 und 100° liegt und beispielsweise 90° betragen kann. Das Gesamtgesichtsfeld 26 der Multiaperturabbildungsvorrichtung 80, das der Gesamtabdeckung der Teilgesichtsfelder 24a-d entspricht, liegt also nicht in Richtung einer Verlängerung der Hintereinanderschaltung des Bildsensors 12 und des Arrays 14 in Richtung der optischen Achsen 102a-d, sondern durch die Strahlumlenkung befindet sich das Gesamtgesichtsfeld seitlich zu Bildsensor 12 und Array 14 in einer Richtung, in der die Bauhöhe der Multiaperturabbildungsvorrichtung 80 gemessen wird, d.h. die laterale Richtung senkrecht zur Zeilenerstreckungsrichtung.

Zusätzlich aber lenkt die Strahlumlenkeinrichtung 18 bspw. jeden Strahlengang bzw. den Strahlengang jedes optischen Kanals 16a-d mit einer kanalindividuellen Abweichung von der soeben erwähnten zu der Richtung 104 führenden Umlenkung ab. Dazu umfasst die Strahlumlenkeinrichtung 18 für jeden Kanal 16a-d bspw. ein individuell eingerichtetes Element, etwa eine reflektierende Facette 86-d und/oder eine reflektierende Fläche. Diese sind gegenseitig leicht geneigt. Die gegenseitige Verkippung der Facetten 86a-d ist derart gewählt, dass bei Strahlumlenkung durch die Strahlumlenkeinrichtung 18 die Teilgesichtsfelder 24a-d mit einer leichten Divergenz versehen werden, derart, dass sich die Teilgesichtsfelder 24a-d lediglich teilweise überlappen. Dabei kann, wie es exemplarisch in Fig. 8 angedeutet ist, die individuelle Umlenkung auch derart gestaltet sein, dass die Teilgesichtsfelder 24a-d das Gesamtgesichtsfeld 26 zweidimensional abdecken, d.h. im Gesamtgesichtsfeld 26 zweidimensional verteilt angeordnet sind.

Gemäß einem weiteren Beispiel kann die Optik 22a-d eines optischen Kanals eingerichtet sein, um die Divergenz in den Strahlengängen 102a-d ganz oder teilweise zu erzeugen, was es ermöglicht auf die Neigung zwischen einzelnen Facetten 86a-d ganz oder teilweise zu verzichten. Wird die Divergenz bspw. vollständig durch die Optiken 22a-d bereitgestellt, so kann die Strahlumlenkeinrichtung auch als ebener Spiegel gebildet sein.

Es sei darauf hingewiesen, dass viele der bisher beschriebenen Details zur Multiaperturabbildungsvorrichtung 80 lediglich exemplarisch gewählt wurden. Das betraf beispielsweise schon die zuvor erwähnte Anzahl von optischen Kanälen. Die Strahlumlenkeinrichtung 18 kann ebenfalls anders gebildet sein als dies bisher beschrieben wurde. Beispielsweise wirkt die Strahlumlenkeinrichtung 18 nicht notwendigerweise reflektiv. Sie kann also auch anders ausgeführt sein als in Form eines Facettenspiegels, wie z.B. in Form transparenter Prismenkeile. In diesem Fall könnte beispielsweise die mittlere Strahlumlenkung 0° betragen, d.h. die Richtung 104 könnte beispielsweise parallel zu den Strahlengängen 102a-d noch vor oder ohne Strahlumlenkung sein bzw. in anderen Worten ausgedrückt könnte die Multiaperturabbildungsvorrichtung 80 trotz Strahlumlenkeinrichtung 18 weiterhin "geradeaus schauen". Das kanalindividuelle Umlenken durch die Strahlumlenkeinrichtung 18 würden wieder dazu führen, dass sich die Teilgesichtsfelder 24a-d lediglich geringfügig gegenseitig überlappen, wie z.B. paarweise mit einem Überlapp < 10 % bezogen auf die Raumwinkelbereiche der Teilgesichtsfelder 24a-d.

Auch könnten die Strahlengänge 102a-d bzw. optischen Achsen von der beschrieben Parallelität abweichen und dennoch könnte die Parallelität der Strahlengänge der optischen Kanäle aber immer noch so ausgeprägt sein, dass sich die Teilgesichtsfelder, die durch die einzelnen Kanäle 16a-N abgedeckt bzw. auf die jeweiligen Bildsensorbereiche 28a-d abgebildet werden, ohne weitere Maßnahmen, wie nämlich die Strahlumlenkung, größtenteils überlappen würden, so dass, um ein größeres Gesamtgesichtsfeld durch die Multiaperturabbildungsvorrichtung 80 abzudecken, die Strahlumlenkeinrichtung 18 die Strahlengänge so mit einer zusätzlichen Divergenz versieht, dass sich die Teilgesichtsfelder von N optischen Kanälen 16a-N weniger gegenseitig überlappen. Die Strahlumlenkeinrichtung 18 sorgt beispielsweise dafür, dass das Gesamtgesichtsfeld einen Öffnungswinkel aufweist, der größer ist als 1,5-mal dem Öffnungswinkel der einzelnen Teilgesichtsfelder der optischen Kanäle 16a-N. Mit einer Art Vorab-Divergenz der Strahlengänge 102a-d wäre es auch möglich, dass sich beispielsweise nicht alle Facettenneigungen unterscheiden, sondern dass manche Gruppen von Kanälen beispielsweise die Facetten mit gleicher Neigung besitzen. Letztere können dann einstückig bzw. kontinuierlich ineinander übergehend gebildet werden, quasi als eine Facette, die dieser Gruppe von in Zeilenerstreckungsrichtung benachbarten Kanälen zugeordnet ist.

Die Divergenz der optischen Achsen 102a-d dieser Kanäle 16a-d könnte dann von der Divergenz dieser optischen Achsen 102a-d stammen, wie sie durch lateralen Versatz zwischen optischen Zentren der Optiken 22a-d und Bildsensorbereichen 28a-d der Kanäle 16a-d oder Prismenstrukturen oder dezentrierten Linsenausschnitten erzielt wird. Die Vorab-Divergenz könnte sich beispielsweise auf eine Ebene beschränken. Die optischen Achsen 102a-d könnten beispielsweise vor bzw. ohne Strahlumlenkung 18 in einer gemeinsamen Ebene verlaufen, aber in dieser divergent, und die Facetten 86a-d bewirken lediglich nur noch eine zusätzliche Divergenz in der anderen Transversalebene, d.h. sie sind alle parallel zur Zeilenerstreckungsrichtung und gegeneinander nur noch unterschiedlich zur vorerwähnten gemeinsamen Ebene der optischen Achsen 102a-d geneigt, wobei hier wiederum mehrere Facetten 86a-d gleichen Neigung besitzen können bzw. einer Gruppe von Kanälen gemeinsam zugeordnet sein könnten, deren optischen Achsen sich beispielsweise bereits in der vorerwähnten gemeinsamen Ebene der optischen Achsen paarweise vor bzw. ohne Strahlumlenkung unterscheiden.

Unter Weglassung der Strahlumlenkeinrichtung 18 oder Ausbildung der Strahlumlenkeinrichtung 18 als planer Spiegel oder dergleichen könnte auch die gesamte Divergenz durch den lateralen Versatz zwischen optischen Zentren der Optiken 22a-d einerseits und Zentren der Bildsensorbereiche 28a-d andererseits oder durch Prismenstrukturen oder dezentrierte Linsenausschnitte bewerkstelligt werden.

Die erwähnte möglicher Weise vorliegende Vorab-Divergenz kann beispielsweise erzielt werden, indem die optischen Zentren der Optiken 22a-d auf einer Geraden entlang der Zeilenerstreckungsrichtung liegen, während die Zentren der Bildsensorbereiche 28a-d von der Projektion der optischen Zentren entlang der Normalen der Ebene der Bildsensorbereiche 28a-d auf Punkte auf einer Geraden in der Bildsensorebene abweichend angeordnet sind, wie z.B. an Punkten, die von den Punkten auf vorerwähnter Gerade in der Bildsensorebene kanalindividuell entlang der Zeilenerstreckungsrichtung und/oder entlang der Richtung senkrecht zur sowohl der Zeilenerstreckungsrichtung als auch der Bildsensornormalen abweichen. Alternativ kann Vorab-Divergenz erzielt werden, indem die Zentren der Bildsensoren 28a-d auf einer Geraden entlang der Zeilenerstreckungsrichtung liegen, während die Zentren der Optiken 22a-d von der Projektion der optischen Zentren der Bildsensoren entlang der Normalen der Ebene der optischen Zentren der Optiken 22a-d auf Punkte auf einer Geraden in der Optikzentrenebene abweichend angeordnet sind, wie z.B. an Punkten, die von den Punkten auf vorerwähnter Gerade in der Optikzentrenebene kanalindividuell entlang der Zeilenerstreckungsrichtung und/oder entlang der Richtung senkrecht zur sowohl der Zeilenerstreckungsrichtung als auch der Normalen der Optikzentrenebene abweichen.

Es wird bevorzugt, wenn vorerwähnte kanalindividuelle Abweichung von der jeweiligen Projektion lediglich in Zeilenerstreckungsrichtung verläuft, also die optischen Achsen 102a-d sich lediglich in einer gemeinsamen Ebene befinden mit einer Vorabdivergenz versehen werden. Sowohl optische Zentren als auch Bildsensorbereichszentren liegen dann jeweils auf einer Geraden parallel zur Zeilenerstreckungsrichtung, aber mit unterschiedlichen Zwischenabständen. Ein lateraler Versatz zwischen Linsen und Bildsensoren in senkrechter lateraler Richtung zur Zeilenerstreckungsrichtung führte demgegenüber zu einer Vergrößerung der Bauhöhe. Ein rein In-Ebene-Versatz in Zeilenerstreckungsrichtung ändert die Bauhöhe nicht, aber es resultieren ggf. weniger Facetten und/oder die Facetten weisen nur eine Kippung in einer Winkelorientierung auf, was den Aufbau vereinfacht.

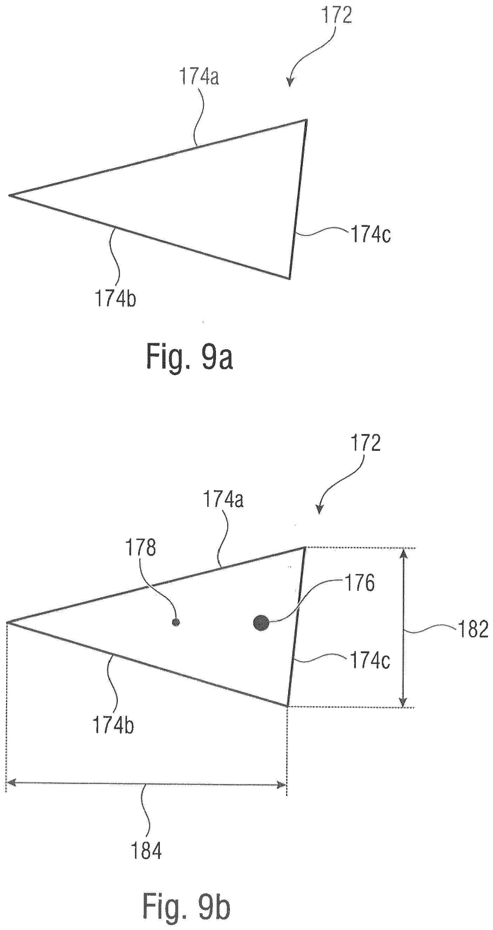

Anhand der Fig. 9a-f werden vorteilhafte Ausgestaltungen der Strahlumlenkeinrichtung 18 beschrieben. Die Ausführungen zeigen eine Reihe von Vorteilen auf, die einzeln oder in beliebiger Kombination mit einander ausführbar sind, jedoch nicht einschränkend wirken sollen. Insbesondere wird deutlich, dass die kanalindividuelle Relativposition durch eine kanalindividuelle Positionierung durch eine kanalindividuelle axiale Positionierung der Einzelfacetten erhalten werden kann, die starr angeordnet sein können, oder über individuelle Achsen bewegt und/oder über eine geknickte oder gebogene gemeinsame Achse gemeinsam bewegt werden können.

Fig. 9a zeigt eine schematische Seitenschnittansicht eines Strahlumlenkelements 172, wie es für eine hierin beschriebene Strahlumlenkeinrichtung, etwa die Strahlumlenkeinrichtung 18 einsetzbar ist. Beispielsweise handelt es sich bei dem Strahlumlenkelement 172 um eine Facette 86. Das Strahlumlenkelement 172 kann für einen, eine Mehrzahl oder alle der optischen Kanäle 16a-d wirksam sein und einen polygonzugartigen Querschnitt aufweisen. Obwohl ein dreieckiger Querschnitt gezeigt ist, kann es sich auch um ein beliebiges anderes Polygon handeln. Alternativ oder zusätzlich kann der Querschnitt auch zumindest eine gekrümmte Oberfläche aufweisen, wobei ins-besondere bei reflektierenden Oberflächen eine zumindest abschnittsweise ebene Ausbildung vorteilhaft sein kann, um Abbildungsfehler zu vermeiden.

Das Strahlumlenkelement 172 weist bspw. eine erste Seite 174a, eine zweite Seite 174b und eine dritte Seite 174c auf. Zumindest zwei Seiten, etwa die Seiten 174a und 174b sind reflektiv ausgebildet, so dass das Strahlumlenkelement 172 beidseitig reflektiv ausgebildet ist. Bei den Seiten 174a und 174b kann es sich um Hauptseiten des Strahlumlenkelements 172 handeln, also Seiten, deren Fläche größer ist, als die Seite 174c. So kann bspw. die Seite 174c gekrümmt sein, etwa ausgehend von der Achse 176 konvex, so dass durch die Krümmung eine Anpassung des Elementes an die Rotation erfolgt, was es ermöglicht, die Seite 174c noch näher an die Randseite des Gehäuses positionieren zu können, was bzgl. der Position der Durchlassbereichanordnung vorteilhat ist.

In anderen Worten kann das Strahlumlenkelement 172 keilförmig und beidseitig reflektiv gebildet sein. Der Fläche 174c gegenüberliegend, also zwischen den Flächen 174a und 174b, kann eine weitere Fläche angeordnet sein, die jedoch wesentlich kleiner als die Fläche 174c ist. Mit anderen Worten verläuft der durch die Flächen 174a, b und c gebildete Keil nicht beliebig spitz zu, sondern ist an der spitzen Seite mit einer Fläche versehen und mithin abgestumpft.

Bei Verzicht auf eine Umschaltung der Blickrichtungen kann auch ein Prisma oder ein kanalindividueller Spiegel mit lediglich einer reflektierenden Seite angeordnet werden.

Fig. 9b zeigt eine schematische Seitenschnittansicht des Strahlumlenkelements 172, bei dem eine Aufhängung oder eine Verschiebeachse 176 des Strahlumlenkelements 172 beschrieben ist. Die Verschiebeachse 176, um die das Strahlumlenkelement 172 rotatorisch und/oder translatorisch in der Strahlumlenkeinrichtung 18 bewegbar sein kann, kann exzentrisch bezüglich eines Flächenschwerpunktes 178 des Querschnitts verschoben sein. Der Flächenschwerpunkt kann alternativ auch ein Punkt sein, der die hälftige Abmessung des Strahlumlenkelements 172 entlang einer Dickenrichtung 182 und entlang einer Richtung 184 senkrecht hierzu beschreibt.

Die Verschiebeachse kann bspw. entlang einer Dickenrichtung 182 unverändert und einen beliebigen Versatz in einer Richtung senkrecht hierzu aufweisen. Alternativ ist auch ein Versatz entlang der Dickenrichtung 182 vorstellbar. Die Verschiebung kann bspw. so erfolgen, dass bei einer Rotation des Strahlumlenkelements 172 um die Verschiebeachse 176 ein höherer Stellweg erhalten wird, als bei einer Rotation um den Flächenschwerpunkt 178. So kann sich durch die Verschiebung der Verschiebeachse 176 der Weg, um den die Kante zwischen den Seiten 174a und 174b bei einer Rotation bewegt wird bei gleichem Rotationswinkel verglichen mit einer Rotation um den Flächenschwerpunkt 178 erhöhen. Bevorzugt ist das Strahlumlenkelement 172 so angeordnet, dass die Kante, also die spitze Seite des keilförmigen Querschnitts, zwischen den Seiten 174a und 174b dem Bildsensor zugewandt ist. Durch geringe Rotationsbewegungen kann somit eine jeweils andere Seite 174a oder 174b den Strahlengang der optischen Kanäle umlenken. Hierbei wird deutlich, dass die Rotation so ausgeführt werden kann, dass ein Raumbedarf der Strahlumlenkeinrichtung entlang der Dickenrichtung 182 gering ist, da eine Bewegung des Strahlumlenkelements 172 so, dass eine Hauptseite senkrecht zum Bildsensor steht, nicht erforderlich ist.

Die Seite 174c kann auch als Nebenseite oder als Rückseite bezeichnet werden. Mehrere Strahlumlenkelemente können so miteinander verbunden werden, dass ein verbindendes Element an der Seite 174c angeordnet ist, oder durch den Querschnitt der Strahlumlenkelemente verläuft, also im Inneren der Strahlumlenkelemente angeordnet ist, etwa im Bereich der Verschiebeachse 176. Insbesondere kann das haltende Element so angeordnet sein, dass es nicht oder lediglich in geringem Umfang, d. h., höchstens 50 %, höchstens 30 % oder höchstens 10 % über das Strahlumlenkelement 172 entlang der Richtung 182 hinausragt, so dass das Halteelement nicht die Ausdehnung des Gesamtaufbaus entlang der Richtung 182 erhöht oder bestimmt. Die Ausdehnung in Dickenrichtung 182 kann alternativ durch die Linsen der optischen Kanäle bestimmt sein, d. h. diese weisen die das Minimum der Dicke definierende Abmessung auf.

Das Strahlumlenkelement 172 kann aus Glas, Keramik, Glaskeramik, Kunststoff, Metall oder einer Kombination dieser Materialien und /oder weiterer Materialien gebildet sein.

In anderen Worten kann das Strahlumlenkelement 172 so angeordnet sein, dass die Spitze, d. h., die Kante zwischen den Hauptseiten 174a und 174b zum Bildsensor zeigt. Eine Haltung der Strahlumlenkelemente kann so erfolgen, dass sie lediglich an der Rückseite oder im Inneren der Strahlumlenkelemente erfolgt, d. h. die Hauptseiten werden nicht verdeckt. Ein gemeinsames haltendes oder verbindendes Element kann sich über die Rückseite 174c erstrecken. Die Drehachse des Strahlumlenkelements 172 kann exzentrisch angeordnet sein.

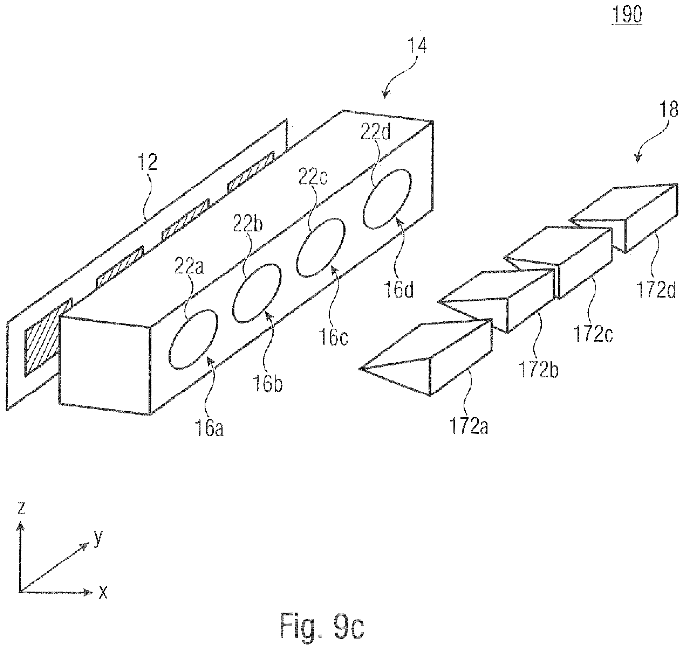

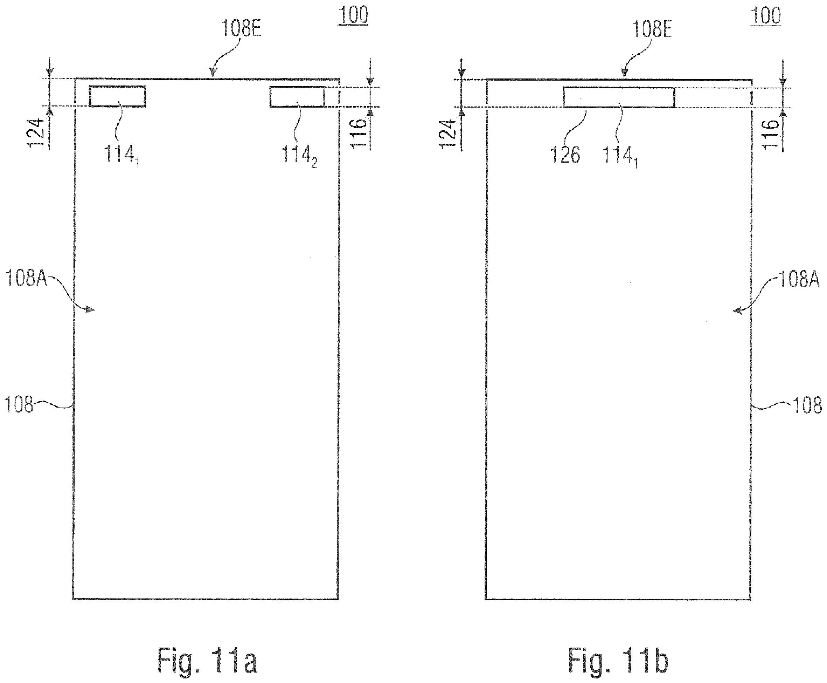

Fig. 9c zeigt eine schematische perspektivische Ansicht einer Multiaperturabbildungsvorrichtung 190, die einen Bildsensor 12, und ein einzeiliges Array 14 von nebeneinander angeordneten optischen Kanälen 16a-d umfasst. Die Strahlumlenkeinrichtung 18 umfasst eine Anzahl von Strahlumlenkelementen 172a-d, die der Anzahl von optischen Kanälen entsprechen kann. Alternativ kann eine geringere Anzahl von Strahlumlenkelementen angeordnet sein, etwa wenn zumindest ein Strahlumlenkelement von zwei optischen Kanälen genutzt wird. Alternativ kann auch eine höhere Anzahl angeordnet sein, etwa wenn eine Umschaltung der Umlenkrichtung der Strahlumlenkeinrichtung 18 durch eine translatorische Bewegung erfolgt. Jedes Strahlumlenkelement 172a-d kann einem optischen Kanal 16a-d zugeordnet sein. Die Strahlumlenkelemente 172a-d können als eine Vielzahl von Elementen 172 gemäß Fig. 11a gebildet sein. Alternativ können zumindest zwei, mehrere oder alle Strahlumlenkelemente 172a-d einstückig mit einander gebildet sein.

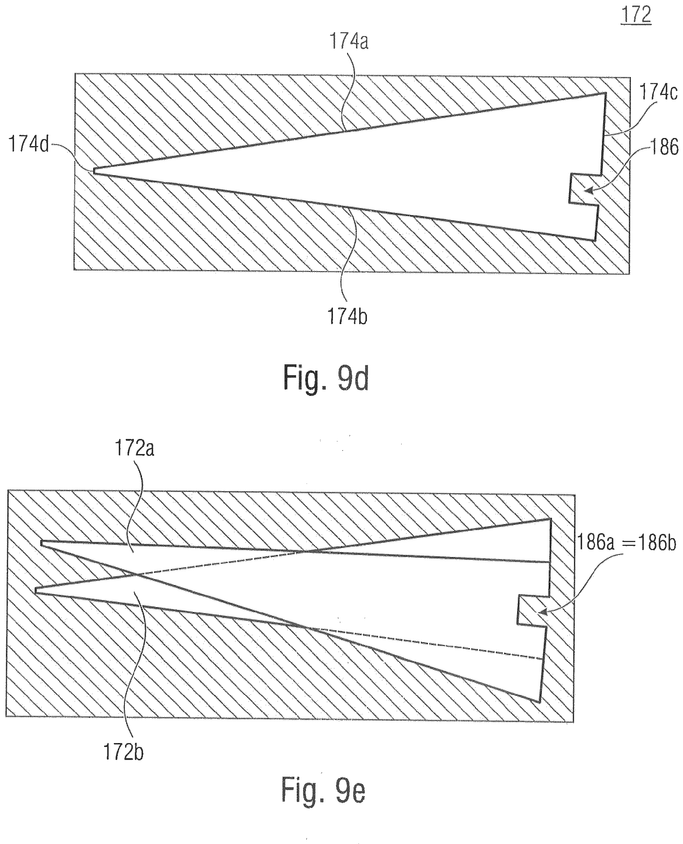

Fig. 9d zeigt eine schematische Seitenschnittansicht des Strahlumlenkelements 172, dessen Querschnitt das als Freiformfläche gebildet ist. So kann die Seite 174c eine Aussparung 186 aufweisen, die eine Befestigung eines haltenden Elements ermöglicht, wobei die Aussparung 186 auch als hervorstehendes Element, etwa als Feder eines Nut-Feder-Systems gebildet sein kann. Der Querschnitt weist ferner eine vierte Seite 174d auf, die eine geringere Flächenausdehnung als die Hauptseiten 174a und 174b aufweist und selbige mit einander verbindet.

Fig. 9e zeigt eine schematische Seitenschnittansicht eines ersten Strahlumlenkelements 172a und eines in Darstellungsrichtung dahinterliegenden zweiten Strahlumlenkelements 172b. Die Aussparungen 186a und 186b können dabei so angeordnet sein, dass sie im Wesentlichen deckungsgleich sind, so dass eine Anordnung eines verbindenden Elements in den Aussparungen ermöglicht ist.

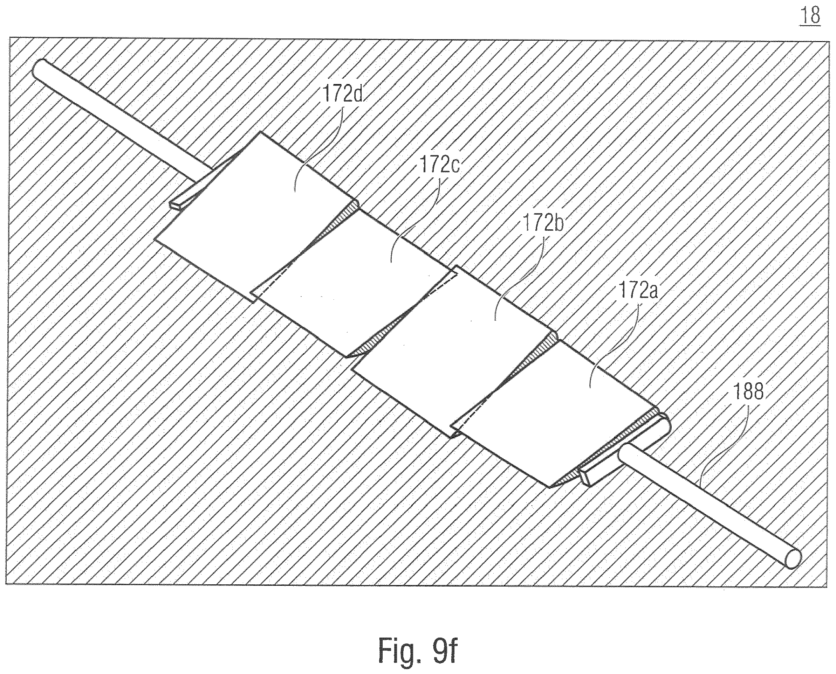

Fig. 9f zeigt eine schematische perspektivische Ansicht der Strahlumlenkeinrichtung 18, die bspw. vier Strahlumlenkelements 172a-d umfasst, die mit einem verbindenden Element 188 verbunden sind. Das verbindende Element 188 kann nutzbar sein, um von einem Aktor translatorisch und/oder rotatorisch bewegbar zu sein. Das verbindende Element 188 kann einstückig ausgebildet sein und über eine Erstreckungsrichtung, etwa die y-Richtung in, an oder in den Strahlumlenkelementen 172a-d verlaufen. Alternativ kann das verbindende Element 188 auch lediglich mit zumindest einer Seite der Strahlumlenkeinrichtung 18 verbunden sein, etwa wenn die Strahlumlenkelemente 172a-d einstückig gebildet sind. Alternativ kann eine Verbindung mit einem Aktor und/oder eine Verbindung der Strahlumlenkelemente 172a-d auch auf beliebige andere Weise erfolgen, etwa mittels Kleben, Ansprengen oder Löten. Es ist ebenfalls möglich, dass das verbindende Element 188 Knicke oder Krümmungen aufweist, um unterschiedliche relative Positionen der Strahlumlenkelemente 172a-d bezüglich einer Referenzposition (etwa ein Abstand von der Randseite oder dem Bildsensor) einzustellen.

Anhand der nachfolgenden Ausführungsbeispiele werden erfindungsgemäße Ausgestaltungen näher erläutert.

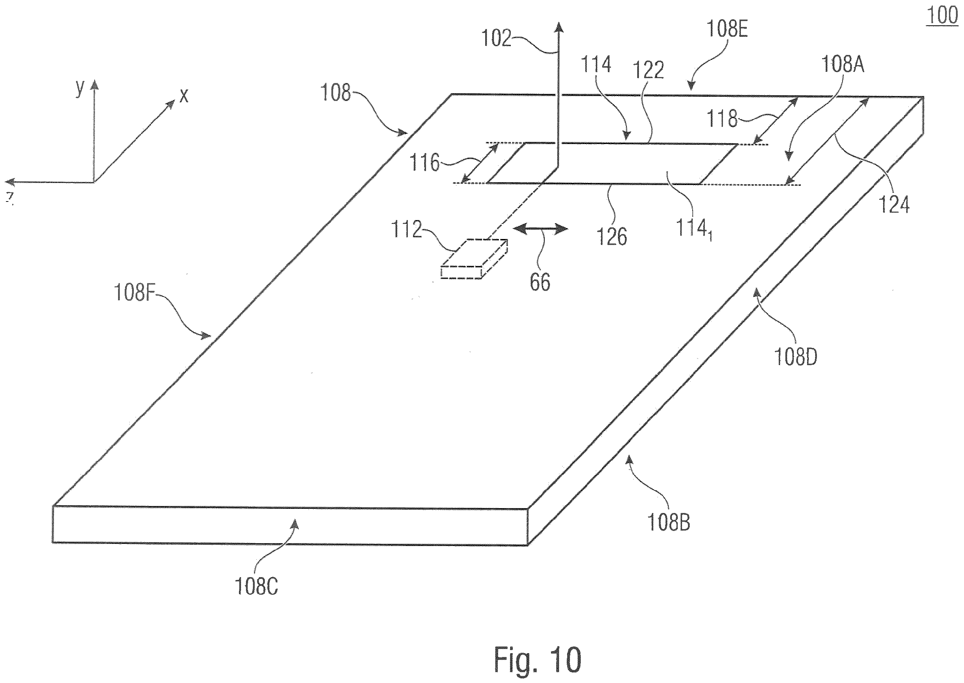

Fig. 10 zeigt eine schematische perspektivische Ansicht einer Vorrichtung 100 gemäß einem Ausführungsbeispiel. Die Vorrichtung 100 umfasst ein Gehäuse 108, das ein inneres Volumen ganz oder teilweise umschließt oder haust. Das Gehäuse 108 umfasst zwei gegenüberliegende Hauptseiten 108A und 108B, die durch eine oder mehrere Nebenseiten 108C voneinander beabstandet sind. In dem beispielhaft dargestellten Fall eines quaderförmigen Gehäuses 108 können beispielsweise vier Nebenseiten 108C bis 108F angeordnet sein, um die Hauptseiten 108A und 108B zu verbinden und zu beabstanden. Ausführungsbeispiele sind jedoch nicht auf quaderförmige Gehäuse beschränkt, sondern können auch eine andere Form aufweisen, beispielsweise eine Art Zylinder, was in einer einzelnen Nebenseite resultieren kann, einem Dreieck mit drei Nebenseiten oder einem anderen Polygonzug mit einer beliebigen Anzahl von Randseiten.

Die Vorrichtung 100 umfasst eine in einem Inneren des Gehäuses 108 angeordnete Multiaperturabbildungsvorrichtung 112, die in Übereinstimmung mit hierin beschriebenen Multiaperturabbildungsvorrichtungen ausgeführt sein kann, und eine Bildsensoranordnung mit Bildsensorbereichen umfasst, wobei die Bildsensorbereiche den jeweiligen optischen Kanälen zugeordnet sind. Hierzu umfasst die Multiaperturabbildungsvorrichtung 112 ein Array von nebeneinander angeordneten optischen Kanälen, wobei jeder optische Kanal eine Optik zur Abbildung zumindest eines Teilgesichtsfeldes eines Gesamtgesichtsfeldes auf einem Bildsensorbereich der Bildsensoranordnung umfasst. Die Multiaperturabbildungsvorrichtung 112 umfasst ferner eine Strahlumlenkeinrichtung zum Umlenken eines Strahlengangs 102 der optischen Kanäle, wobei die Strahlumlenkeinrichtung eine Mehrzahl von Facetten aufweist und jedem optischen Kanal eine Facette zugeordnet ist.

Zumindest eine der Hauptseiten 108A und/oder 108B weist eine Durchlassbereichanordnung 114 auf. Die Durchlassbereichanordnung 114 umfasst einen oder mehrere Durchlassbereiche $114_i$ mit $i \geq 1$. Beispielhaft dargestellt ist die Anordnung eines einzelnen Durchlassbereichs $114_1$. Die Durchlassbereichanordnung 114 ist eingerichtet, um die Strahlengänge 102 durchzulassen. So kann der Durchlassbereich 114 beispielsweise ein für eine für die Multiaperturabbildungsvorrichtung 112 relevante Wellenlänge zumindest teilweise transparent sein. Das bedeutet, durch die Durchlassbereichanordnung 114 kann die Multiaperturabbildungsvorrichtung 112 das möglicherweise ansonsten opak gebildete Gehäuse 108 durchblicken. Dies schließt die Anordnung von Blenden, Filtern oder sonstigen optisch wirksamen Elementen in dem Durchlassbereich $114_1$ oder der Durchlassbereichanordnung 114 insgesamt nicht aus.

Erfindungsgemäß wird erreicht, dass der Flächenbedarf der Durchlassbereichanordnung 114 in der Hauptseite 108A gering ist, bevorzugt in einer Ebene der Hauptseite 108A und senkrecht zu der Zeilenerstreckungsrichtung 66, so dass eine Abmessung 116, beispielsweise parallel zu der x-Richtung, gering ist. Alternativ oder zusätzlich kann ein Abstand 118 einer proximalen Kante 122 und/oder ein Abstand 124 einer distalen Kante 126 bezogen auf die Randseite 108E gering sein, um ein möglichst großes Maß oder einen möglichst großen Anteil an Fläche der Hauptseite 108A für andere Zwecke zur Verfügung zu stellen, beispielsweise zur Anordnung eines Displays oder einer Anzeigeeinrichtung. Die proximale und die distale Kante 122 und 126 beziehen sich dabei auf Kanten die in etwa in gleicher Richtung mit der darauf bezogenen Randseite, hier bspw. 108E, verlaufen und die von Kanten, die senkrecht hierzu verlaufen verschieden sind.

Hierzu wird die Multiaperturabbildungsvorrichtung 112 erfindungsgemäß so ausgestaltet, dass die optischen Kanäle bezogen auf die Durchlassbereichanordnung 114 und entlang einer axialen Richtung, beispielsweise parallel zu der x-Richtung, des Verlaufs des Strahlengangs der optischen Kanäle zwischen der Bildsensoranordnung und der Strahlumlenkeinrichtung eine kanalindividuelle Relativposition des Bildsensorbereichs des optischen Kanals, der Optik des optischen Kanals und/oder einer Position der reflektierenden Oberfläche der dem optischen Kanal zugeordneten Facette aufweisen.

Einige vorteilhafte Ausführungsformen dieser Erfindung werden nachfolgend detailliert beschrieben.

Fig. 11a zeigt eine schematische Aufsicht auf eine Ausgestaltung der Vorrichtung 100, bei der die Hauptseite 108A des Gehäuses 108 beispielhaft zwei Durchlassbereiche $114_1$ und $114_2$ aufweist. Jeder der Durchlassbereich $114_1$ und $114_2$ kann für zumindest einen aber auch mehrere oder alle der optischen Kanäle wirksam sein, beispielsweise durch eine Aufteilung der Kanäle, so dass durch zumindest zwei der Durchlassbereiche $114_1$ und $114_2$ (oder weiterer möglicher Durchlassbereiche) gleichzeitig geblickt wird. Alternativ ist es ebenfalls möglich, unterschiedliche Durchlassbereiche $114_1$ und $114_2$ mit unterschiedlichen Blickrichtungen oder Aufnahmemodi zu assoziieren, so dass mehrere oder alle optischen Kanäle zu einem Zeitpunkt lediglich durch eine Teilmenge sämtlicher Durchlassbereiche 114i blicken, beispielsweise einen einzelnen Durchlassbereich.

Die Durchlassbereiche $114_1$ und $114_2$ können gleiche Abmessungen 116 aufweisen, können aber auch, je nach Bedarf, unterschiedlich voneinander gebildet sein, etwa wenn für einen der Durchlassbereiche 114, oder $114_2$ eine geringere Abmessung implementierbar ist, ohne den Sichtbereich der Multiaperturabbildungsvorrichtung zu beschränken. Beispielhaft ist die Abmessung 124 größer als die Abmessung 116, so dass die Durchlassbereiche $114_1$ und $114_2$ einen Abstand zu der Randseite 108E aufweisen können.

Fig. 11b zeigt eine schematische Aufsicht auf eine alternative Ausgestaltung der Vorrichtung 100, bei der die Durchlassbereichanordnung lediglich einen einzelnen Durchlassbereich $114_1$ aufweist, der beispielsweise mittig und benachbart zu der Randseite 108E angeordnet ist. Auch hier kann der Abstand 124 zwischen der Randseite 108E und der distalen Kante 126 größer sein als die Abmessung 116 des Durchlassbereichs $114_1$.

Es ist anzumerken, dass das Gehäuse 108 beispielsweise als Quader dargestellt ist, so dass die zumindest eine Randseite 108C bis 108F ebenfalls gerade implementiert sein kann. Alternative Ausgestaltungen weisen gekrümmte Randseiten 108C bis 108F auf, beispielsweise bezogen auf das Gehäuse 108 konvex gekrümmte, d. h. nach außen gekrümmte Randseiten. Die Abstände 118 und 124 beziehen sich in diesem Fall auf den Rand oder das Ende der Hauptseite 108A, unabhängig davon, um wie viel die Draufsicht durch konvex gekrümmte Randseiten vergrößert wird.

Gegenüber der Ausgestaltung in Fig. 11a kann der Durchlassbereich 114, entlang der z-Richtung, d. h. der Zeilenerstreckungsrichtung, größer ausgeführt sein als die Durchlassbereiche $114_1$ und $114_2$ in Fig. 11a, etwa um gleichzeitig eine höhere Anzahl von optischen Kanälen durchzulassen.

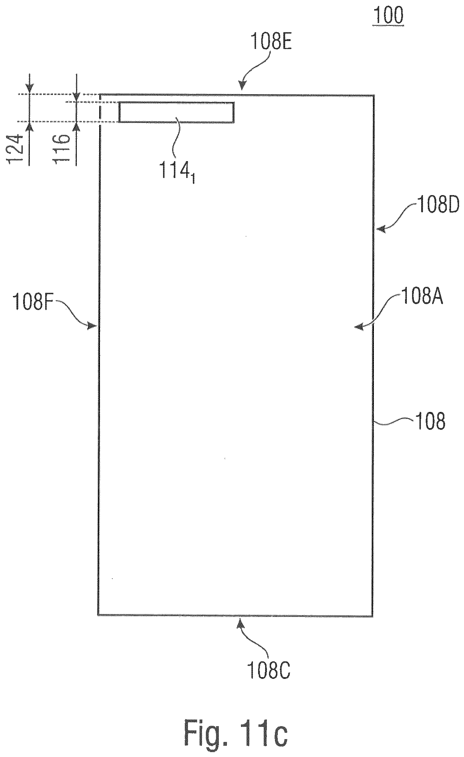

Fig. 11c zeigt eine schematische Aufsicht auf eine weiter alternative Ausgestaltung der Vorrichtung 100, bei der der Gesamt-Durchlassbereich $114_1$ anders als in Fig. 11b nicht mittig, sondern zu der Randseite 108F versetzt ist. Gemäß weiteren alternativen Ausgestaltungen kann ein Durchlassbereich oder mehrere Durchlassbereiche zu einer beliebigen Randseite hin verschoben werden, wenn von der Konfiguration gemäß Fig. 11b ausgegangen wird. Bevorzugt ist der Abstand 124 dabei klein gehalten und ein weiterer zusätzlicher Abstand zu der Randseite 108F oder zu der Randseite 108D klein oder zu den Randseiten 108D und 108F symmetrisch. Dies ermöglicht eine entweder symmetrische oder in hohem Maße ununterbrochene verbleibende Fläche der Hauptseite 108A, was bei Nutzung dieser verbleibenden Fläche als Display zu einem hohen Maß an darstellbarer Information führt.

Das bedeutet, die als Notches (Kerben) bezeichneten Effekte der Displayaussparung können klein gehalten werden und zu einer Ecke des Displays verschoben werden oder zumindest symmetrisch an einer Randseite angeordnet.

Es wird ferner darauf hingewiesen, dass die Ausgestaltung derart, dass die Randseiten 108C und 108E kleiner sind als die Randseiten 108D und 108F auch beliebig umgedreht oder vertauscht werden kann.

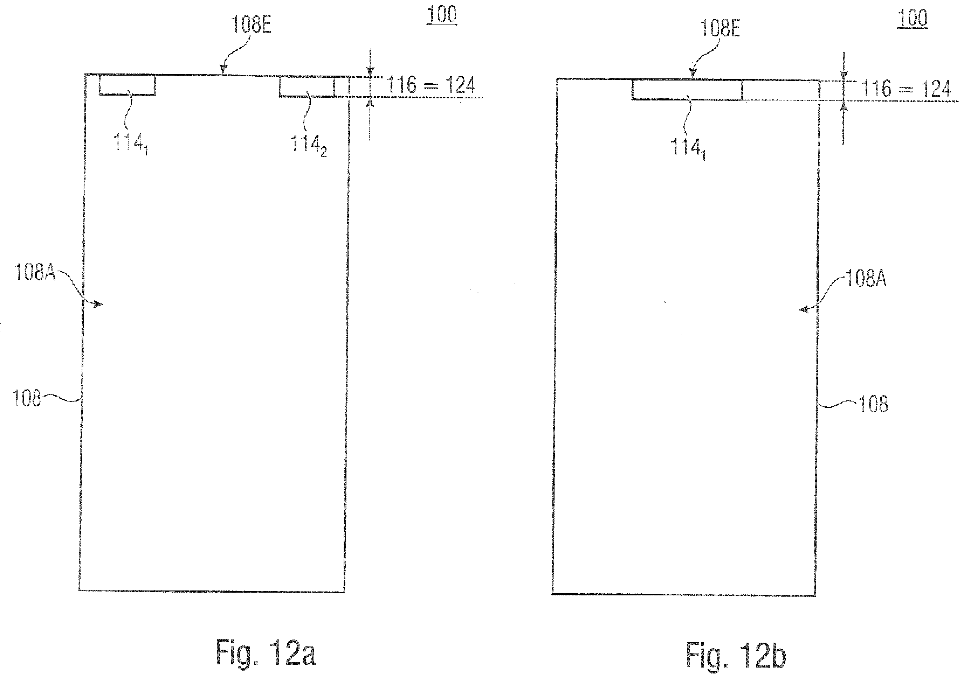

Die Fig. 12a bis 12c zeigen zu den Fig. 11a bis 11c äquivalente oder zumindest ähnliche Ausgestaltungen der Vorrichtung 100, wobei die Abmessung 116 der Durchlassbereiche $114_1$ bzw. $114_2$ gleich dem Abstand 124 sein kann, das bedeutet, die Fenster sind ganz zum Rand der Hauptseite 108A verschoben, was möglicherweise, aber nicht notwendigerweise, so implementiert werden kann, dass zumindest einer der Durchlassbereiche 114, und/oder $114_2$ in die Randseite 108E hineinreicht.

In anderen Worten zeigen die Fig. 12a bis 12c ein Display eines Smartphones und die Lage der/des Fenster(s) in einer Konfiguration, bei der die Durchlassbereiche randlos anschließend sind.

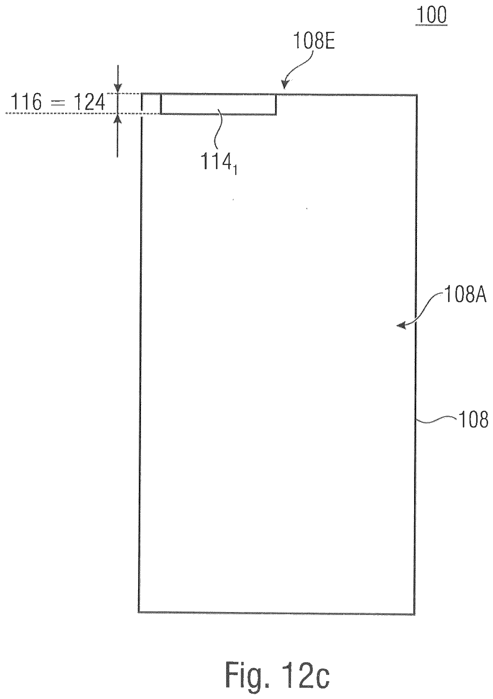

Die Fig. 11a, 11b, 11c, 12a, 12b und 12c zeigen jeweils eine Ansicht der Hauptseite 108A. Gemäß Ausführungsbeispielen ist die Blickrichtung der Multiaperturabbildungsvorrichtung unveränderlich.

Gemäß anderen Ausführungsbeispielen ist die Blickrichtung der Multiaperturabbildungsvorrichtung basierend auf einer Bewegung der Strahlumlenkeinrichtung veränderlich, beispielsweise hin zu einer entgegengesetzten Richtung. Ausführungsbeispiele sehen deshalb vor, die in den Fig. 11a, 11b, 11c, 12a, 12b und 12c nicht dargestellte Hauptseite 108B in gleicher oder zumindest vergleichbarer Weise mit Durchlassbereichen zu versehen, um eine entsprechende Blickrichtung zu ermöglichen. Eine relative Lage der Strahlumlenkeinrichtung kann somit zwischen einer ersten Stellung und einer zweiten Stellung umschaltbar sein. In der ersten Stellung kann der Strahlengang in Richtung eines ersten Gesamtgesichtsfeldes umgelenkt werden und in der zweiten Stellung in Richtung eines zweiten Gesamtgesichtsfeldes, wobei jeweils unterschiedliche Durchlassbereichanordnungen, möglicherweise in unterschiedlichen Hauptseiten des Gehäuses, durchlaufen werden. Vorteilhaft kann es sein, die Durchlassbereichanordnung, d. h. die Durchlassfenster, mit Blenden auszustatten. Jeweils ungenutzte Durchlassbereiche, d. h. diejenigen Durchlassbereichanordnungen, durch die die Strahlengänge in der aktuellen Aufnahme nicht gelenkt werden, können durch die Blende und eine zugehörige Steuereinrichtung ganz oder teilweise intransparent eingestellt werden, d. h. optisch verschlossen werden. Hierfür können sich mechanische und/oder elektrochrome Blenden anbieten. Wenn nun die Strahlumlenkeinrichtung in einem ersten Betriebszustand die Strahlengänge so umlenkt, dass diese durch eine erste Durchlassbereichanordnung verlaufen, so kann die zweite Blende die zweite Durchlassbereichanordnung optisch zumindest teilweise intransparent einstellen. In dem zweiten Betriebszustand kann die Strahlumlenkeinrichtung den Strahlengang der Abbildungsvorrichtung so umlenken, dass dieser durch die zweite Durchlassbereichanordnung verläuft. Die erste Blende kann dann die erste Durchlassbereichanordnung optisch zumindest teilweise intransparent einstellen, während wechselweise die zweite Durchlassbereichanordnung transparent eingestellt wird.

Nachfolgend wird Bezug genommen auf die kanalindividuelle Ausgestaltung der Multiaperturabbildungsvorrichtung.

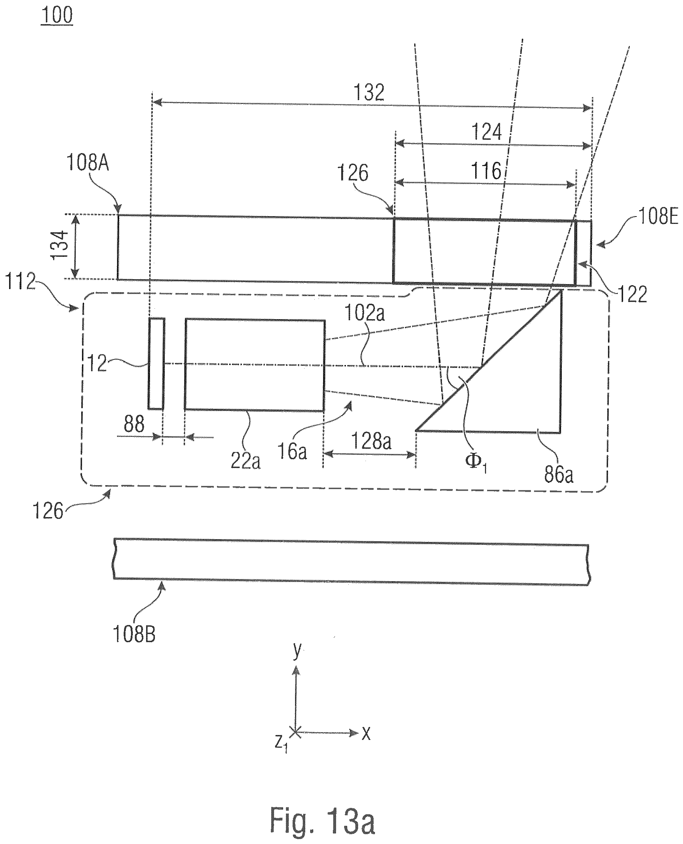

Hierzu zeigt Fig. 13a eine beispielhafte schematische Seitenschnittansicht der Vorrichtung 100 mit Ausschnitten der Hauptseiten 108A und 108B zur Darstellung des Inneren 127 des Gehäuses 108. Die Fig. 13a zeigt dabei in der dargestellten Schnittebene eine Darstellung eines ersten optischen Kanals, beispielsweise des optischen Kanals 16a mit der Optik 22a, bei der zwischen dem Bildsensor 12 und der Optik 22a der Abstand 88 angeordnet ist.

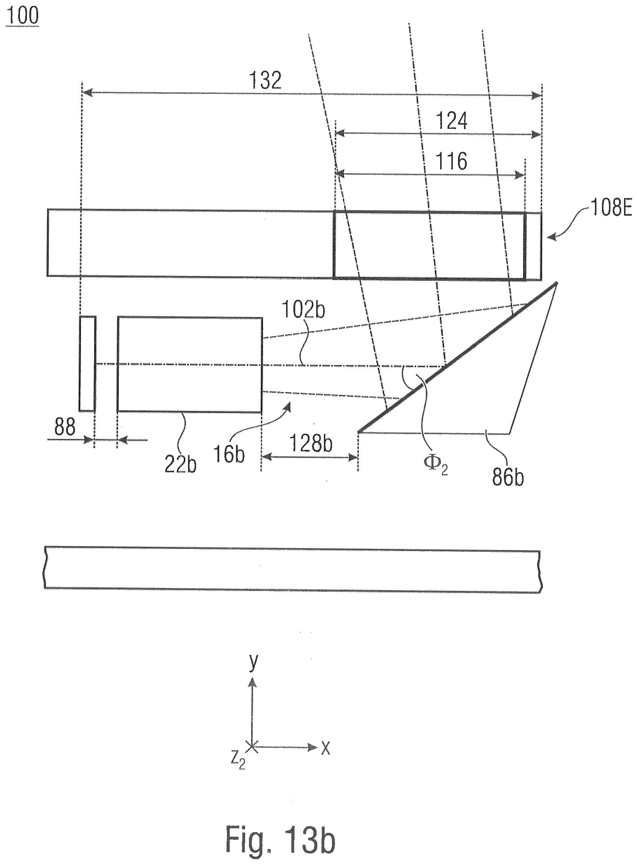

Fig. 13b zeigt eine schematische Seitenschnittansicht durch dieselbe Ausgestaltung der Vorrichtung 100 wie in Fig. 13a, aber in einer anderen Schnittebene, nämlich in einer Ebene mit dem Wert $z_2$ anstelle von $z_1$ entlang der z-Achse. Dort ist der optische Kanal 16b mit der Optik 22b angeordnet. Die optischen Kanäle 16a und 16b unterscheiden sich im Hinblick auf einen Abstand 128a zwischen der Optik 22a und der Facette 86a verglichen mit einem Abstand 128b des optischen Kanals 16b zwischen der Optik 22b und der Facette 86b. Der Abstand 128 kann sich auf den jeweiligen Abstand zwischen der Optik 22 und der reflektierenden Oberfläche der Facette 86 beziehen, während sich der Neigungswinkel Φ auf eine Ebene parallel zu der Hauptseite 108A, beispielsweise die x/z-Ebene beziehen kann. Die kanalindividuelle Ausgestaltung der optischen Kanäle durch eine kanalindividuelle Relativposition kann einen kanalindividuellen Neigungswinkel des Strahlengangs in dem Bereich zwischen der Bildsensorbereichsanordnung und der Strahlumlenkeinrichtung bezogen auf eine Ebene parallel zu der Hauptseite umfassen, d .h., einen out-of-plane Verlauf der optischen Kanäle. Als kanalindividuell wird verstanden, dass sich zumindest zwei Kanäle, mehrere Kanäle oder alle Kanäle von zumindest einem anderen optischen Kanal, mehreren optischen Kanälen oder allen optischen Kanälen im Hinblick auf die Relativposition unterscheiden.

So kann beispielsweise der Abstand 128b größer, alternativ kleiner sein als der Abstand 128a. Alternativ oder zusätzlich kann ein Anstellwinkel $\Phi_1$ des optischen Kanals 16a von einem Anstellwinkel $\Phi_2$ des optischen Kanals 16b verschieden sein, beispielsweise größer. Hierdurch können parallel zueinander verlaufende Strahlengänge 102a und 102b oder zumindest in derselben x/z-Ebene verlaufende Strahlengänge 102a und 102b in unterschiedliche Richtungen umgelenkt werden. Ein Abstand 132 des Bildsensors 12 bzw. der jeweils zugeordneten Bildsensorbereiche zu der Randseite 108E kann in den optischen Kanälen 16a und 16b gleich sein, was einer gleichen oder identischen Relativposition des jeweiligen Bildsensorbereichs entlang der axialen Richtung x gleichkommt. Diese gleiche Position kann anstelle der Randseite 108E auch auf die proximale Kante 122 oder die distale Kante 126 bezogen sein.

In anderen Worten beziehen sich Ausführungsbeispiele der vorliegenden Erfindung auf die individuelle Gestaltung der optischen Kanäle, so dass sich eine minimale Fenstergröße und/oder ein minimaler Abstand der der Optik zugewandten Fensterkante (die distale Kante 126) zum Rand des Smartphones bzw. dessen Displays ergibt. Dies wird beispielsweise dadurch erreicht, dass ein axialer Abstand 128 und ein Anstellwinkel $\Phi$ der reflektierenden Facetten 86 bezüglich der Optiken 22 so gewählt sind, dass sich für einen Abstand unter anderem entsprechend der Dicke 134 des Displays eines Smartphones eine minimale Fenstergröße (Abmessung 116) und/oder ein minimaler Abstand 124 der der Optik zugewandten Fensterkante 126 zum Rand des Smartphones bzw. dessen Displays ergibt. Die Abstände der Optiken zu den Bildsensoren und die Optiken können dabei für alle Kanäle gleich sein.

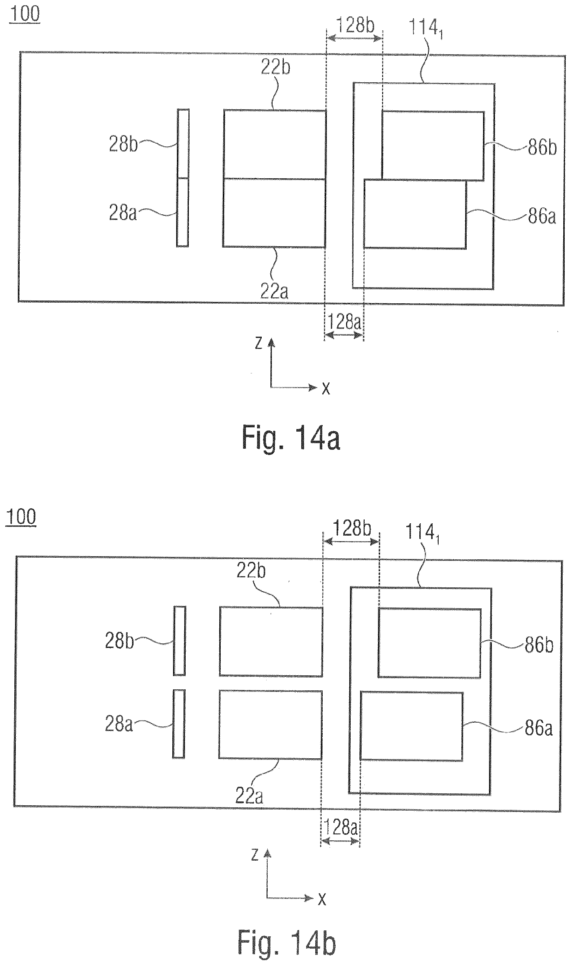

Die Fig. 14a bis 14c zeigen schematische Aufsichten auf unterschiedliche Ausgestaltungen der Vorrichtung 100 mit den im Zusammenhang mit den Fig. 13a und 13b erwähnten unterschiedlichen Abständen 128a und 128b zwischen der Optik 22a und der Facette 86a einerseits sowie der Optik 22b und der Facette 86b andererseits. Dies wird beispielsweise dadurch erhalten, dass die Optiken 22a und 22b an gleicher axialer Position, d. h. mit gleicher x-Koordinate, angeordnet sind. Alternativ oder zusätzlich können auch die Bildsensorbereiche 28a und 28b an gleicher axialer Position angeordnet sein.

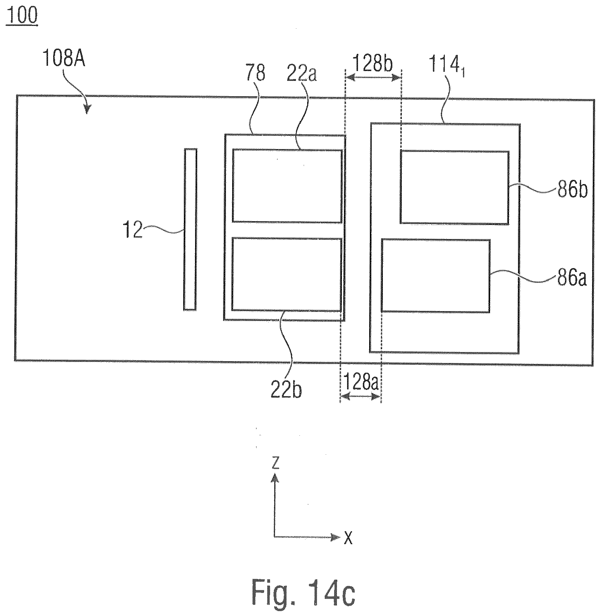

Während in Fig. 14a die Bildsensorbereiche 28a und 28b als unterschiedliche Chips implementiert sind, die jedoch direkt benachbart zueinander sind, kann gemäß der Konfiguration in Fig. 14c ein gemeinsamer Bildsensor 12 verwendet werden, d. h., es kann eine bautechnische Lücke zwischen den Bildsensorbereichen 28a und 28b angeordnet sein oder nicht. Entsprechend einem Abstand oder einer direkten Benachbarung von Bildsensorbereichen können die Optiken 22a und 22b ebenfalls nah zueinander angeordnet sein, wie es in Fig. 14a dargestellt ist, oder beabstandet zueinander angeordnet sein, wie es beispielsweise in den Fig. 14b und 14c erläutert ist. Optional kann das Array von optischen Kanälen das gemeinsame Substrat 78 aufweisen, welches beispielsweise transparent ist und von den Strahlengängen durchlaufen wird.

Die Facetten 86a und 86b können ebenfalls direkt benachbart zueinander angeordnet sein, wie es in Fig. 14a dargestellt ist, oder können beabstandet zueinander sein, wie es in den Fig. 14b und 14c dargestellt ist.

Die Darstellung von Modulen aus Bildsensor, Optik und Facette gemäß Fig. 14a, einem Abstand zwischen den Einzelkanälen in Fig. 14b und einem durchgehenden Bildsensor und einer gemeinsamen Array-Optik in Fig. 14c können beliebig miteinander kombiniert werden.

Die unterschiedlichen Abstände 128a und 128b unter Beibehaltung der Abstände zwischen den Optiken und den Bildsensorbereichen kann durch unterschiedliche gebildete Optiken, etwa im Hinblick auf die Brennweite, ausgeglichen werden, so dass eine Anpassung der Optiken an die unterschiedlichen Abstände oder andersherum implementiert sein kann.

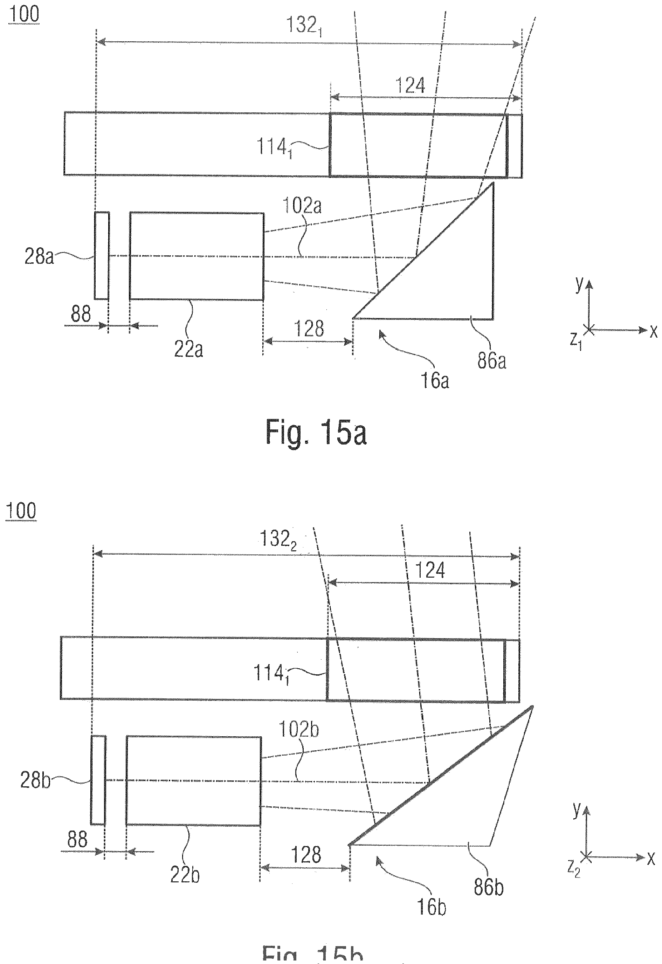

Die Fig. 15a und 15b zeigen eine schematische Seitenschnittansicht einer Konfiguration der Vorrichtung 100 gemäß einem Ausführungsbeispiel, bei der eine unterschiedliche axiale Position der Kombination, also der Gesamtanordnung, aus Bildsensorbereich 28, Optik 22 und zugeordneter Facette 86 der unterschiedlichen optischen Kanäle 16a und 16b entlang einer Richtung der Strahlengänge 102a und 102b in einem Bereich zwischen der Bildsensoranordnung mit den Bildsensorbereichen 28a und 28b und der Strahlumlenkeinrichtung die kanalindividuelle Relativposition bereitstellt.

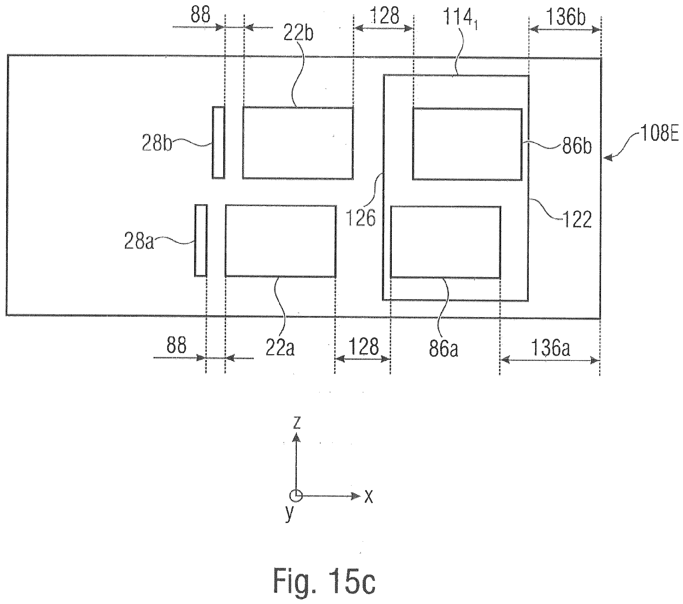

Das bedeutet, der Abstand 88 sowie der Abstand 128 kann in den optischen Kanälen 16a und 16b gleich sein, wie es auch in der Fig. 15c ersichtlich ist, die eine schematische Aufsicht auf die in den Fig. 15a und 15b in unterschiedlichen Ebenen der z-Achse dargestellten Konfiguration. Die optischen Kanäle 16a und 16b können somit beispielsweise im Hinblick auf die Beabstandung der Komponenten gleich gebildet sein, jedoch als Gruppe insgesamt entlang der x-Richtung zueinander verschoben sein, so dass sich unterschiedliche Abstände 136a und 136b zwischen den Facetten 86a und 86b und der Randseite 108E ergeben.

Obwohl die Bildsensorbereiche 28a und 28b als voneinander verschiedene Chips dargestellt sind, verhindert dies nicht eine Ausgestaltung der Bildsensorbereiche 28a und 28b in einem gemeinsamen Substrat, beispielsweise durch Ausführen einer Stufenform oder dergleichen. Ebenso kann die Optik 22a unter Verwendung eines gemeinsamen Substrats mit der Optik 22b verbunden sein.

Diese Ausführungsform ermöglicht die Ausgestaltung der Optiken 22a und 22b in gleicher Art und Weise, beispielsweise mit gleicher Brennweite und/oder gleichem Erfassungsbereich. Es kann jedoch auch eine Kombination dieser Ausführungsform mit den im Zusammenhang mit den Fig. 13a, 13b, 14a, 14b und 14c beschriebenen unterschiedlichen Abständen erfolgen. Alternativ oder zusätzlich kann beispielsweise lediglich eine axiale Position der Facette entlang der Richtung des Strahlengangs 102 in dem Bereich zwischen dem Bildsensor 12 und der Strahlumlenkeinrichtung verschieden sein und/oder es kann ein Abstand zwischen der jeweiligen Optik 22 und dem Bildsensor angepasst sein.

In anderen Worten kann alternativ oder zusätzlich die axiale Position der Gesamtheit aus Bildsensor, Optik und Umlenkfacette unterschiedlich gebildet sein, das heißt, Einzelkanäle können gleiche Optiken oder Abstände aufweisen, jedoch keinen Bildsensor in einer gemeinsamen Ebene, beispielsweise keinen gemeinsamen durchgehenden Bildsensor.

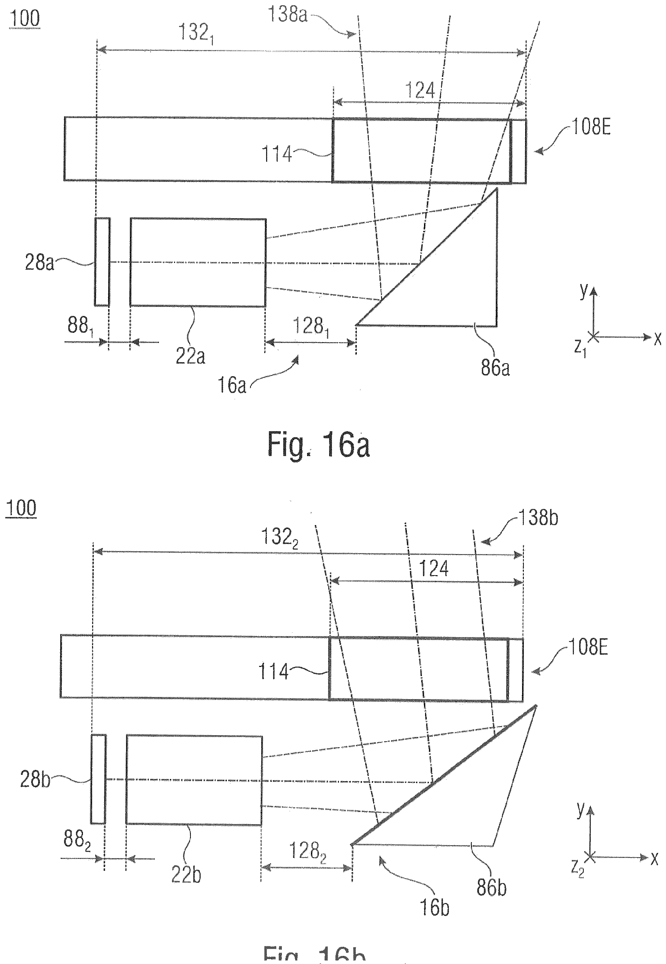

Die Fig. 16a und 16b zeigen schematische Seitenschnittansichten einer Konfiguration der Vorrichtung 100 in unterschiedlichen Ebenen $z_1$ und $z_2$ einer x/y-Ebene, bei der die Bildsensorbereiche 28a und 28b unterschiedliche Abstände $132_1$ und $132_2$ zu der Randseite 108E aufweisen. Ferner weisen die Optiken 22a bzw. 22b unterschiedliche Abstände $88_1$ und $88_2$ zu den jeweils zugeordneten Bildsensorbereichen 28a und 28b auf.

Alternativ oder zusätzlich können auch die Abstände $128_1$ und $128_2$ zwischen der Optik 22a und der Facette 86a bzw. zwischen der Optik 22b und der Facette 86b voneinander verschieden sein, um eine entsprechende Anpassung der Abbildungseigenschaften der optischen Kanäle 16a und 16b zu implementieren. Alternativ oder zusätzlich können auch eventuelle ungleiche Abmessungen der Optiken 22a und 22b entlang der x-Richtung durch die unterschiedlichen Abstände kompensiert werden, etwa wenn Optiken 22a und 22b mit unterschiedlichen Eigenschaften verwendet werden.

In anderen Worten können Optiken, axiale Optikpositionen und/oder axiale Bildsensorpositionen für alle Kanäle individuell sein.

Die Individualität kann dahin gehend ausgenutzt werden, dass Projektionen von Strahlenbündeln 138a und 138b der unterschiedlichen optischen Kanäle in eine gemeinsame x/y-Ebene, d. h. bei einer Projektion entlang der Zeilenerstreckungsrichtung und/oder der z-Richtung in hohem Maße überlappen, insbesondere in einem höheren Maße als bei einer kanalglobalen Ausgestaltung, d. h. einer Ausgestaltung, bei der die axialen Positionen der Bildsensorbereiche, der Optiken sowie der Facetten gleich sind, selbst wenn sich Anstellwinkel der Facetten unterscheiden können. Durch das hohe Maß an Überlappung kann die erforderliche Fenstergröße, die Abmessung 116, gering sein, was insbesondere bei großen Displays bzw. einer hohen Ausnutzung einer Oberfläche mit einem Display vorteilhaft ist. Das bedeutet, die Durchlassbereichanordnung kann an die erhaltene Überlappvergrößerung angepasst sein, insbesondere verkleinert sein. Die Durchlassbereichanordnung kann dabei so ausgeführt sein, dass unverändert ein ungehinderter Durchlass der Strahlengänge ermöglicht wird.

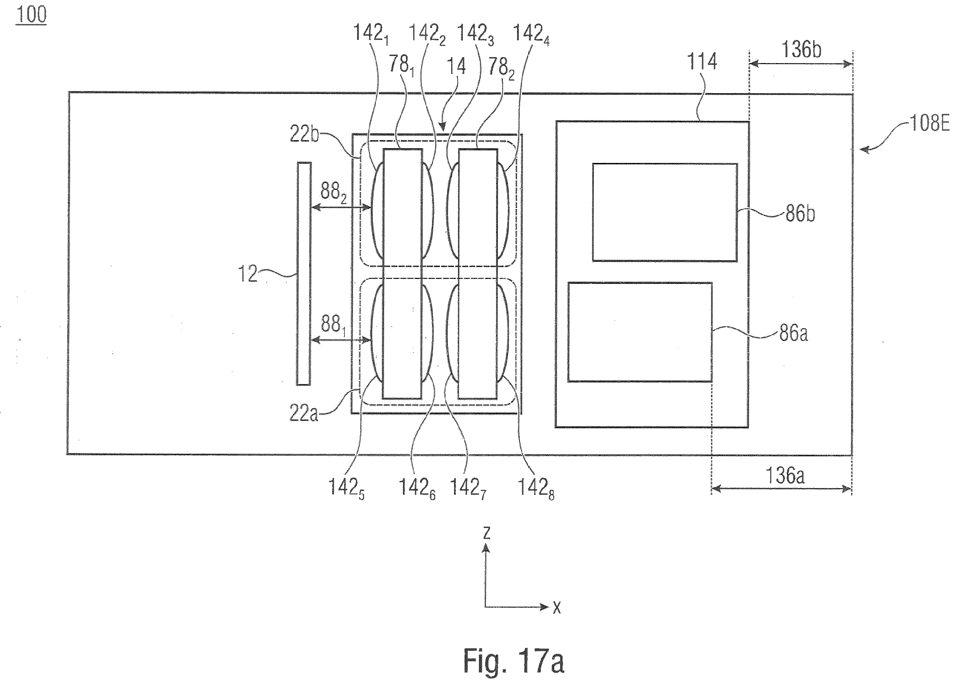

Fig. 17a zeigt eine schematische Aufsicht auf eine Konfiguration der Vorrichtung 100, bei der die Optiken 22a und 22b jeweils als ein Stapel von Linsen gebildet sind, die mit einem oder mehreren Substraten 78, und/oder $78_2$ in unterschiedlichen Ebenen entlang der x-Richtung verbunden sind. Basierend auf den unterschiedlichen Abständen 136a und 136b der Facetten 86a und 86b können, um die Anordnung der Bildsensorbereiche in einer gemeinsamen x-Ebene, möglicherweise als gemeinsamer Bildsensor 12, zu ermöglichen, wobei die Optiken 22a und 22b hierbei individuell ausgelegt werden können, etwa im Hinblick auf ihre Brennweite und/oder im Hinblick auf die erhaltenen Abstände zu den Facetten und/oder dem Bildsensor. So können die Einzellinsen $142_i$ der Optiken 22a und 22b unterschiedliche Größen und/oder Brennweiten aufweisen. Dadurch kann in Kombination mehrerer Einzellinsen eine beliebige optische Eigenschaft der Gesamtoptik 22a und 22b erhalten werden, die an die voneinander verschiedenen Abstände 136a und 136b angepasst sind.

In anderen Worten können die Optiken gemeinsame durchgehende Substrate $78_1$ und $78_2$ aufweisen, wobei hierauf angeordnet die Linsen $142_i$ der einzelnen Kanäle kanalindividuell ausgelegt sein können und insbesondere auch unterschiedliche Abstände zum Bildsensor 12 aufweisen können. Die Substrate 78, und $78_2$ können senkrecht zu den optischen Achsen angeordnet sein, das bedeutet, senkrecht zu der axialen Richtung x.

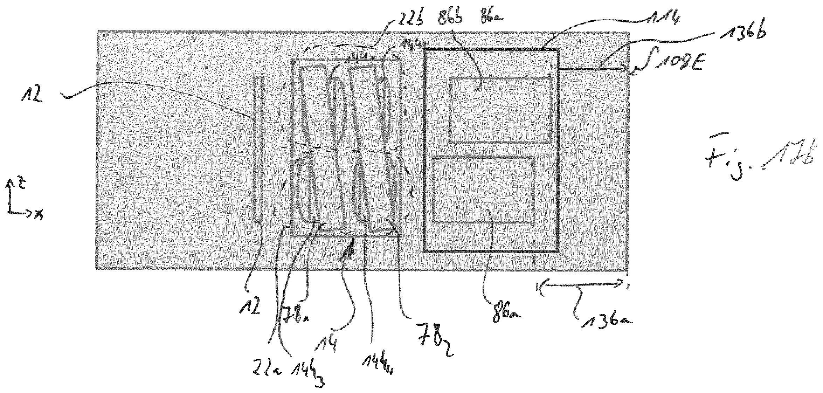

Fig. 17b zeigt eine schematische Aufsicht auf eine Konfiguration, bei der das Substrat $78_1$ und/oder $78_2$ gegenüber der in der Fig. 17a gezeigten senkrechten Anordnung senkrecht zu der axialen Richtung verkippt ist, was es ebenfalls ermöglicht, dass die optischen Strahlengänge der einzelnen optischen Kanäle an den voneinander verschiedenen Abstand der unterschiedlichen Kanäle zwischen den Optiken 22a bzw. 22b, den zugeordneten Facetten 86a bzw. 86b und/oder dem jeweils zugeordneten Bildsensorbereich bzw. dem Bildsensor 12 anzupassen. Die Optiken können rotationsasymmetrische aufweisen und gleichzeitig so gebildet sein, dass die Oberflächenprofile von Linsen $142_i$ der Optiken 22a und 22b rotationssymmetrisch um eine Richtung parallel zu der x-Richtung, d. h. rotationssymmetrisch zu den optischen Achsen der optischen Kanäle beschreibbar sind. Dies kann beispielsweise dadurch erhalten werden, dass die Verkippung mittels der Substrate $78_1$ und $78_2$ mittels Keilformen 144 ausgeglichen wird, wodurch ein rotationsasymmetrischer Körper erhalten wird, der in Kombination mit dem geneigten Substrat $78_1$ bzw. $78_2$ aber zu einer rotationssymmetrischen Optik führen kann.

Dahingegen kann die Anpassung bzw. die kanalindividuelle Ausgestaltung gemäß der Fig. 17a so ausgeführt sein, dass die Optiken 22a und 22b voneinander verschieden gebildet sind und entlang verschiedener axialer Positionen entlang der x-Richtung angeordnet sind, um die optischen Strahlengänge der einzelnen Kanäle an den voneinander verschiedenen Abstand zwischen den Optiken, den zugeordneten Facetten und/oder dem jeweils zugeordneten Bildsensorbereich anzupassen.

In anderen Worten können die Substrate, wie in Fig. 17b dargestellt, nicht-senkrecht zu den optischen Achsen angeordnet sein und die Linsen der Optiken so ausgestaltet sein, dass diese einen Keilwinkel aufweisen, so dass die Oberflächen der Linsen rotationssymmetrisch zu den optischen Achsen der Kanäle ausgebildet sind.

Während Fig. 17a einen durchgehenden Bildsensor, eine gemeinsame Array-Optik mit durchgehenden Substraten zeigt, zeigt Fig. 17b eine Kombination aus unterschiedlichen Ausführungsbeispielen.

Ausführungsbeispiele ermöglichen eine minimale Breite des gemeinsamen Austrittsfensters (der Durchlassbereichsanordnung 114) aller Kanäle für eine verbesserte Nutzung der Oberfläche und eine Maximierung der Displayfläche. Dies kann auch mit einer verbesserten Ästhetik einhergehen. Ausführungsbeispiele können in Multiaperturabbildungssystemen mit linearer Kanalcodierung und kleinster Baugröße, insbesondere für Kameras für Smartphones in User-Facing-Direction, das bedeutet Nutzerrichtung, verwendet werden. Gemäß Ausführungsbeispielen ist an der Hauptseite eine Anzeigeeinrichtung bzw. ein Display angeordnet, das die Hauptseite 108A in einem Ausmaß von zumindest 90 %, zumindest 93 % oder zumindest 95 % bedeckt und die Durchlassbereichanordnung zumindest teilweise umschließt. Beispielsweise ist die Durchlassbereichanordnung lediglich an der der Randseite 108E zugewandten Seite nicht von dem Display umschlossen.

Wie es beispielsweise in den Fig. 14a, 14b, 14c, 15c, 17a und 17b gut ersichtlich ist, kann die Multiaperturabbildungsvorrichtung so ausgebildet sein, dass ein Überlapp der entlang der axialen Richtung x das Ende bildenden Facetten 86 über die Durchlassbereichsanordnung 114 gering ist oder nicht erforderlich ist. Ausführungsbeispiele ermöglichen es deshalb, die Strahlumlenkeinrichtung benachbart zu der Randseite 108E anzuordnen und die Durchlassbereichsanordnung ebenfalls, trotz minimaler Größe, benachbart zu der Randseite anzuordnen. Die bezogen auf die Randseite distale Kante 126 kann einen Abstand von der Randseite 108E aufweisen, der von mehreren Eigenschaften der Vorrichtung beeinflusst ist. Hierzu gehören:

- a: auf Seite der Optik der optischen Kanäle eine Größe, etwa ein Durchmesser, einer verwendeten der Aperturblende;
- b: Eine Dicke des Austrittsfensters, siehe bspw. die Abmessung entlang y in den Fig. 13a-b, Fig. 15a-b und Fig. 16a-b;

- c: Ein Gesamtfeldwinkel des Gesamtgesichtsfeldes entlang der längsten Seite des Gehäuses
- d: Die Anzahl der Teilbilder, die entlang dieser längsten Seite des Gehäuses erfasst werden;
- e: ein optionaler Superresolutionsfaktor.

Der Abstand der distalen Kante kann betragen:

$$3a + 4b * \tan\left(\frac{c}{2*d} * e + \left(\frac{d}{e} - 1\right) * 5°\right)$$

oder weniger, was auch ausgedrückt werden kann als die Summe aus dem dreifachem Durchmesser der Aperturblende der Optik und dem Produkt aus vierfacher Fensterdicke multipliziert mit dem Tangens des Winkels beträgt, der dem halben Gesichtsfeldwinkel entlang der längsten Seite des Gehäuses dividiert durch die Anzahl der Teilbilder in Richtung der längsten Seite des Gehäuses multipliziert mit dem Faktor der Superauflösung plus der durch den Faktor der Superauflösung dividierten Anzahl der Teilbilder in Richtung der längsten Seite des Gehäuses minus Eins multipliziert mit 5°.

Wie es in den 12a bis 12c gezeigt ist, kann die proximale Kante 122 nah an die Randseite 108E herangeführt werden, so dass der Abstand einen Wert von höchstens dem Doppelten des Durchmessers der Aperturblende aufweist. Besonders bevorzugt kann es sein, dass die proximale Kante die Randseite überreicht oder überlappt.

In anderen bevorzugten Ausführungsbeispielen weist die proximale Kante 122 einen Abstand von der Randseite 108E auf, der höchstens dem Doppelten des Durchmessers der Aperturblende beträgt.

Obwohl hierin beschriebene Ausführungsbeispiele so ausgeführt werden können, dass die Multiaperturabbildungsvorrichtung ohne eine Duplizierung der Kanäle für eine Stereo-Abbildung ausgeführt werden können, sehen andere Ausführungsbeispiele vor, zumindest eine zweite Multiaperturabbildungsvorrichtung vorzusehen, um das Gesamtgesichtsfeld zumindest stereoskop zu erfassen. Alternativ oder zusätzlich kann eine Multiaperturabbildungsvorrichtung oder eine Kombination zumindest zweier Multiaperturabbildungsvorrichtungen so ausgestaltet sein, dass eine erste Gruppe von optischen Kanälen eingerichtet ist, um ein erstes Teilgesichtsfeld oder das Gesamtgesichtsfeld zu erfassen, während eine zweite Gruppe von optischen Kanälen eingerichtet ist, um ein zweites Teilgesichtsfeld oder das Gesamtgesichtsfeld zu erfassen. Die Vorrichtung kann unter Verwendung einer entsprechenden Steuereinheit ausgebildet sein, um Bildinformationen von Bildsensorbereichen der ersten Gruppe und/oder der zweiten Gruppe zur Auflösungsvergrößerung zusammenzuführen. Anstelle von oder zusätzlich zur Generierung einer Tiefenkarte kann somit eine Auflösungserhöhung im Sinne einer Superresolution erhalten werden.

Die Position der Strahlumlenkeinrichtung kann eine Größe, zumindest entlang einer Richtung, der Multiaperturabbildungsvorrichtung bestimmen, etwa entlang der axialen Richtung x zwischen der Bildsensoranordnung 12 und der Strahlumlenkeinrichtung 18. Die Strahlumlenkeinrichtung kann benachbart zur Randseite angeordnet werden, was es ermöglicht, die Durchlassbereichanordnung ebenfalls benachbart zur Randseite anzuordnen. Dies kann alternativ oder zusätzlich zur kanalindividuellen Implementierung erfolgen, so dass sich Ausführungsbeispiele auf eine Vorrichtung mit einem Gehäuse mit zwei gegenüberliegenden Hauptseiten beziehen, wobei die Hauptseiten über zumindest eine Randseite miteinander verbunden sind.

Die Vorrichtung umfasst bspw. eine in einem Inneren des Gehäuses angeordnete Multiaperturabbildungsvorrichtung mit einer Bildsensoranordnung mit zumindest zwei Bildsensorbereichen, einem Array von nebeneinander angeordneten optischen Kanälen, wobei jeder optische Kanal eine Optik zur Abbildung zumindest eines Teilgesichtsfeldes eines Gesamtgesichtsfeldes auf einen Bildsensorbereich der Bildsensoranordnung umfasst. Die Multiaperturabbildungsvorrichtung umfasst eine Strahlumlenkeinrichtung zum Umlenken eines Strahlengangs der optischen Kanäle, wobei die Strahlumlenkeinrichtung eine Mehrzahl von Facetten aufweist, wobei jedem optischen Kanal eine Facette zugeordnet ist. Die Vorrichtung ist so ausgeführt, dass zumindest eine der Hauptseiten eine Durchlassbereichanordnung mit zumindest einem Durchlassbereich aufweist, wobei die Durchlassbereichanordnung zum Durchlassen der Strahlengänge eingerichtet ist. Eine Position der Strahlumlenkeinrichtung bestimmt zumindest in Teilen eine Größe der Multiaperturabbildungsvorrichtung entlang einer axialen Richtung zwischen der Bildsensoranordnung und der Strahlumlenkeinrichtung. Die Strahlumlenkeinrichtung ist benachbart zur Randseite angeordnet. Die Durchlassbereichanordnung ist in einem Randbereich der Hauptseite benachbart zu der Randseite angeordnet. Diese Ausführung kann ohne Weiteres mit der Größe und/oder Anordnung der Durchlassbereiche, der proximalen und distalen Kante hiervon, kombiniert werden.

Erfindungsgemäße Verfahren zum Bereitstellen einer Vorrichtung umfassen ein Bereitstellen eines Gehäuses mit zwei gegenüberliegenden Hauptseiten, die über zumindest eine Randseite miteinander verbunden sind, so dass eine der Hauptseiten eine Durchlassbereichanordnung mit zumindest einem Durchlassbereich aufweist, wobei die Durchlassbereichanordnung zum Durchlassen der Strahlengänge eingerichtet ist. Das Verfahren umfasst ein Anordnen einer Multiaperturabbildungsvorrichtung in einem Inneren des Gehäuses, wobei die angeordnete Multiaperturabbildungsvorrichtung Folgendes aufweist: eine Bildsensoranordnung, ein Array von nebeneinander angeordneten optischen Kanälen, wobei jeder optische Kanal eine Optik zur Abbildung zumindest eines Teilgesichtsfeldes eines Gesamtgesichtsfeldes auf einen Bildsensorbereich der Bildsensoranordnung umfasst, und eine Strahlumlenkeinrichtung zum Umlenken eines Strahlengangs der optischen Kanäle, wobei die Strahlumlenkeinrichtung eine Mehrzahl von Facetten aufweist, wobei jedem optischen Kanal eine Facette zugeordnet ist. Das Verfahren wird in einer ersten Ausführungsform so ausgeführt, dass die optischen Kanäle bezogen auf die Durchlassbereichanordnung und entlang einer axialen Richtung entlang eines Verlaufs des Strahlengangs der optischen Kanäle zwischen der Bildsensoranordnung und der Strahlumlenkeinrichtung eine kanalindividuelle Relativposition zumindest eines aus dem Bildsensorbereich, der Optik und einer reflektierenden Oberfläche einer dem optischen Kanal zugeordneten Facette aufweisen. Gemäß einer weiteren Ausführungsform kann alternativ oder zusätzlich das Verfahren so ausgeführt werden, dass eine Position der Strahlumlenkeinrichtung eine Größe der Multiaperturabbildungsvorrichtung entlang einer axialen Richtung zwischen der Bildsensoranordnung und der Strahlumlenkeinrichtung bestimmt und die Strahlumlenkeinrichtung benachbart zur Randseite angeordnet ist. Die Durchlassbereichanordnung ist in einem Randbereich der Hauptseite benachbart zu der Randseite angeordnet.

Gemäß Ausführungsbeispielen wird es ermöglicht, dass die Austrittsfenster schmal ausgelegt werden und/oder nahe an Oberflächenrändern einer Gehäuseseite angeordnet sind, so dass das Display großflächig angeordnet werden kann, auf Unterbrechungen desselben verzichtet werden kann und ein hohes Maß der Oberfläche für das Display aufgewendet werden kann. Ausführungsbeispiele sind insbesondere bei der Nutzung der Kameras in Smartphones in User-Facing-Richtung (Benutzerseite, die einer Weltseite gegenüberliegend ist) vorteilhaft, da das oder die Austrittsfenster möglichst schmal und/oder möglichst dicht am Rand des Smartphones angeordnet werden, so dass sich insgesamt eine größtmögliche Displayfläche mit geringstmöglicher Störung, sogenannter Notches, ergibt. Die Fenster können dabei ein, mehrere oder alle Strahlengänge der Multiaperturkameras enthalten, das heißt es gibt ein oder mehrere Fenster.

Die Multiaperturkameras mit linearer Kanalanordnung weisen mehrere optische Kanäle auf, die nebeneinander angeordnet sind, und jeweils Teile des Gesamtgesichtsfeld oder ein Teilgesichtsfeld übertragen. Vorteilhafterweise ist ein Spiegel vor den Abbildungslinsen angebracht, der zur Strahlumlenkung genutzt werden kann und zur Reduzierung der Bauhöhe beiträgt.

Ein Aspekt der vorliegenden Erfindung bezieht sich darauf, dass die Komponenten so ausgelegt werden, dass das oder die Austrittsfenster der Abbildungskanäle so schmal wie möglich ist/sind, insbesondere entlang der Richtung der optischen Achsen im Bereich zwischen Abbildungsoptiken und Strahlumlenkeinrichtung. Weiterhin können die Komponenten auch derart ausgebildet sind, dass der Abstand der der Optiken am nahest angeordneten Kante des/der Fenster/s zum Rand des Smartphones so klein wie möglich wird. Die Auslegung der Fenster kann für alle in den beschriebenen oder abgeleiteten Varianten von Multiaperturkameras nutzbar sein, d.h.: die von den einzelnen Kanälen abgebildeten und sich teilweise überlappenden Teilbildfelder werden möglicherweise aber nicht zwingend zu einem Gesamtgesichtsfeld zusammengesetzt. Applikation als Kamera (im NIR) zur Gesichtserkennung bzw. -identifikation ("face-ID") durch Erzeugung einer Tiefenkarte/Tiefeninformation/Tiefenprofils eines Gesichts (in Verbindung mit einer geeigneten (strukturierten) Beleuchtung). Teilbilder müssen nicht notwendigerweise (tiefenbasiert) zu einem Gesamtgesichtsfeld zusammengesetzt werden sondern können auch einzeln zur Berechnung der jeweiligen (Teil-)Tiefenkarte herangezogen werden, wobei die Gesamt-Tiefenkarte dann eventuell später zusammengesetzt wird. Bei hinreichend festgelegtem, eingeschränktem und bekanntem Arbeitsabstand (e.g. Abstand des Gesichts von dem Smartphone) ist ohnehin kein oder wenig parallax-basiertes Bildzusammenfügen notwendig, sondern die Teilbilder können nur für diesen entsprechenden einen Objektabstand zu einem Gesamtbild zusammengefügt werden.

Es kann mehrere Kanäle oder Module geben, so dass das Gesamtgesichtsfeld mehrfach abgetastet werden kann, so dass sich Stereo-, Tripple-, Quattro- und noch weiterhin wiederholt abgetastete Anordnungen ergeben können.

Die Optiken der Kanäle zu den zuvor genannten Aufbauten können eine höhere Ortsauflösung erzielen, als mit den Pixeln der in den Kanälen genutzten Bildsensoren aufgelöst werden können, so dass sich Aliasing ergibt. Durch die mehrfache Abtastung des Gesamtgesichtsfeld können dadurch Verfahren der Superresolution genutzt und eine verbesserte Ortsauflösung erzielt werden.

Die Gesamtgesichtsfelder einzelner Kanalgruppen können unterschiedlich groß sein und sich vollständig überlappen. Alternativ oder zusätzlich können die eindimensionalen Vektoren der Anordnung der Kanäle sowie der Teilgesichtsfelder senkrecht bzw. parallel angeordnet sein

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1.  Vorrichtung mit:

    einem Gehäuse mit zwei gegenüberliegenden Hauptseiten (108A, 108B), die über zumindest eine Randseite (108C-E) mit einander verbunden sind;
    einer in einem Inneren (126) des Gehäuses (108) angeordneten Multiaperturabbildungsvorrichtung (112) mit:

       einer Bildsensoranordnung (12);
       einem Array (14) von nebeneinander angeordneten optischen Kanälen (16), wobei jeder optische Kanal (16) eine Optik (22) zur Abbildung zumindest eines Teilgesichtsfeldes (24) eines Gesamtgesichtsfeldes (26) auf einen Bildsensorbereich (28) der Bildsensoranordnung (12) umfasst, und
       einer Strahlumlenkeinrichtung (18) zum Umlenken eines Strahlengangs (102) der optischen Kanäle (26), wobei die Strahlumlenkeinrichtung (18) eine Mehrzahl von Facetten (86) aufweist, wobei jedem optischen Kanal (16) eine Facette (86) zugeordnet ist;

    wobei eine der Hauptseiten (108A) eine Durchlassbereichanordnung (114) mit zumindest einem Durchlassbereich ($114_1$) aufweist, wobei die Durchlassbereichanordnung (114) zum Durchlassen der Strahlengänge (102) eingerichtet ist;
    **gekennzeichnet dadurch, dass** die optischen Kanäle (16) bezogen auf die Durchlassbereichanordnung (114) und entlang einer axialen Richtung (x) entlang eines Verlaufs des Strahlengangs (102) der optischen Kanäle (16) zwischen der Bildsensoranordnung (12) und der Strahlumlenkeinrichtung (18) eine kanalindividuelle Relativposition zumindest eines aus:

       dem Bildsensorbereich (28);
       der Optik (22);
       einer reflektierenden Oberfläche einer dem optischen Kanal zugeordneten Facette (86) als von einem anderen optischen Kanal unterschiedlicher Abstand zwischen der reflektierenden Oberfläche der Facette zu der Optik des optischen Kanals;

aufweisen.

**2.** Vorrichtung gemäß Anspruch 1, bei der die kanalindividuelle Relativposition eine verglichen mit einer kanalglobalen Relativposition eine Überlappvergrößerung von Projektionen von Strahlenbündeln (138) der Strahlengänge (102) in einem Bereich der Durchlassbereichanordnung (114) bewirkt und eine Größe der Durchlassbereichanordnung (114) an die Überlappvergrößerung angepasst ist, wobei die Projektionen entlang einer Zeilenerstreckungsrichtung (z) des Arrays projiziert werden.

**3.** Vorrichtung gemäß Anspruch 1 oder 2, bei der die kanalindividuelle Relativposition zumindest eines aus

einem Abstand (128) zwischen der Optik (22) und der reflektierenden Oberfläche der zugeordneten Facette (86);
einem Neigungswinkel ($\phi$) des Strahlengangs (102) in dem Bereich zwischen dem Bildsensor (12) und der Strahlumlenkeinrichtung (18) bezogen auf eine Ebene parallel zu der Hauptseite (108A);
einem Abstand (88) zwischen dem Bildsensorbereich (28) und der Optik (22);
einer axialen Position des Bildsensorbereichs (28), der Optik (22) und der zugeordneten Facette (86) entlang einer Richtung (x) des Strahlengangs (102) in einem Bereich zwischen dem Bildsensor (12) und der Strahlumlenkeinrichtung (18); und
einer axialen Position der Facette (86) entlang der Richtung (x) des Strahlengangs (102) in einem Bereich zwischen dem Bildsensor (12) und der Strahlumlenkeinrichtung (18); umfasst.

**4.** Vorrichtung gemäß einem der vorangehenden Ansprüche, bei der das Array (14) von optischen Kanälen (16) ein für zumindest zwei optische Kanäle (16) wirksames gemeinsames Substrat (78) aufweist, das zumindest einen Teil der Optiken (22) des jeweiligen optischen Kanals (16) trägt, und wobei eine erste Facette (86a) eines ersten optischen Kanals (16a) eine erste axiale Position entlang der axialen Richtung (x) aufweist; und wobei eine zweite Facette (86b) eines zweiten optischen Kanals (16b) eine zweite, von der ersten axialen Position verschiedene zweite axiale Position entlang der axialen Richtung (x) aufweist;

wobei das Substrat (78) senkrecht zu der axialen Richtung (x) angeordnet ist und die Optiken (22) des ersten und des zweiten optischen Kanals (16a-b) voneinander verschieden gebildet sind und entlang verschiedener axialer Positionen angeordnet sein können, um die optischen Strahlengänge der einzelnen Kanäle (16a-b) an den voneinander verschiedenen Abstand (88, 128) zwischen den Optiken (22), den zugeordneten Facetten (86) und/oder dem jeweils zugeordneten Bildsensorbereich (28) anzupassen; und/oder
wobei das Substrat (78) gegenüber einer Anordnung senkrecht zu der axialen Richtung (x) verkippt ist, um die optischen Strahlengänge (102) der einzelnen Kanäle (16) an den voneinander verschiedenen Abstand (88, 128) der unterschiedlicher Kanäle (16a-b) zwischen den Optiken (22), den zugeordneten Facetten (86) und/oder dem jeweils zugeordneten Bildsensorbereich (28) anzupassen.

**5.** Vorrichtung gemäß einem der vorangehenden Ansprüche, bei der die Strahlumlenkeinrichtung (18) benachbart zu der Randseite (108E) angeordnet ist und die Durchlassbereichanordnung (114) in einem Randbereich der Hauptseite (108A) benachbart zu der Randseite (108E) angeordnet ist, wobei der zumindest eine Durchlassbereich ($114_1$) eine bezogen auf die Randseite (108E) eine proximale Kante (122) und eine distale Kante (126) aufweist, wobei die distale Kante (126) einen Abstand (124) von der Randseite (108E) aufweist, der höchstens der Summe aus dem dreifachem Durchmesser der Aperturblende der Optik und dem Produkt aus vierfacher Fensterdicke multipliziert mit dem Tangens des Winkels beträgt, der dem halben Gesichtsfeldwinkel entlang der längsten Seite des Gehäuses dividiert durch die Anzahl der Teilbilder in Richtung der längsten Seite des Gehäuses multipliziert mit dem Faktor der Superauflösung plus der durch den Faktor der Superauflösung dividierten Anzahl der Teilbilder in Richtung der längsten Seite des Gehäuses minus Eins multipliziert mit 5° entspricht.

**6.** Vorrichtung gemäß einem der vorangehenden Ansprüche, bei der die Strahlumlenkeinrichtung (18) benachbart zu der Randseite (108E) angeordnet ist und die Durchlassbereichanordnung (114) in einem Randbereich der Hauptseite (108A) benachbart zu der Randseite (108E) angeordnet ist, wobei der zumindest eine Durchlassbereich ($114_1$) eine bezogen auf die Randseite (108E) eine proximale Kante (122) und eine distale Kante (126) aufweist, wobei die proximale Kante (122) einen Abstand (118) von der Randseite (108E) aufweist, der höchstens dem Doppelten des Durchmessers der Aperturblende der Optiken beträgt.

**7.** Vorrichtung gemäß einem der vorangehenden Ansprüche ferner mit:

einer Fokussiereinrichtung (32) zum Einstellen einer Fokuslage der Multiaperturabbildungsvorrichtung; und

einer Steuereinrichtung (34; 54), die ausgebildet ist, um die Fokussiereinrichtung (32) zu steuern und um Bildinformationen (36) von der Bildsensoranordnung (12) zu empfangen; wobei die Steuereinrichtung (34; 54) konfiguriert ist, um die Multiaperturabbildungsvorrichtung in eine Abfolge von Fokuslagen (56) zu steuern, um eine korrespondierende Abfolge von Bildinformationen (36) des Gesamtgesichtsfeldes (26) zu erfassen, und um aus der Abfolge von Bildinformationen (36) eine Tiefenkarte (38) für das erfasste Gesamtgesichtsfeld (26) zu erstellen.

8. Vorrichtung gemäß einem der vorangehenden Ansprüche, ferner mit einer Beleuchtungsquelle, die ausgebildet ist, um ein Beleuchtungssignal in einem für das menschliche Auge nicht sichtbaren Wellenlängenbereich, bevorzugt einem Infrarotbereich und besonders bevorzugt einem Nah-Infrarotbereich, in Richtung des Gesamtgesichtsfeldes (26) auszusenden, wobei die Multiaperturabbildungsvorrichtung ausgebildet ist, um das Gesamtgesichtsfeld (26) in dem nicht sichtbaren Wellenlängenbereich abzubilden.

9. Vorrichtung gemäß einem der vorangehenden Ansprüche, bei der das Gesamtgesichtsfeld (26) ein erstes Gesamtgesichtsfeld ($26_1$) ist, bei der die Durchlassbereichanordnung ($114_1$) eine erste Durchlassbereichanordnung ist und in einer ersten Hauptseite (108A) angeordnet ist; wobei die Vorrichtung eine zweite Durchlassbereichanordnung ($114_2$) in einer zweiten Hauptseite (108B) aufweist; wobei eine relative Lage der Strahlumlenkeinrichtung (18) zwischen einer ersten Stellung und einer zweiten Stellung umschaltbar ist, so dass in der ersten Stellung der Strahlengang (102) in Richtung des ersten Gesamtgesichtsfeldes ($26_1$) umgelenkt wird und in der zweiten Stellung der Strahlengang (102) in Richtung eines zweiten Gesamtgesichtsfeldes ($26_2$) durch die zweite Durchlassbereichanordnung ($114_2$) umgelenkt wird.

10. Vorrichtung gemäß einem der vorangehenden Ansprüche, bei der ein erster optischer Kanal (16a) des Arrays ausgebildet ist, um ein erstes Teilgesichtsfeld (24a) des Gesamtgesichtsfeldes (26) abzubilden, wobei ein zweiter optischer Kanal (16b) des Arrays ausgebildet ist, um ein zweites Teilgesichtsfeld (24b) des Gesamtgesichtsfeldes (26) abzubilden, und wobei ein dritter optischer Kanal (16c) ausgebildet ist, um das Gesamtgesichtsfeld (26) vollständig abzubilden.

11. Vorrichtung gemäß einem der vorangehenden Ansprüche, bei der Teilgesichtsfelder (24) des Gesamtgesichtsfeldes (26) in einer Richtung senkrecht oder parallel zu einer Zeilenerstreckungsrichtung (z) des Arrays angeordnet sind, entlang welcher die optischen Kanäle (16) nebeneinander in einer Zeile angeordnet sind.

12. Vorrichtung gemäß einem der vorangehenden Ansprüche, bei der die Multiaperturabbildungsvorrichtung eine erste Multiaperturabbildungsvorrichtung ist, und die Vorrichtung ferner zumindest eine zweite Multiaperturabbildungsvorrichtung aufweist und eingerichtet ist, um das Gesamtgesichtsfeld zumindest stereoskopisch zu erfassen

13. Vorrichtung gemäß einem der vorangehenden Ansprüche, bei der eine erste Gruppe von optischen Kanälen (16) eingerichtet ist, um ein erstes Teilgesichtsfeld (24a) oder das Gesamtgesichtsfeld (26) zu erfassen, und eine zweite Gruppe von optischen Kanälen (16) eingerichtet ist, um ein zweites Teilgesichtsfeld (24b) oder das Gesamtgesichtsfeld (26) zu erfassen, wobei die Vorrichtung eine Steuereinrichtung (34) aufweist, die ausgebildet ist, um Bildinformationen von Bildsensorbereichen der ersten Gruppe und/oder der zweiten Gruppe zur Auflösungsvergrößerung zusammenzuführen.

14. Vorrichtung gemäß einem der vorangehenden Ansprüche, wobei eine Position der Strahlumlenkeinrichtung (18) eine Größe der Multiaperturabbildungsvorrichtung entlang der axialen Richtung (x) zwischen der Bildsensoranordnung (12) und der Strahlumlenkeinrichtung (18) bestimmt und die Strahlumlenkeinrichtung (18) benachbart zur Randseite (108E) angeordnet ist.

15. Verfahren zum Bereitstellen einer Vorrichtung mit folgenden Schritten:

Bereitstellen eines Gehäuses (108) mit zwei gegenüberliegenden Hauptseiten (108A, 108B), die über zumindest eine Randseite (108C-F) miteinander verbunden sind, so dass eine der Hauptseiten eine Durchlassbereichanordnung (114) mit zumindest einem Durchlassbereich ($114_1$) aufweist, wobei die Durchlassbereichanordnung zum Durchlassen der Strahlengänge (102) eingerichtet ist;

Anordnen einer Multiaperturabbildungsvorrichtung (112) in einem Inneren (126) des Gehäuses (108), wobei die angeordneten Multiaperturabbildungsvorrichtung folgendes aufweist:

eine Bildsensoranordnung (12);
ein Array (14) von nebeneinander angeordneten optischen Kanälen (16), wobei jeder optische Kanal (16) eine Optik (22) zur Abbildung zumindest eines Teilgesichtsfeldes (24) eines Gesamtgesichtsfeldes (26) auf einen Bildsensorbereich (28) der Bildsensoranordnung (12) umfasst,

eine Strahlumlenkeinrichtung (18) zum Umlenken eines Strahlengangs (102) der optischen Kanäle, wobei die Strahlumlenkeinrichtung eine Mehrzahl von Facetten (86) aufweist, wobei jedem optischen Kanal (16) eine Facette (86) zugeordnet ist;

so dass die optischen Kanäle (16) bezogen auf die Durchlassbereichanordnung (114) und entlang einer axialen Richtung (x) entlang eines Verlaufs des Strahlengangs (102) der optischen Kanäle (16) zwischen der Bildsensoranordnung (12) und der Strahlumlenkeinrichtung (18) eine kanalindividuelle Relativposition zumindest eines aus:

dem Bildsensorbereich (12);
der Optik (22);
einer reflektierenden Oberfläche einer dem optischen Kanal zugeordneten Facette (86) als von einem anderen optischen Kanal unterschiedlichen Abstand zwischen der reflektierenden Oberfläche der Facette zu der Optik des optischen Kanals;

aufweisen.

## Claims

1. A device comprising:

a housing having two oppositely located main sides (108A, 108B) which are connected to each other via at least one edge side (108C-E);
a multi-aperture imaging device (112) arranged in an interior (126) of the housing (108) and comprising:

an image sensor arrangement (12);
an array (14) of adjacently arranged optical channels (16), each optical channel (16) including optics (22) for projecting at least one partial field of view (24) of a total field of view (26) onto an image sensor area (28) of the image sensor arrangement (12), and
beam deflection means (18) for deflecting an optical path (102) of the optical channels (26), the beam deflection means (18) comprising a plurality of facets (86), each optical channel (16) having a facet (86) associated with it;

wherein one of the main sides (108A) comprises a passage area arrangement (114) with at least one passage area (114₁), the passage area arrangement (114) being set up to allow the optical paths (102) to pass;
**characterized in that** the optical channels (16) comprise, in relation to the passage area arrangement (114) and along an axial direction (x), along a course of the optical path (102) of the optical channels (16) between the image sensor arrangement (12) and the beam deflection means (18), a channel-specific relative position of at least one of:

the image sensor area (28);
the optics (22);
a reflecting surface of a facet (86) associated with the optical channel as a distance between the reflecting surface of the facet and the optics of the optical channel, differing from another optical channel.

2. The device as claimed in claim 1, wherein the channel-specific relative position causes, as compared to a relative position that is global to all the channels, an increase in the overlap of projections of beams of rays (138) of the optical paths (102) within an area of the passage area arrangement (114), and a size of the passage area arrangement (114) is adapted to the increase in overlap, the projections being projected along a line extension direction (z) of the array.

3. The device as claimed in claim 1 or 2, wherein the channel-specific relative position includes at least one of the following:

a distance (128) between the optics (22) and the reflecting surface of the associated facet (86);
an inclination angle (φ) of the optical path (102) in the area located between the image sensor (12) and the beam deflection means (18) in relation to a plane parallel to the main side (108A);
a distance (88) between the image sensor area (28) and the optics (22);
an axial position of the image sensor area (28), of the optics (22) and of the associated facet (86) along a direction (x) of the optical path (102) within an area located between the image sensor (12) and the beam deflection means (18); and
an axial position of the facet (86) along the direction (x) of the optical path (102) within an area located between the image sensor (12) and the beam deflection means (18).

4. The device as claimed in any of the previous claims, wherein the array (14) of optical channels (16) comprises a shared substrate (78) that is effective for at least two optical channels (16), that supports at least part of the optics (22) of the respective optical channel (16), and wherein a first facet (86a) of a first optical channel (16a) comprises a first axial position along the axial direction (x); and wherein a second facet (86b) of a second optical channel (16b) comprises a second axial position, which differs from the first axial position, along the axial direction (x);

wherein the substrate (78) is arranged perpendicularly to the axial direction (x) and the optics (22) of the first and second optical channels (16a-b) are formed to differ from one another and may be arranged along different axial positions so as to adapt the optical paths of the individual channels (16a-b) to the mutually different distances (88, 128) between the optics (22), the associated facets (86) and/or the respectively associated image sensor area (28); and/or wherein the substrate (78) is tilted, in relation to an arrangement, perpendicularly to the axial direction (x) so as to adapt the optical paths (102) of the individual channels (16) to the mutually different distances (88, 128) of the different channels (16a-b) located between the optics (22), the associated facets (86) and/or the respectively associated image sensor area (28).

5. The device as claimed in any of the previous claims, wherein the beam deflection means (18) is arranged adjacently to the edge side (108E), and the passage area arrangement (114) is arranged within an edge area of the main side (108A) adjacently to the edge side (108E), wherein the at least one passage area ($114_1$) comprises, in relation to the edge side (108E), a proximal edge (122) and a distal edge (126), wherein the distal edge (126) comprises a distance (124) from the edge side (108E) which corresponds, at the most, to the sum of three times the diameter of the aperture diaphragm of the optics and the product of four times the window thickness, multiplied by the tangent of the angle, which corresponds to half the visual field angle along the longest side of the housing, divided by the number of partial images in the direction of the longest side of the housing, multiplied by the factor of the super resolution plus the number of images which is divided by the factor of the super resolution, in the direction of the longest side of the housing, minus one, multiplied by 5°.

6. The device as claimed in any of the previous claims, wherein the beam deflection means (18) is arranged adjacently to the edge side (108E), and the passage area arrangement (114) is arranged within an edge area of the main side (108A) adjacently to the edge side (108E), wherein the at least one passage area ($114_1$) comprises, in relation to the edge side (108E), a proximal edge (122) and a distal edge (126), wherein the proximal edge (122) exhibits a distance (118) from the edge side (108E) which corresponds, at the most, to double the diameter of the aperture diaphragm of the optics.

7. The device as claimed in any of the previous claims, further comprising:

focusing means (32) for setting a focal position of the multi-aperture imaging device; and control means (34; 54) configured to control the focusing means (32) and to receive image information (36) from the image sensor arrangement (12); the control means (34; 54) being configured to control the multi-aperture imaging device into a sequence of focal positions (56) so as to capture a corresponding sequence of image information (36) of the total field of view (26) and to produce, from the sequence of image information (36), a depth map (38) for the captured total field of view (26).

8. The device as claimed in any of the previous claims, further comprising an illumination source configured to send out an illumination signal within a wavelength range that is not visible to the human eye, preferably an infrared range, and particularly preferably a near-infrared range, in the direction of the total field of view (26), the multi-aperture imaging device being configured to image the total field of view (26) within the non-visible wavelength range.

9. The device as claimed in any of the previous claims, wherein the total field of view (26) is a first total field of view ($26_1$), wherein the passage area arrangement ($114_1$) is a first passage area arrangement and is arranged in a first main side (108A); the device comprising a second passage area arrangement ($114_2$) in a second main side (108B); wherein a relative location of the beam deflection means (18) is switchable between a first position and a second position, so that in the first position, the optical path (102) is deflected toward the first total field of view ($26_1$), and in the second position, the optical path (102) is deflected toward a second total field of view ($26_2$) through the second passage area arrangement ($114_2$).

10. The device as claimed in any of the previous claims, wherein a first optical channel (16a) of the array is configured to image a first partial field of view (24a) of the total field of view (26), wherein a second optical channel (16b) of the array is configured to image a second partial field of view (24b) of the total field of view (26), and wherein a third optical channel (16c) is configured to fully image the total field of view (26).

11. The device as claimed in any of the previous claims, wherein the partial fields of view (24) of the total field of view (26) are arranged in a direction perpendicular or parallel to a line extension direction (z) of the array, along which the optical channels (16) are adjacently arranged in one line.

12. The device as claimed in any of the previous claims, wherein the multi-aperture imaging device is a first multi-aperture imaging device, and the device further comprises at least one second multi-aperture imaging device and is set up to capture the total field of view at least stereoscopically.

13. The device as claimed in any of the previous claims, wherein a first group of optical channels (16) is set up for capturing a first partial field of view (24a) or the total field of view (26), and a second group of optical channels (16) is set up for capturing a second partial field of view (24b) or the total field of view (26), the device comprising control means (34) configured to join image information of image sensor areas of the first group and/or of the second group for increasing the resolution.

14. The device as claimed in any of the previous claims, wherein a position of the beam deflection means (18) determines a size of the multi-aperture imaging device along the axial direction (x) between the image sensor arrangement (12) and the beam deflection means (18), and the beam deflection means (18) is arranged adjacently to the edge side (108E).

15. A method of providing a device, comprising:

    providing a housing (108) comprising two oppositely located main sides (108A, 108B) which are connected to each other via at least one edge side (108C-F), so that one of the main sides comprises a passage area arrangement (114) having at least one passage area (114$_1$), the passage area arrangement being set up for allowing the optical paths (102) to pass; arranging a multi-aperture imaging device (112) in an interior (126) of the housing (108), said arranged multi-aperture imaging device comprising:

        an image sensor arrangement (12); an array (14) of adjacently arranged optical channels (16), each optical channel (16) including optics (22) for projecting at least one partial field of view (24) of a total field of view (26) onto an image sensor area (28) of the image sensor arrangement (12), beam deflection means (18) for deflecting an optical path (102) of the optical channels, the beam deflection means comprising a plurality of facets (86), each optical channel (16) having a facet (86) associated with it;

so that the optical channels (16) comprise, in relation to the passage area arrangement (114) and along an axial direction (x), along a course of the optical path (102) of the optical channels (16) between the image sensor arrangement (12) and the beam deflection means (18), a channel-specific relative position of at least one of:

        the image sensor area (28); the optics (22); a reflecting surface of a facet (86) associated with the optical channel as a distance between the reflecting surface of the facet and the optics of the optical channel, differing from another optical channel,

**Revendications**

1. Dispositif avec:

    un boîtier avec deux côtés principaux opposés (108A, 108B) qui sont connectés l'un à l'autre par l'intermédiaire d'au moins un côté de bord (108C-E); un dispositif de reproduction à ouvertures multiples (112) disposé à l'intérieur (126) du boîtier (108), avec:

        un aménagement de capteur d'image (12); un réseau (14) de canaux optiques (16) disposés l'un à côté de l'autre, dans lequel chaque canal optique (16) comporte une optique (22) destinée à reproduire au moins un champ de vision partiel (24) d'un champ de vision global (26) sur une zone de capteur d'image (28) de l'aménagement de capteur d'image (12), et un moyen de déviation de faisceau (18) destiné à dévier un trajet de faisceau (102) des canaux optiques (26), où le moyen de déviation de faisceau (18) présente une pluralité de facettes (86), où à chaque canal optique (16) est associée une facette (86);

    dans lequel l'un des côtés principaux (108A) présente un aménagement de zones de passage (114) avec au moins une zone de passage (114$_1$), dans lequel l'aménagement de zones de passage (114) est aménagé pour laisser passer les trajets de faisceau (102); **caractérisé par le fait que** les canaux optiques (16) présentent, par rapport à l'aménagement de zones de passage (114) et le long d'une direction axiale (x) le long d'un parcours du trajet de faisceau (102) des canaux optiques (16) entre l'aménagement de capteur d'image (12) et le moyen de déviation de faisceau (18), une position relative individuelle par canal d'au moins l'une parmi:

la zone de capteur d'image (28);
l'optique (22);
une surface réfléchissante d'une facette (86) associée au canal optique comme une distance entre la surface réfléchissante de la facette et l'optique du canal optique qui est différente d'un autre canal optique.

2. Dispositif selon la revendication 1, dans lequel la position relative individuelle par canal provoque, en comparaison avec une position relative globale par canal, une augmentation du chevauchement de projections de faisceaux (138) des trajets de faisceau (102) dans une zone de l'aménagement de zones de passage (114), et une grandeur de l'aménagement de zones de passage (114) est adaptée à l'augmentation du chevauchement, dans lequel les projections sont projetées le long d'une direction d'extension de rangées (z) du réseau.

3. Dispositif selon la revendication 1 ou 2, dans lequel la position relative individuelle par canal comporte au moins l'un parmi

une distance (128) entre l'optique (22) et la surface réfléchissante de la facette associée (86);
un angle d'inclinaison ($\phi$) du trajet du faisceau (102) dans la zone située entre le capteur d'image (12) et le moyen de déviation de faisceau (18) par rapport à un plan parallèle au côté principal (108A);
une distance (88) entre la zone de capteur d'image (28) et l'optique (22);
une position axiale de la zone de capteur d'image (28), de l'optique (22) et de la facette associée (86) le long d'une direction (x) du trajet de faisceau (102) dans une zone entre le capteur d'image (12) et le moyen de déviation de faisceau (18); et
une position axiale de la facette (86) le long de la direction (x) du trajet du faisceau (102) dans une zone entre le capteur d'image (12) et le moyen de déviation de faisceau (18).

4. Dispositif selon l'une des revendications précédentes, dans lequel le réseau (14) de canaux optiques (16) présente un substrat commun (78) efficace pour au moins deux canaux optiques (16) qui porte au moins une partie des optiques (22) du canal optique respectif (16), et dans lequel une première facette (86a) d'un premier canal optique (16a) présente une première position axiale le long de la direction axiale (x); et dans lequel une deuxième facette (86b) d'un deuxième canal optique (16b) présente une deuxième position axiale, différente de la première position axiale, le long de la direction axiale (x);

dans lequel le substrat (78) est disposé de manière perpendiculaire à la direction axiale (x) et les optiques (22) des premier et deuxième canaux optiques (16a-b) sont formées différentes l'une de l'autre et peuvent être disposées le long de différentes positions axiales pour adapter les trajets de faisceau optique des canaux individuels (16a-b) à la distance (88, 128) différente entre les optiques (22), les facettes (86) associées et/ou la zone de capteur d'image (28) associée respective; et/ou
dans lequel le substrat (78) est incliné par rapport à un aménagement de manière perpendiculaire à la direction axiale (x) pour adapter les trajets de faisceau optique (102) des canaux (16) individuels à la distance (88, 128) différente l'une de l'autre des canaux (16a-b) différents entre les optiques (22), les facettes (86) associées et/ou la zone de capteur d'image (28) associée respective.

5. Dispositif selon l'une des revendications précédentes, dans lequel le moyen de déviation de faisceau (18) est disposé de manière contigüe au côté de bord (108E) et l'aménagement de zones de passage (114) est disposé dans une zone de bord du côté principal (108A) de manière contigüe au côté de bord (108E), dans lequel l'au moins une zone de passage (114$_1$) présente, par rapport au côté de bord (108E), un bord proximal (122) et un bord distal (126), dans lequel le bord distal (126) présente une distance (124) par rapport au côté de bord (108E) qui est de tout au plus la somme de trois fois le diamètre du diaphragme d'ouverture de l'optique et du produit de quatre fois l'épaisseur de fenêtre multipliée par la tangente de l'angle qui correspond à la moitié de l'angle de champ de vision le long du côté le plus long du boîtier divisé par le nombre d'images partielles en direction du côté le plus long du boîtier multiplié par le facteur de super-résolution plus le nombre d'images partielles divisé par le facteur de super-résolution en direction du côté le plus long du boîtier moins un multiplié par 5°.

6. Dispositif selon l'une des revendications précédentes, dans lequel le moyen de déviation de faisceau (18) est disposé de manière contigüe au côté de bord (108E) et le dispositif de zone de passage (114) est disposé dans une zone de bord du côté principal (108A) de manière contigüe au côté de bord (108E), dans lequel l'au moins une zone de passage (114$_1$) présente, par rapport au côté de bord (108E), un bord proximal (122) et un bord distal (126), dans lequel le bord proximal (122) présente une distance (118) par rapport au côté de bord (108E) qui est de tout au plus deux fois le diamètre du diaphragme d'ouverture de l'optique.

7. Dispositif selon l'une des revendications précédentes, par ailleurs avec:

   un moyen de focalisation (32) destiné à régler une position de focalisation du dispositif de reproduction à ouvertures multiples; et
   un moyen de commande (34; 54) qui est conçu pour commander le moyen de focalisation (32) et pour recevoir des informations d'image (36) de l'aménagement de capteur d'image (12); dans lequel le moyen de commande (34 ; 54) est configuré pour commander le dispositif de reproduction à ouvertures multiples dans une séquence de positions de focalisation (56) pour capturer une séquence correspondante d'informations d'image (36) du champ de vision global (26), et pour établir, à partir de la séquence d'informations d'image (36), une carte de profondeur (38) pour le champ de vision global capturé (26).

8. Dispositif selon l'une des revendications précédentes, par ailleurs avec une source d'éclairage qui est conçue pour émettre un signal d'éclairage dans une plage de longueurs d'onde non visible pour l'oeil humain, de préférence une plage infrarouge et de manière particulièrement préférée une plage proche infrarouge, en direction du champ de vision global (26), dans lequel le dispositif de reproduction à ouvertures multiples est conçu pour reproduire le champ de vision global (26) dans la plage de longueurs d'onde non visible.

9. Dispositif selon l'une des revendications précédentes, dans lequel le champ de vision global (26) est un premier champ de vision global (26i), dans lequel l'aménagement de zones de passage (114$_1$) est un premier aménagement de zones de passage et est disposé dans un premier côté principal (108A); dans lequel le dispositif présente un deuxième aménagement de zones de passage (114$_2$) dans un deuxième côté principal (108B); dans lequel une position relative du moyen de déviation de faisceau (18) peut être commutée entre une première position et une deuxième position, de sorte que, dans la première position, le trajet de faisceau (102) soit dévié en direction du premier champ de vision global (26i) et que, dans la deuxième position, le trajet de faisceau (102) soit dévié en direction d'un deuxième champ de vision global (26$_2$) par le deuxième aménagement de zones de passage (114a).

10. Dispositif selon l'une des revendications précédentes, dans lequel un premier canal optique (16a) du réseau est conçu pour reproduire un premier champ de vision partiel (24a) du champ de vision global (26), dans lequel un deuxième canal optique (16b) du réseau est conçu pour reproduire un deuxième champ de vision partiel (24b) du champ de vision global (26), et dans lequel un troisième canal optique (16c) est conçu pour reproduire entièrement le champ de vision global (26).

11. Dispositif selon l'une des revendications précédentes, dans lequel les champs de vision partiels (24) du champ de vision global (26) sont disposés dans une direction perpendiculaire ou parallèle à une direction d'extension de rangées (z) du réseau, le long de laquelle les canaux optiques (16) sont disposés l'un à côté de l'autre dans une rangée.

12. Dispositif selon l'une des revendications précédentes, dans lequel le dispositif de reproduction à ouvertures multiples est un premier dispositif de reproduction à ouvertures multiples, et le dispositif présente par ailleurs au moins un deuxième dispositif de reproduction à ouvertures multiples et est aménagé pour capturer le champ de vision global au moins de manière stéréoscopique.

13. Dispositif selon l'une des revendications précédentes, dans lequel un premier groupe de canaux optiques (16) est aménagé pour capturer un premier champ de vision partiel (24a) ou le champ de vision global (26), et un deuxième groupe de canaux optiques (16) est aménagé pour capturer un deuxième champ de vision partiel (24b) ou le champ de vision global (26), dans lequel le dispositif présente un moyen de commande (34) qui est conçu pour regrouper les informations d'image de zones de capteur d'image du premier groupe et/ou du deuxième groupe pour augmenter la résolution.

14. Dispositif selon l'une des revendications précédentes, dans lequel une position du moyen de déviation de faisceau (18) détermine une grandeur du dispositif de reproduction à ouvertures multiples le long de la direction axiale (x) entre l'aménagement de capteur d'image (12) et le moyen de déviation de faisceau (18) et le moyen de déviation de faisceau (18) est disposé de manière contiguë au côté de bord (108E).

15. Procédé pour fournir un dispositif, aux étapes suivantes consistant à:

   prévoir un boîtier (108) avec deux côtés principaux opposés (108A, 108B) qui sont connectés l'un à l'autre par l'intermédiaire d'au moins un côté de bord (108C-F), de sorte que l'un des côtés principaux présente un aménagement de zones de passage (114) avec au moins une zone de passage (114i), dans lequel l'aménagement de zones de passage est aménagé pour laisser passer les trajets de faisceau (102);

disposer un dispositif de reproduction à ouvertures multiples (112) à l'intérieur (126) du boîtier (108), où le dispositif de reproduction à ouvertures multiples disposé présente ce qui suit:

un aménagement de capteur d'image (12);
un réseau (14) de canaux optiques (16) disposés l'un à côté de l'autre, dans lequel chaque canal optique (16) comporte une optique (22) destinée à reproduire au moins un champ de vision partiel (24) d'un champ de vision global (26) sur une zone de capteur d'image (28) de l'aménagement de capteur d'image (12),

un moyen de déviation de faisceau (18) destiné à dévier un trajet de faisceau (102) des canaux optiques (26), où le moyen de déviation de faisceau (18) présente une pluralité de facettes (86), où à chaque canal optique (16) est associée une facette (86);

de sorte que les canaux optiques (16) présentent, par rapport à l'aménagement de zones de passage (114) et le long d'une direction axiale (x) le long d'un parcours du trajet de faisceau (102) des canaux optiques (16) entre l'aménagement de capteur d'image (12) et le moyen de déviation de faisceau (18), une position relative individuelle par canal d'au moins l'une parmi:

la zone de capteur d'image (12);
l'optique (22);
une surface réfléchissante d'une facette (86) associée au canal optique comme une distance entre la surface réfléchissante de la facette et l'optique du canal optique qui est différente d'un autre canal optique.

Fig. 1a

Fig. 1b

Fig. 1c

EP 3 948 389 B1

Fig. 2a

Fig. 2b

Fig. 3a

Fig. 3b

EP 3 948 389 B1

Fig. 3c

EP 3 948 389 B1

Fig. 4a

Fig. 4b

Fig. 5a

Fig. 5b

Fig. 5c

Fig. 6

Fig. 7a

Fig. 7b

Fig. 8

Fig. 9a

Fig. 9b

Fig. 9c

172

174a

174c

174d

186

174b

Fig. 9d

172a

186a = 186b

172b

Fig. 9e

Fig. 9f

Fig. 10

EP 3 948 389 B1

Fig. 11b

Fig. 11a

Fig. 11c

100

108E

116 = 124

108A

108

114₁

**Fig. 12b**

100

108E

116 = 124

114₂

114₁

108A

108

**Fig. 12a**

Fig. 12c

_100_

Fig. 13a

Fig. 13b

Fig. 14a

Fig. 14b

Fig. 14c

100

132₁

124

114₁

102a

28a

88

22a

128

16a

86a

y
z₁ x

## Fig. 15a

100

132₂

124

114₁

102b

28b

88

22b

128

16b

86b

y
z₂ x

Fig 15b

Fig. 15c

Fig. 16a

Fig. 16b

Fig. 17a

EP 3 948 389 B1

Fig. 17b

EP 3 948 389 B1

**IN DER BESCHREIBUNG AUFGEFÜHRTE DOKUMENTE**

**In der Beschreibung aufgeführte Patentdokumente**

- WO 102017206429 A1